# EUROPÄISCHE PATENTSCHRIFT

(11) **EP 3 863 910 B1**
(45) Veröffentlichungstag und Bekanntmachung des Hinweises auf die Patenterteilung: **28.09.2022**
(21) Anmeldenummer: 19783076.3
(22) Anmeldetag: 11.10.2019
(51) Int. Cl.: B62D 21/15, B62D 25/02, B62D 29/04, B60R 21/02, B60P 3/32

(54) **SICHERHEITSKABINE FÜR EIN WOHN- BZW. REISEMOBIL MIT DEFORMATIONSELEMENTEN UND HERSTELLUNGSVERFAHREN FÜR EINE SOLCHE SICHERHEITSKABINE**
SAFETY CABIN FOR A RECREATIONAL OR CAMPER VAN WITH DEFORMATION ELEMENTS, AND MANUFACTURING METHOD FOR SUCH A SAFETY CABIN
CABINE DE SÉCURITÉ POUR UN CAMPING-CAR OU UNE CARAVANE AUTOMOBILE POURVUE D'ÉLÉMENTS DE DÉFORMATION, ET MÉTHODE DE FABRICATION D'UNE TELLE CABINE DE SÉCURITÉ

(30) Priorität: 11.10.2018 EP 18199903; 24.10.2018 US 201862749847 P; 01.02.2019 DE 102019102543; 21.08.2019 DE 102019122440
(43) Veröffentlichungstag der Anmeldung: 18.08.2021
(73) Patentinhaber: ELDA Entwicklungsgesellschaft mbH, 22529 Hamburg (DE)
(72) Erfinder: RÖDIGER, Andreas, 22529 Hamburg (DE)
(74) Vertreter: Hertin und Partner Rechts- und Patentanwälte PartG mbB
(86) Internationale Anmeldenummer: PCT/EP2019/077607
(87) Internationale Veröffentlichungsnummer: WO 2020/074710

(56) Entgegenhaltungen:
- EP-A1- 3 118 087
- EP-A2- 1 336 470
- WO-A1-2016/183079
- DE-A1- 2 047 190
- DE-A1-102015 224 689
- DE-U1-202016 103 524
- US-B1- 8 474 871

## Beschreibung

Die Erfindung betrifft eine Sicherheitskabine für ein Wohn- bzw. Reisemobil umfassend einen hinter dem Fahrerhaus anordenbaren Teil der Sicherheitskabine, wobei Wände der Sicherheitskabine mindestens eine Lage eines faserverstärkten Kunststoffgewebes und/oder - geleges umfassen. Eine Lage weist dabei entlang einer Querrichtung aufeinanderfolgende Schichten auf. Direkt aufeinanderfolgende Schichten weisen dabei unterschiedliche Faserorientierungen auf. Die Lage in den seitlichen Außenwänden in einem in Bezug auf eine vorgesehene Hauptfahrtrichtung vorderen Bereich der Kabine umfasst bevorzugt mindestens drei bis neun Schichten. In einem in Bezug auf eine vorgesehene Hauptfahrtrichtung hinteren Bereich der Kabine umfasst die Lage in den seitlichen Außenwänden bevorzugt eine bis fünf Schichten. Zudem liegt an einem Übergang vom vorderen Bereich der Kabine zum hinteren Bereich der Kabine quer zu einer Längsrichtung der Kabine eine Zwischenwand angeordnet vor, wobei die Zwischenwand eine Lage enthaltend drei bis neun Schichten umfasst. Ebenfalls betrifft die Erfindung ein Herstellungsverfahren für die erfindungsgemäße Sicherheitskabine.

### Hintergrund und Stand der Technik

Im Handel sind unterschiedliche Bauformen von Wohnmobilen erhältlich, aktuell sind das vor allem Alkovenmobile, teilintegrierte Wohnmobile, (voll-) integrierte Wohnmobile, Liner und/oder Kastenwagen. Allen bis auf den Kastenwagen ist gemein, dass Hersteller von Wohnmobilen die Fahrgestelle mit Führerhaus oder nur die Fahrgestelle erwerben und dann mit einem Aufbau/Anbau versehen, der Freizeit-, Urlaubs-, Campingzwecken, etc. dienlich ist. Selten wird der gesamte Aufbau von einem Fahrzeughersteller übernommen. Im Fall der oben genannten Fahrzeugtypen wird der Aufbau vorrangig aus einem Holz-Fachwerk, Alu-Sandwich und/oder GFK-Monocoque hergestellt. Die verwendeten Materialien sind meist ein Materialmix aus XPS-Schäumen, EPS-Schäumen, PU-Schäumen, etc., die mit Platten aus glasfaserverstärktem Kunststoff (GFK) und/oder Aluminium oder Holz oder sonstigen Materialen zu einem Sandwich aufgebaut werden. Dieser Aufbau ist preiswert und weist eine gute Beständigkeit gegen Witterungseinflüsse auf. Allerdings bietet er den Insassen bauartbedingt nur einen geringen bis gar keinen Schutz vor den Folgen eines eventuellen Unfalles, da die Konstruktion dafür keine oder nur unzureichende mechanische Eigenschaften vorhält. Dabei wurde in der Vergangenheit davon ausgegangen, dass stabilitäts- und/oder sicherheitserhöhende Maßnahmen kostspielig sowie aufwendig sind und das Gewicht der Fahrzeuge enorm erhöhen.

DE 202016103524 U1 offenbart ein Reisemobil. Dieses ist in ein Fahrerhaus und einer dem Fahrerhaus angrenzenden Wohnkabine aufgeteilt. Beide Bereiche sind durch eine B-Säulenkonstruktion getrennt, wobei dieses faserverstärktes Kunststoff umfasst und für die erhöhte Sicherheit der Passagiere im Fahrerhaus dienen soll.

Der Aufbau eines solchen Reisemobils genügt den heutigen Anforderungen an Insassenschutz hinter der B-Säulenkonstruktion nicht. Insbesondere bei einem Seitenaufprall oder einem Überschlag des Reisemobils führt eine solche Konstruktion zu schwerwiegenden Schäden, woraus beträchtlicher Personenschaden entstehen kann, wenn sich Insassen im hinteren Bereich des Reisemobils aufhalten.

DE 102007026762 A1 offenbart Verstärkungselemente mit Glasfaserverstärkungen für eine Fahrzeugkarosserie.

Die in dem Dokument beschrieben Verstärkungselemente sind nur in der Karosserie eingebracht, insbesondere in den Rahmen der Karosserie. Dabei erreichen diese Verstärkungselemente in Ihrer Gesamtheit weiterhin nicht den geforderten Sicherheitsstandard für Wohn- und Reisemobile.

US 8474871 B1 beschreibt eine Rahmenstruktur für einen Bodenbereich von Wohnwägen und Wohnmobilen aus faserverstärkten Längs- und Querträgern. Zur Verbindung der Träger untereinander und mit einer Bodenplatte werden mehrere Faserlagen übereinander gebracht. Es werden Glas- und Kohlestoffasern verwendet.

Wie bereits für die anderen Dokumente erwähnt, erreicht eine solche Ausführung nicht den nötigen Sicherheitsstandard, um Passagiere im Bereich der Wohnkabine zu transportieren. Da nur der Bodenbereich verstärkt ist, würde ein seitlicher Aufprall trotzdem zu schweren Schäden der Wohnkabine führen. Insbesondere die Wände umfassen keine Verstärkungselemente, sodass diese bei einem seitlichen Aufprall und/oder Überschlag wenig Schutz bieten.

DE 20 47 190 A1 offenbart eine Sicherheitskabine, wobei Wände der Sicherheitskabine mindestens eine Lage eines faserverstärkten Kunststoffgewebes umfassen, wobei die Lage in seitlichen Außenwänden in einem in Bezug auf eine vorgesehene Hauptfahrtrichtung vorderen Bereich der Kabine mehrere Schichten umfasst, wobei die Lage in den seitlichen Außenwänden in einem in Bezug auf eine vorgesehene Hauptfahrtrichtung hinteren Bereich der Kabine mehrere Schichten umfasst, wobei an einem Übergang vom vorderen Bereich der Kabine zum hinteren Bereich der Kabine quer zu einer Längsrichtung der Kabine eine Zwischenwand angeordnet vorliegt, wobei die Zwischenwand eine Lage enthaltend mehrere Schichten umfasst.

### Aufgabe der Erfindung

Aufgabe der Erfindung ist es, ein Wohn- bzw. Reisemobil ohne die Nachteile des Standes bereitzustellen.

Insbesondere war es eine Aufgabe der Erfindung ein Wohn- bzw. Reisemobil bereitzustellen, welches ohne großen konstruktiven Mehraufwand und ohne (wesentliche) Erhöhung des Fahrzeuggewichts die Sicherheit des Fahrzeugs enorm zu verbessern. Dabei sollten auch die Herstellungskosten und/oder Nachrüstungskosten möglichst gering gehalten werden.

### Zusammenfassung der Erfindung

Gelöst wird die Aufgabe durch die Merkmale der unabhängigen Ansprüche. Vorteilhafte Ausgestaltungen der Erfindung sind in den abhängigen Ansprüchen beschrieben.

In einem ersten Aspekt betrifft die Erfindung eine Sicherheitskabine für ein Wohn- bzw. Reisemobil umfassend einen hinter einem Fahrerhaus anordenbaren Teil der Sicherheitskabine, dadurch gekennzeichnet, dass Wände der Sicherheitskabine mindestens eine Lage eines faserverstärkten Kunststoff-gewebes und/oder -geleges umfassen, wobei eine Lage entlang einer Querrichtung aufeinanderfolgende Schichten aufweist, wobei direkt aufeinanderfolgende Schichten zueinander unterschiedliche Faserorientierungen aufweisen, wobei die Lage in seitlichen Außenwänden in einem in Bezug auf eine vorgesehene Hauptfahrtrichtung vorderen Bereich der Kabine bevorzugt mindestens drei bis neun Schichten umfasst, wobei die Lage in den seitlichen Außenwänden in einem in Bezug auf eine vorgesehene Hauptfahrtrichtung hinteren Bereich der Kabine bevorzugt eine bis fünf Schichten umfasst, wobei an einem Übergang vom vorderen Bereich der Kabine zum hinteren Bereich der Kabine quer zu einer Längsrichtung der Kabine eine Zwischenwand angeordnet vorliegt, wobei die Zwischenwand eine Lage enthaltend bevorzugt drei bis neun Schichten umfasst. Überraschend hat sich vorteilhaft herausgestellt, dass die Synergie aller Merkmale zu einem technischen Gesamterfolg führt. Die hier aufgezeigte Sicherheitskabine des Wohn- bzw. Reisemobils zeigt besonders vorteilhaft verbesserte Eigenschaften in Bezug auf die Sicherheit der Passagiere. Die Passagiere bzw. Insassen der Sicherheitskabine sind im besonderen Maße bspw. bei Überschlägen des Fahrzeugs, bei seitlich und hinten auftretenden Unfällen geschützt. Zudem führt der Aufbau überraschend vorteilhaft zu einer guten Wärmeisolation innerhalb der Kabine sowie zu verbesserten Eigenschaften hinsichtlich der Lautstärke innerhalb der Kabine.

In einer bevorzugten weiteren Ausführungsform ist die Sicherheitskabine dadurch gekennzeichnet, dass in dem vorderen Bereich genauso viele Schichten umfasst sind wie in dem hinteren Bereich.

In einer bevorzugten weiteren Ausführungsform ist die Sicherheitskabine dadurch gekennzeichnet, dass in dem vorderen Bereich mehr Schichten umfasst sind als in dem hinteren Bereich. Besonders vorteilhaft wirkt hierbei der hintere Bereich der Sicherheitskabine als Deformationszone bzw. Knautschzone bei Auffahrunfällen von hinten, wodurch die Unfallenergie im besonders hohen Maße aufgenommen wird und die Sicherheit von Passagieren im vorderen Bereich steigt.

Erfindungsgemäß sind Außenwände bevorzugt dadurch definiert, dass sie die Sicherheitskabine umschließen. Hierbei umfasst die Sicherheitskabine bevorzugt drei Außenwände:
- zwei in Bezug auf die Hauptfahrrichtung seitlich (parallel zur Hauptfahrtrichtung) angeordnete Außenwände und
- eine am Heck des Fahrzeugs (quer zur Hauptfahrtrichtung) angeordnete Außenwand, die eine Verbindung zu beiden seitlichen Außenwänden darstellt.

Die Längsrichtung der Kabine bzw. Sicherheitskabine ist bevorzugt die Richtung der Hauptfahrtrichtung.

Erfindungsgemäß sind die aufeinanderfolgenden Schichten einer Lage bevorzugt entlang einer Querrichtung angeordnet. Die Querrichtung ist dabei besonders bevorzugt die Richtung, die quer zur Längsrichtung bzw. Längsachse einer Wand liegt. Dabei liegt die Querrichtung in den seitlich angeordneten Außenwänden quer zur Hauptfahrtrichtung und in der am Heck angeordneten Außenwand sowie in der Zwischenwand parallel zur Hauptfahrtrichtung.

In einer weiteren Ausgestaltung der Erfindung umfassen die seitlichen Außenwände bevorzugt eine Vorder- und eine Rückseite. Die Vorderseite einer Außenwand eines Wohn- und Reisemobils ist bevorzugt die nach innen in den Innenraum der Sicherheitskabine gerichtete Fläche. Die Rückseite einer Außenwand ist dementsprechend bevorzugt die nach außen gerichtete Fläche.

In einer weiteren Ausgestaltung der Erfindung kann die Außenwand aus mehreren Wandteilen und/oder aus mehreren aufeinanderfolgenden Wänden bestehen. Bevorzugt ist die Außenwand aus einer Vorder- bzw. einer Rückwand ausgestaltet. Die Vorderseite der Außenwand umfasst bevorzugt eine Vorderwand. Die Rückwand befindet sich bevorzugt an der Rückseite der Außenwand.

Erfindungsgemäß ist die Hauptfahrtrichtung bevorzugt die Richtung, in der das Fahrzeug anhand der Straßenverkehrsordnung in überwiegender Zeit bevorzugt bewegt wird. In einigen Ausführungen des Dokuments wird die Hauptfahrtrichtung auch einfach als Fahrtrichtung abgekürzt.

Erfindungsgemäß sind direkt aufeinanderfolgende Schichten bevorzugt so ausgestaltet, dass sie unmittelbar nebeneinander - ohne eine Zwischenschicht - angeordnet vorliegen.

In einem weiteren Aspekt betrifft die Erfindung eine Sicherheitskabine für ein Wohn- bzw. Reisemobil, wobei in mindestens einem Bereich der Kabine mindestens ein stabilisierendes Deformationselement aus faserverstärktem Kunststoff und/oder Metallschaum umfasst, welches bevorzugt zumindest teilweise in einem äußeren Bereich der Sicherheitskabine vorliegt, wobei die Faserverstärkung und/oder der Metallschaum konfiguriert ist für eine Erhöhung einer Festigkeit (bevorzugt einer Zugfestigkeit, Druckfestigkeit, Biegefestigkeit und/oder Biegezugfestigkeit) der Sicherheitskabine und/oder eine Umwandlung von kinetischer Energie (bevorzugt in Spannungsarbeit und/oder Verformungsarbeit) bei einem zumindest teilweisen unelastischen Stoß der Sicherheitskabine. wobei in mindestens einem Bereich der Kabine mindestens ein stabilisierendes Deformationselement eingebracht vorliegt.

Eine Sicherheitskabine unterscheidet sich gegenüber einem gewöhnlichen Aufbau bevorzugt dadurch, dass ein Deformationselement in für die Sicherheit besonders sensiblen Bereichen vorliegt. Dadurch soll die Stabilität des Aufbaus bei einem Unfall erhöht werden und dessen Verhalten als Knautschzone verbessert werden. Dafür werden zunächst bevorzugt geeignete, besonders sensible Bereiche bestimmt. Außerdem soll das Deformationselement selber geeignete physikalische Eigenschaften aufweisen. Das Element umfasst faserverstärkten Kunststoff, z. B. eine stabile Platte, ein Vierkant oder Rundelement oder eine wabenförmige Struktur aus faserverstärktem Kunststoff, welches bevorzugt laminiert wird/ist und so ein in die Kabine eingebrachtes Deformationselement aus faserverstärktem Kunststoff bildet. Bevorzugt ist der faserverstärkte Kunststoff dabei kohlenstofffaserverstärktem Kunststoff (CFK) und/oder umfassend Verstärkungen aus Aramidfasern.

Die Sicherheitskabine umfasst bevorzugt die äußeren Bereiche, z. B. die Außenwände des Aufbaus und/oder der Karosserie des Wohn- bzw. Reisemobils. Auch die gesamte Karosserie, die Fahrgastzelle und/oder der Aufbau bzw. die Kabine kann bevorzugt mit Sicherheitskabine gemeint sein. Auch weitere Elemente, wie z. B. das Chassis (Fahrgestell) und Innenwände, können umfasst sein.

Es kann weiterhin bevorzugt sein, dass die Sicherheitskabine das Fahrerhaus umfasst, insbesondere bei vollintegrierten Mobilen. Es kann ebenso bevorzugt sein, dass die Kabine nur den Teil des Mobils umfasst, der nicht zum Fahrerhaus gehört. Eine Sicherheitskabine unterscheidet sich von einer gewöhnlichen Kabine bzw. Fahrgastzelle eines Wohn- und/oder Reisemobils bevorzugt dadurch, dass die Sicherheit der Kabine gegenüber diesen erhöht ist, insbesondere durch Einbringen mindestens eines Deformationselements.

Durch die Verwendung mindestens eines stabilisierenden Deformationselementes kann die Sicherheit der Passagiere zum Schutz vor Unfällen entscheidend verbessert werden. Dabei können bevorzugt durch fachmännische Auswertung geeignete Bereiche der Kabine bestimmt werden, welche besonders unfallanfällig sind, für die Stabilität der Kabine besonders bedeutend sind und/oder aus anderen Gründen eine besondere Signifikanz für die Unfallsicherheit haben. Diese Bestimmung kann vor allem durch Auswertung von Crashtests und/oder theoretischen Berechnungen vorgenommen werden. Eines oder mehrere Deformationselemente können dabei an jeweils geeigneter Stelle/ geeigneten Bereichen angebracht werden. Es kann sich aber auch um ein durchgehendes Deformationselement handeln, welches z. B. mehrere geeignete Bereiche umfasst.

Das Deformationselement erhöht dabei die Sicherheit bei Unfällen, bevorzugt durch seine Stabilitäts- und/oder Festigkeitseigenschaften, durch eine bevorzugte Zug- und/oder Druckfestigkeit, durch ein bevorzugtes E-Modul und/oder durch sonstige relevante Eigenschaften. Diese Eigenschaften des Elements stehen sowohl für sich als auch in einem, bevorzugt synergistischem Wechselspiel mit den übrigen Elementen der Kabine. So können bevorzugt die gesamten Eigenschaften der Kabine über die Bereiche des Deformationselements hinaus im gewünschten Sinne beeinflusst werden.

Hierzu wird das Deformationselement in die Sicherheitskabine eingebracht. Das bedeutet insbesondere, dass das Deformationselement mit den anderen Elementen der Sicherheitskabine so zusammenwirken kann, dass es die Stabilität und/oder die Unfallsicherheit erhöht. Zum Beispiel kann das Deformationselement an einer inneren und/oder äußeren Fläche der Sicherheitskabine auf- und/oder eingebracht werden, z. B. durch eine Verbindung (Fügung) durch bspw. Aufkleben, Aufnieten, Verschweißen, Festschrauben, Festnageln, Verlöten, Vulkanisieren, Laminieren, eine magnetische Verbindung, eine Saugverbindung, eine Klemmverbindung und/oder allgemein eine Kraft- bzw. formschlüssige Verbindung.

Bevorzugt liegt das Deformationselement zumindest teilweise in einem äußeren Bereich der Sicherheitskabine vor. Das bedeutet insbesondere, dass der äußeren Bereich das Deformationselement umfasst oder sogar im Wesentlichen bzw. teilweise aus diesem gebildet ist. Ebenso kann es sein, dass das Deformationselement z. B. Teile eines Querträgers und/oder einer inneren Wand innerhalb der Kabine ist, jedoch sind auch dann Teile des Deformationselements in dem äußeren Bereich umfasst, z. B. an den Verbindungselementen des Deformationselement zum äußeren Bereich. Dieses kann bspw. entsprechend abgewinkelt sein und/oder Verbindungsflächen aufweisen, so dass eine stabile Verbindung mit dem äußeren Bereich ermöglicht wird.

Ein äußerer Bereich umfasst bevorzugt alle Elemente der Sicherheitskabine, die eine Außenfläche dieser umfassen, z. B. die Außenwände.

Die Faserverstärkung und/oder der Metallschaum ist bevorzugt konfiguriert für eine Erhöhung einer Festigkeit, bevorzugt einer Zugfestigkeit, Druckfestigkeit, Biegefestigkeit und/oder Biegezugfestigkeit, der Sicherheitskabine und eine Umwandlung von kinetischer Energie, bevorzugt in Spannungsarbeit und/oder Verformungsarbeit, bei einem zumindest teilweisen unelastischen Stoß der Sicherheitskabine. Das bedeutet, dass das faserverstärkte und/oder Metallschaum umfassende Deformationselement an den entsprechenden Stellen eingebracht wird und die Faser und/oder der Metallschaum zum einen die entsprechenden Eigenschaften, bei der Faserverstärkung entlang der Längsrichtung der Faser, selber aufweisen, zum anderen die Ausrichtung der Fasern und/oder des Metallschaums so vorgenommen wird, dass diese Eigenschaften bei der Erhöhung der Festigkeit der Kabine und/oder der Umwandlung von kinetischer Energie bei einem Stoß aufgrund eines Unfalls zum Tragen kommen.

Zum einen soll bevorzugt die Stabilität und/oder Festigkeit, mindestens von Bereichen der Kabine erhöht werden, zum anderen soll die bei einem Unfall entstehende Energie bevorzugt so aufgenommen und/oder geleitet werden, dass diese möglichst für die Insassen minimiert wird. Erkenntnisse aus Crashtests und/oder Berechnungen werden bevorzugt verwendet, um geeignete Bereiche zum Einbringen eines Deformationselements zu identifizieren.

Bei Unfällen spielen häufig insbesondere zwei Faktoren eine Rolle: zum einen bevorzugt die Stabilität einer Fahrgastzelle, Karosserie und/oder Sicherheitskabine. Diese ist insbesondere dafür geeignet, den Insassen einen wohldefinierten Überlebensraum zu sichern, bei dem ein Insasse im Wesentlichen in der Relativposition innerhalb des Fahrzeugs, in der er sich vor dem Unfall befunden hat, zu belassen und/oder vor Teilen der Fahrgastzelle, Karosserie und/oder Sicherheitskabine sowie vor anderen Gegenständen aus dem Inneren und/oder Äußeren der Fahrgastzelle, Karosserie und/oder Sicherheitskabine zu schützen. Des Weiteren soll eine Fahrgastzelle, Karosserie und/oder Sicherheitskabine zur Erhöhung der Sicherheit vorteilhafterweise eine Deformationszone bzw. Knautschzone aufweisen. Diese soll die kinetische Energie bei einem Unfall, welche auch bei hoher Stabilität der Fahrgastzelle, Karosserie und/oder Sicherheitskabine eine große Gefahr für die Insassen darstellt, im Wesentlichen und/oder mindestens teilweise in Verformungsenergie bzw. -arbeit des Materials umwandeln. Diese Eigenschaft soll im folgenden bevorzugt (Energie-) Umwandlungsfähigkeit genannt werden. Der Fachmann weiß, dass beide Eigenschafen dabei bevorzugt in einer Abhängigkeit und/oder einem Wechselspiel zueinander stehen können. Die vorgenannten Eigenschaften spielen bevorzugt bei der Durchführung von Crashtests eine besondere Rolle und können durch geeignete Materialeigenschaften im gewünschten Sinne beeinflusst werden. Ein Fachmann weiß, wie er z. B. Weichheit, Bruchdehnung, Zugfestigkeit, E-Modul und/oder Stabilität sowie eine bevorzugte Richtungsabhängigkeit von Sicherheitskabine, Deformationselement(en) bzw. von diesen umfassten Komponenten auswählen muss, um die gewünschten Eigenschaften zu erreichen. Ebenso können diese Eigenschaften wie auch eine generelle Erhöhung der Unfallsicherheit durch Crashtests gemessen und/oder theoretisch berechnet werden.

Es kann ebenso bevorzugt sein, durch Verwendung von Deformationselementen nur eine Eigenschaft der Sicherheitskabine, vorzugsweise nur die Stabilität bzw. Festigkeit oder nur die Umwandlung kinetischer Energie in andere, bevorzugt für die Passagiere unschädliche Energieformen umzuwandeln.

Insbesondere sollen jedoch beide Eigenschaften in geeignetem Maße, vorteilhafterweise zur Erhöhung der Passagiersicherheit, erhöht werden.

Ein Fachmann weiß, wie moderne Crashtest durchgeführt werden und welche Mess- und Auswertmethoden zum Einsatz kommen. Durch Crashtests kann vorteilhafterweise festgestellt werden, wo das Einbringen eines Deformationselements die Stabilität der Kabine in gewünschtem Maße und/oder besonders stark erhöht und inwiefern die Sicherheit durch das Einbringen erhöht wird. Dabei können bevorzugt Bereiche besonders relevant sein, die statistisch häufig bei Unfällen in Mitleidenschaft gezogen werden und/oder Bereiche, die für die Statik der Kabine und/oder als Knautschzone besonders bedeutend sind. Zur Bestimmung dieser Bereiche können bevorzugt sowohl Unfallstatistiken, physikalische (Computer-) Analysen und/oder theoretische Berechnungen als auch Crashtests herangezogen werden. Dabei können Crashtests beispielsweise mit und ohne Deformationselement bzw. Sicherheitskabine zu Vergleichszwecken durchgeführt werden.

Diese Berücksichtigung von Crashtests und/oder theoretischen Überlegungen zur Identifikation geeigneter Bereiche (sicherheitsrelevanter Bereiche) für ein Deformationselement wird auch bevorzugt Analyse zur Festlegung sicherheitsrelevanter Bereiche genannt. Bei dieser Analyse sollen insbesondere Stabilität und/oder Umwandlungsfähigkeit untersucht werden.

Diese vorgenannten Eigenschaften, insbesondere Stabilität/Festigkeit und/oder Umwandlungsfähigkeit sollen eine Sicherheitskabine und/oder ein Deformationselement und dessen sicherheitsverstärkende Wirkung für ein Wohn- und/oder Reisemobil besonders charakterisieren. Bevorzugt umfasst die Bedeutung des Substantives "Sicherheit" bzw. des Adjektivs "sicher" in Verbindung mit eine Charakterisierung der Sicherheitskabine und/oder dem Deformationselement diese Eigenschaften.

Eine Erhöhung einer Festigkeit, bevorzugt einer Zugfestigkeit, Druckfestigkeit, Biegefestigkeit und/oder Biegezugfestigkeit der Sicherheitskabine kann insbesondere durch eine hohe Zugfestigkeit der zur Faserverstärkung verwendeten Fasern und/oder des verwendeten Metallschaumes sowie durch ein hohes E-Modul der Fasern und/oder des Metallschaumes erreicht werden. Diese (Faser-) Eigenschaften sind insbesondere entlang einer Faserlängsrichtung hoch. Durch Bündelung geeigneter Faser, Einbettung in eine geeignete Kunststoffmatrix und/oder die Ausrichtung der Fasern in mindestens eine Richtung können diese Fasereigenschaften auch die genannten Eigenschaften der Sicherheitskabine beeinflussen. Auch die Eigenschaften des Metallschaumes können in geeigneter Weise angepasst werden. Ebenso ist auch die Umwandlung von kinetischer Energie bevorzugt in Spannungsarbeit und/oder Verformungsarbeit bei einem zumindest teilweisen unelastischen Stoß der Sicherheitskabine, also einem Unfall des Wohn- bzw. Reisemobils durch die Fasern und/der den Metallschaum in vorgenannter Weise beeinflussbar. Die relevante Eigenschaft der Faser und/oder des Metallschaumes ist jedoch in diesem Fall bevorzugt die Bruchdehnung dieser Faser und/oder des Metallschaumes, das bedeutet insbesondere die relative Längendehnung einer Faser bzw. des Metallschaumes in Prozent (%), bevor es zu einem Bruch bzw. Riss kommt. Diese wird bevorzugt ebenfalls durch die Zähigkeit der Faser und/oder des Metallschaumes bestimmt und/oder beeinflusst. Ebenso kann bei der Umwandlung die teilweise Umwandlung kinetischer Energie in Reibungsarbeit bevorzugt sein.

Aber auch weitere Eigenschaften (des Deformationselements) können bevorzugt sein zur Erhöhung der (Unfall-) Sicherheit, wie z. B eine niedrige Brennbarkeit und/oder Entflammbarkeit. Zur Beurteilung können beispielsweise der Flammpunkt, der Brennpunkt, und/oder die Zündtemperatur herangezogen werden.

Bevorzugt ist eine Sicherheitskabine und/oder ein Deformationselement schwer brennbar und/oder nach DIN EN 13501 bzw. DIN 4102 schwer entflammbar.

Dafür können eine Sicherheitskabine und/oder ein Deformationselement beispielsweise ein Flammschutzmittel und/oder schwer brennbare Materialien umfassen, wie z. B. bestimmte Fasermaterialien und/oder Metallschäume umfassen.

Durch Deformationselemente, welche in geeigneten Bereichen der Sicherheitskabine eingebracht vorliegen, kann die Unfallsicherheit bevorzugt synergistisch erhöht werden. Dabei ist das Deformationselement bevorzugt zusätzlich in eine bestehende Fahrgastzelle und/oder Karosserie eingebracht. Ebenso kann das Deformationselement jedoch auch ein Karosserie- oder Strukturbauteil der Sicherheitskabine sein.

Bevorzugt sind Deformationselemente auch nachrüstbar. So kann ohne großen Aufwand ein bereits hergestelltes Fahrzeug sicherer gemacht werden. Es werden Ressourcen gespart.

In einer bevorzugten Ausführungsform umfasst das Deformationselement ein Vlies, z. B. umfassend Kohlenstofffasern in eine Kunststoffmatrix. Dieses kann entweder beim Bau der Sicherheitskabine oder in einem Nachrüstprozess an geeigneter Stelle ein- bzw. angebracht werden. Das Ein- bzw. Anbringen kann, insbesondere bei einem Nachrüsten, durch automatisiertes oder manuelles Laminieren geschehen.

Ein Deformationselement kann vorzugsweise ein flächiges Element sein und/oder umfassen. Flächiges Element bedeutet bevorzugt, dass es im Wesentlichen eine Ausdehnung entlang zweier Dimensionen hat und insbesondere nur eine unwesentliche Ausdehnung in zu dieser Ebene senkrechten Richtung.

Unter dem Begriff "Metallschaum" wird vorzugsweise eine dreidimensionale, metallische, zelluläre Struktur mit einem wesentlichen Volumenanteil an mit Luft gefüllten Poren verstanden. Metallschäume sowie deren Herstellung sind dem Fachmann bekannt. Metallschaum oder poröser metallischer Werkstoff beschreibt vorzugsweise aufgeschäumte metallische Werkstoffe. Metallschäume besitzen insbesondere durch Poren und Hohlräume bedingt eine geringere Dichte als massive Metalle aus dem gleichen Material, weisen vorteilhafterweise jedoch gleichzeitig eine hohe (spezifische) Steifigkeit und/oder Festigkeit auf. Insbesondere ermöglichen Metallschäume eine erhöhte Absorptionsfähigkeit kinetischer Energie, z. B. bei Verwendung in einer Karosserie bzw. Sicherheitskabine bei einem Unfall/Aufprall des Fahrzeugs. Metallische Schäume zeigen somit bevorzugt ein gutes bzw. erhöhtes mechanisches Energieabsorptionsvermögen.

Bevorzugt werden Aluminium oder Aluminiumlegierungen aufgrund der geringen Dichte geschäumt. Unter Verwendung geeigneter Treibmittel ist es vorzugsweise ebenfalls möglich, Schäume aus Kupfer, Zink, Blei oder Stahl/Eisen herzustellen. Metallschäume werden bevorzugt aus Metallpulver und einem Metallhydrid, z. B. dem Titandihydrid, hergestellt. Beide Pulver werden vorzugsweise gemischt und durch Sintern und/oder Strangpressen zu einem Vormaterial verdichtet, welches dann insbesondere auf eine Temperatur oberhalb des Schmelzpunktes des Metalls erhitzt wird, wobei das z. B. Titandihydrid bevorzugt gasförmigen Wasserstoff freisetzt und das Gemenge aufschäumt. Es ist vorzugsweise ebenso möglich Metallschäume durch Einblasen von Gas in eine Metallschmelze herzustellen, wobei die Schmelze bevorzugt durch Zugabe fester Bestandteile schäumbar gemacht wurde. Für Aluminiumlegierungen werden z. B. zur Stabilisierung 10-20 Vol.-% Siliziumkarbid oder Aluminiumoxid zugegeben. Auch die Zugabe von Calcium ist vorzugsweise möglich. Hierbei bildet sich insbesondere eine Legierung, wodurch vorteilhafterweise die Viskosität erhöht und/oder die Schmelze stabilisiert wird. Ebenso ist vorzugsweise die Herstellung von Metallschaum durch das Schlickerreaktionsschaumsinter-Verfahren (SRSS-Verfahren) möglich, insbesondere für die Herstellung von Eisen-, Stahl- und/oder Nickelschaum. Bei diesem Verfahren wird bevorzugt mittels durch die Reaktion von Säure mit dem jeweiligen Metallpulver gebildeten Wasserstoff ein Schlicker geschäumt, durch weitere Reaktionsprodukte bevorzugt ein Abbinden der Schaumstruktur erreicht, welche anschließend bevorzugt in einer Form getrocknet und/oder unter reduzierender Atmosphäre bzw. im Vakuum gesintert. Für niedrigschmelzende Metalle (Aluminium, Zink und/oder Blei) existiert vorzugsweise eine Herstellungsmethode für offenporige Metallschäume durch Gießen mit Salz. Das flüssige Aluminium, Zink und/oder Blei wird bevorzugt gemeinsam mit Kristallsalz (NaCl) gegossen, wobei z. B. nach mechanischer Nachbehandlung das Salz ausgewaschen wird. Dabei werden insbesondere die Salzkörner und/oder ihre Kontaktstellen durch Poren ersetzt. Bei dieser Herstellungstechnologie sind vorzugsweise die Poren im Wesentlichen miteinander verbunden (offen). Ein solcher Metallschaum hat vorteilhafterweise eine Porosität von 50 bis 65 % und einstellbare Porengrößen von 0,2 mm bis 4 mm.

Auch Verbundmetallschaum (eng.: *Composite metal foam; CMF*) ist vorzugsweise von dem verwendeten Begriff Metallschaum umfasst. Verbundmetallschaum wird bevorzugt aus metallenen Hohlkugeln in einer festen Matrix eines anderen Metalls, wie Stahl in Aluminium, gebildet. CMF weist insbesondere ein 5- bis 6-fach erhöhtes Festigkeits-Dichte-Verhältnis und/oder eine mehr als 7-mal höhere Energieabsorption als andere Metallschäume auf und ist daher besonders vorteilhaft. Besonders bevorzugt ist z. B. die Verwendung eines Kevlar- und/oder Aramid-Metallschaum(-Keramik)-Verbundwerkstoffes.

Insbesondere die gemeinsame Verwendung von mindestens einem Deformationselement umfassend faserverstärkten Kunststoff und Metallschaum oder die Kombination von Deformationselementen wobei jeweils mindestens ein Element faserverstärkten Kunststoff und jeweils ein Element Metallschaum umfasst ist bevorzugt. Dabei ergeben sich vorteilhafterweise synergistische Effekte bezüglich der Sicherheit der Kabine bei Unfällen aufgrund der sich auf synergistische und verbesserte Weise sich ergänzenden Materialeigenschaften von faserverstärktem Kunststoff und Metallschaum.

In einer bevorzugten Ausführungsform der Sicherheitskabine weist das Deformationselement eine Zugfestigkeit von mehr als 2000 MPa (Megapascal), bevorzugt mehr als 3000 MPa und insbesondere mehr als 3500 MPa auf. Es war überraschend, dass durch die offenbaren Zugfestigkeiten eine stark verbesserte Sicherheit der Kabine erreicht werden konnte. Somit ist das Deformationselement besonders stabil gegenüber Zugbelastungen. Diese spielen bei Unfällen eine große Rolle. So wird auf überraschende Weise die Sicherheit der ganzen Kabine erhöht, sogar in Bereichen, wo kein Deformationselement vorliegt. Dabei weiß ein Fachmann, dass Materialtabellen Eigenschaften wie Dichte, Zugfestigkeit und E-Modul auflisten und kann daher aus solchen Listen geeignete Materialien heraussuchen. Dabei kann es bevorzugt sein, dass die Materialeigenschaften, insbesondere Zugfestigkeit und/oder E-Modul, isotrope Eigenschaften sind. Ebenso kann es jedoch bevorzugt sein, dass diese Eigenschaften anisotrop sind und nur in mindestens eine bestimmte Richtung innerhalb des Materials vorliegen bzw. sich in verschiedene Richtungen innerhalb des Materials unterscheiden. So kann eine sehr individuelle Anpassung des Deformationselements vorgenommen werden, wofür bevorzugt eine Analyse zur Festlegung sicherheitsrelevanter Bereiche herangezogen wird.

Häufig ist es vor allem bei Deformationselementen umfassend kohlenstofffaserverstärkten Kunststoff so, dass insbesondere entlang einer Faserrichtung eine besonders hohe Zugfestigkeit und/oder ein E-Modul erreicht werden kann. Dies kann zur gezielten Beeinflussung der bevorzugt anisotropen Stabilität und/oder Umwandlungsfähigkeit verwendet werden. So können durch gezielt entlang bestimmter Richtungen verlegte Fasern die gewünschten Eigenschaften entlang dieser Richtung maßgeschneidert erreicht werden, insbesondere ohne dass eine große Gewichtszunahme durch die Fasern verursacht wird, wie sie bspw. durch im Wesentlichen isotrop verlegte Fasern auftreten würde. Die (anisotropen) Eigenschaften können bevorzugt auch durch einen Tensor beschrieben werden.

Es kann auch bevorzugt sein, dass Deformationselement über das E-Modul zu beschreiben, z. B. können für das im Wesentlichen verwendeten Material E-Module größer 50 GPa (Gigapascal), bevorzugt größer 90 GPa bevorzugt sein. Es kann ebenso bevorzugt sein, dass das E-Modul weniger als 90 GPa, besonders bevorzugt weniger als 50 GPa beträgt.

In einer weiteren, bevorzugten Ausführungsform der Erfindung weisen die Fasern der Faserverstärkung und/oder der Metallschaum eine Zugfestigkeit von mindestens 2.700 MPa, bevorzugt mindestens 2.850 MPa, stärker bevorzugt mindestens 3.000 MPa, und insbesondere mindestens 3.500 MPa und/oder ein Elastizitätsmodul von mindestens 70 GPa, bevorzugt mindestens 100 GPa, stärker bevorzugt mindestens 230 GPa und insbesondere mindestens 370 GPa und/oder eine Bruchdehnung von mindestens 0,7 %, bevorzugt mindestens 1,5 %, stärker bevorzugt mindestens 2,7 % und insbesondere mindestens 3,5 % in bevorzugt mindestens eine Richtung auf. Auf diese Weise können die vorstehend genannten Eigenschaften besonders gut erreicht werden. Ein Fachmann weiß dabei, wie diese Eigenschaften zu erzielen sind, beispielsweise durch geeignetes Fasermaterial und/oder Faserdicken und/oder Anzahl der miteinander zu einem sogenannten Faserbündel und/oder Roving verbundenen Fasern. Vorteilhafterweise weisen die Metallschäume bzw. der Metallschaum ebenso vorstehend für die Fasern der Faserverstärkung genannte Eigenschaften auf. Diese Eigenschaften und die daraus resultierenden Vorteile sind für den Fachmann erkennbar ebenso auf die Eigenschaften eines Metallschaumes übertragbar. Bei Faserverstärkungen bezieht sich die mindestens eine Richtung auf eine Längsrichtung mindestens einer Faser. Bei dem Metallschaum bezieht sich die Richtung bevorzugt auf eine Vorzugsrichtung. Bei einem Metallschaum können genannte Eigenschaften auch besonders bevorzugt in zwei oder drei Raumrichtungen des Deformationselements gegeben sein.

Insbesondere die Zugfestigkeit und/oder das E-Modul bzw. der diese Eigenschaften beschreibende Tensor dienen bevorzugt der Charakterisierung der Stabilität und/oder Umwandlungsfähigkeit des Deformationselements. Vor allem die Umwandlungseigenschaften können durch eine Anisotropie der Stabilitätseigenschaften durch eine Vorzugsrichtung der Leitung der bei einem Unfall auf das Deformationselement übertragenen Energie positiv beeinflusst werden.

Es kann auch bevorzugt sein, das Deformationselement über die Dichte zu beschreiben. Beispielsweise kann eine Dichte des für das Deformationselement im Wesentlichen verwendeten Materials bevorzugt zwischen 1 und 2 g/cm³ betragen. So können besonders leichte Deformationselemente bereitgestellt werden, welche den Verbrauch eines Wohn- und/oder Reisemobils nicht signifikant erhöhen, nur geringe Energiekosten (Treibstoff) verursachen und die Umwelt schonen.

Begriffe wie im Wesentlichen, ungefähr, etwa, ca. etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1%. Ähnlich beschreibt bevorzugt Größen die ungefähr gleich sind. Teilweise beschreibt bevorzugt zu mindestens 5 %, besonders bevorzugt zu mindestens 10 %, und insbesondere zu mindestens 20 %, in einigen Fällen zu mindestens 40 %.

Auch eine Flächendichte zur Beschreibung des im Wesentlichen verwendeten Materials kann bevorzugt sein. Z. B. kann für dieses Material eine Flächendichte zwischen 100 g/cm² und 300 g/cm² und insbesondere zwischen 200 g/cm² und 220 g/cm² bevorzugt sein. Bevorzugt sind die Deformationselemente im Wesentlichen flächig. Daher kann insbesondere die Flächendichte geeignet sein, besonders leichte Deformationselemente zu beschreiben, welche durch ihr geringes Gewicht leicht nachrüstbar sind, ohne das die Motorisierung und/oder Auslegung des Fahrwerks geändert werden müsste.

Ganz besonders bevorzugt ist ein Deformationselement, welches entweder die Kombination dieser bevorzugten Stabilitäts- und Dichteeigenschaften selber aufweist und/oder das im Wesentlichen umfasste Material. So kann ohne wesentliche Gewichtszunahme die Sicherheit der Kabine stark verbessert werden.

In einer bevorzugten Ausführungsform der Erfindung hat das Deformationselement eine Ausdehnung von mindestens 1 - 300 cm in eine Richtung. Ein Deformationselement kann innerhalb dieser Größenordnung viele bevorzugt unterschiedliche Ausdehnungen aufweisen, je nachdem, ob es sich z. B. um ein Element der Außenwand der Sicherheitskabine handelt (bevorzugte Größen 55 cm - 250 cm) oder um stabilisierende Einzelelemente, wie z. B. das Winkelelement (bevorzugte Größen 5 cm - 110 cm). Es war überraschend, das bei einem Deformationselement dieser Größen die Sicherheit entscheidend verbessert werden konnte.

Bevorzugt hat das Deformationselement, insbesondere ein flächiges Deformationselement, eine Fläche von weniger als 6 m². Außenwände weisen typischerweise Flächen im Bereich 2 m² bis 6 m² auf, während z. B. Winkelelemente eher 25 cm² bis 1,5 m² groß sind.

Ebenso kann bevorzugt sein, dass das (flächige) Deformationselement eine Dicke von weniger als 30 cm, bevorzugt weniger als 20 cm, stärker bevorzugt weniger als 10 cm, noch stärker bevorzugt weniger als 5 cm, ganz stark bevorzugt 2 cm oder weniger und insbesondere 1 cm oder weniger aufweist. Solche Elemente sind besonders leicht herzustellen.

In einer weiteren bevorzugten Ausführungsform der Sicherheitskabine umfasst das Deformationselement kohlenstofffaserverstärkten Kunststoff.

Ein kohlenstofffaserverstärkten Kunststoff ist dem Fachmann bekannt und umfasst bevorzugt Verstärkungsfasern aus Kohlenstoff und einer Kunststoffmatrix, welche die Fasern bettet. Mit Kunststoff ist vorteilhafterweise ein Werkstoff gemeint, welcher Polymere umfasst. Da die Fasern vorteilhafterweise eine höhere Steifigkeit als die Matrix aufweisen, wird einwirkende Last bzw. Kraft bevorzugt entlang der Fasern geleitet.

Eine Faser ist insbesondere ein lineares, längliches Gebilde, das aus einem Faserstoff besteht und eine Faserform aufweist, wobei die Längsform z. B. glatt oder kraus und die Querschnittsform beispielsweise rund oder eckig ist. Mit Fasern sind vor allem dünne Fäden von bevorzugt einigen Mikrometern Durchmesser bezeichnet. Aber auch dickere und/oder dünnere Fasern sind bekannt und können zum Einsatz kommen.

Eine Kohlenstoff-Faser kann beispielsweise graphitartig sp²-gebundenen Kohlenstoff umfassen.

Bekannte und bevorzugte Kohlenstofffasertypen, bevorzugt auch als Carbonfasern bezeichnet, umfassen Fasern folgender Charakterisierungen: HT (High Tenacity) - hochfest, UHT (Ultra High Tenacity) - sehr hochfest, LM (Low Modulus), IM (Intermediate Modulus) - intermediate, HM (High Modulus) - hochsteif, UM (Ultra Modulus), UHM (Ultra High Modulus), UMS (Ultra Modulus Strength) und/oder HMS (High Modulus / High Strain) - hochsteif/hochfest. Diese Charakterisierungen entsprechen industriellen Standardbezeichnungen und sind dem Fachmann bekannt. So kann je nach Anforderung an Stabilität und/oder Umwandlungsfähigkeit eine geeignete Faser verwendet werden.

Die Fasermaterialien der Kohlenstofffasern sind bspw. ausgesucht aus der Gruppe umfassen Rayon/Viskose (Zellulose), Polyacrylnitril (PAN), Pech, Polyethylenoxid (PEO) und/oder Polyvinylalkohol (PVA). Diese eignen sich für eine einfache und günstige Herstellung.

Es kann auch bevorzugt sein, dass die Kohlenstofffasern ausgesucht sind aus der Gruppe umfassend Zellulose allgemein, Flachs, Hanf-Fasern, Sisal und/oder Holz. Auf diese Weise können besonders ökologisch verträgliche Deformationselemente hergestellt werden, welche gleichzeitig die Energie bei einem Unfall besonders gut aufnehmen und geeignet weiterleiten können (Umwandlungsfähigkeit).

Vorteilhafterweise kann eine Kohlenstoffaser auch ausgeseucht sein aus einer Gruppe umfassend Aramid, Poly(p-phenylen-2,6-benzobisoxazol) (PPBO), Polyester, Nylon, Ultra-High-Molecular-Weight-Polyethylen, Polyethylen und/oder Polymethylmethacrylat. Fasern dieser Vorzugsvariante sind besonders vielseitig, robust und/oder stabil und besitzen beispielsweise eine hohe Temperatur- und/oder Chemikalienresistenz, eine niedrige Brennbarkeit und andere vorteilhafte Eigenschaften.

Der Kunststoff kann bevorzugt ein thermoplastisches, ein duroplastisches und/oder ein elastomeres Material umfassen. Thermoplasten sind leicht zu verarbeiten. Duroplasten sind bevorzugt auch unter hohen Temperaturen besonders stabil. Elastomere weisen insbesondere eine hohe Umwandlungsfähigkeit auf.

Der Kunststoff kann z. B. aus Harz und/oder Härter bestehen. Es können sowohl Kondensationsharze als auch Reaktionsharze verwendet werden, die im Unterschied zu ersteren in der Hauptsache ohne Abspaltung flüchtiger Komponenten, allein durch Polymerisation oder Polyaddition aushärten. Dadurch kann vorteilhafterweis eine Schädigung der Gesundheit von bei der Herstellung beteiligter Personen vermieden werden.

Unter Härter sind bevorzugt Materialien zu verstehen, die insbesondere gemeinsam mit dem verwendeten Harz zu einer Aushärtung zu einem festen Stoff, in erster Linie zu einem festen Kunststoff führen. Härter sind bevorzugt ausgewählt aus der Gruppe umfassend Polyamine, Aminaddukte, Polyaminoamide, Ketimine, Polyisocyanate, blockierte Isocyanate, Cyanguanidin, Amidine, Anhydride von Dicarbonsäuren, Carboxygruppen-haltige Polyesterharze, Dicarbonsäuren, Aldehyde, Ketone und/oder Divinylbenzole, Diallylphthalat und/oder Triglycidylisocyanurat. Diese sind besonders kostengünstig und leicht herzustellen.

Der Kunststoff und/oder Härter umfasst bevorzugt ein thermoplastisches Material und ist z. B. ausgesucht aus der Gruppe umfassend Polyetheretherketon (PEEK), Polyphenylensulfid (PPS), Polysulfon (PSU), Polyetherimid (PEI), Polytetrafluorethen (PTFE) verwendet. Ebenso können in erster Linie duroplastische Materialien wie Epoxidharz (EP), ungesättigtes Polyesterharz (UP), Vinylesterharz (VE), Phenol-Formaldehydharz (PF), Diallylphthalatharz (DAP), Methacrylatharz (MMA), Polyurethan (PUR), Melaminharz (MF/MP) und/oder Harnstoffharz (UF). Dabei wird bevorzugt ein geeigneter Härter verwendet.

Elastomere umfassen bevorzugt Polymere. Elastomere sind beispielsweise Vulkanisate von Naturkautschuk und/oder Silikonkautschuk.

Eine Herstellung von kohlenstofffaserverstärktem Kunststoff kann bevorzugt folgende Schritte und/oder Elemente umfassen: Verwendung von Prepregs im Press- oder Autoklavverfahren (besonders hochwertiger und verbesserter Kohlenstofffaserverstärkten Kunststoff), Faserwickeln, Infusions- oder RTM-Verfahren (besonders kostengünstige Herstellung). CFK-Handlaminate (besonders einfach und gut nachrüstbare Deformationselemente).

Kohlenstofffaserverstärkter Kunststoff ist für eine Erhöhung der Sicherheit besonders geeignet und lässt sich gut verarbeiten und vielfältigen Formen anpassen. Die Ästhetik kann so ebenfalls erhöht werden. Kohlenstofffaserverstärkten Kunststoff verbindet in einzigartiger Weise geringes Gewicht und hohe Stabilität (E-Modul, Zugfestigkeit). Nicht umsonst ist die Verwendung dieser Materialien ansonsten im Wesentlichen aus Luft- und Raumfahrt sowie der Antiballistik bekannt. Es war jedoch überraschend, dass eine Verwendung für eine Sicherheitskabine für ein Wohn- bzw. Reisemobil Stabilität und Sicherheit entscheiden verbessert, ohne Gewicht, Verbrauch und Fahreigenschaften signifikant (wesentlich) zu verändern.

Dabei ist besonders bevorzugt, geeignete/gewünschte Sicherheitseigenschaften durch eine fachmännische Ausrichtung und/oder Verlegung der Fasern zu erreichen. Diese orientiert sich insbesondere an der Analyse zur Festlegung sicherheitsrelevanter Bereiche.

Auch eine Nachrüstung von Deformationselementen in Form kohlenstofffaserverstärkter Kunststoffe ist besonders einfach, da diese häufig die Form von Matten aufweisen. Solche Matten können besonders einfach im Nachhinein in eine vorhandene Kabine an geeigneter Stelle eingebracht werden, z. B durch Laminieren.

Kohlenstofffaserverstärkter Kunststoff umfasst insbesondere eine Faserverstärkung in Form eines unidirektionalen und multiaxialen Geleges (bzw. Gewebes und/oder Vlies), welches insbesondere hochwertige Carbon-, Glas- und/oder Aramidfasern umfasst und mit Harz laminierbar ist. Ein solches ist vorteilhafterweise spätestens im laminierten Zustand hochfest, ultraleicht (Gewicht/Dichte), lässt sich bei einem Einbringen einfach drapieren, einfach verarbeiten und ist mit unterschiedlichsten Harzsystemen kompatibel.

Die Weiterverarbeitung kann insbesondere folgende Verfahren umfassen: Nasslaminieren, Pressen oder RTM (Resin Transfer Molding). Auch vorimprägnierte Materialien (Prepregs) sind bevorzugt.

In einer bevorzugten Ausführungsform umfasst der kohlenstofffaserverstärkte Kunststoff Aramide. Aramide sind bevorzugt Polyamide mit aromatischen Gruppen in der Hauptkette, bei denen mindestens 85 % der Amidgruppen direkt an zwei aromatische Ringe gebunden sind. Es können jedoch auch aromatische Polyamidimide umfasst sein. Bevorzugt sind Aramide ausgesucht aus der Gruppe umfassend meta-Aramide, para-Aramide und/oder para-Aramid-Copolymere. Aramide können Poly(p-phenylenterephthalamid) (PPTA, Handelsnamen: Kevlar, Twaron) und/oder Poly(m-phenylenisophthalamid) (PMPI, Handelsnamen: Nomex, Teijinconex) umfassen.

Besonders bevorzugt ist die Verwendung von Sigratex für das Deformationselement. Insbesondere ist die Verwendung von Sigratex H W215 -TW2/2 des Herstellers SGL Carbon bzw. gleichwertige Materialien anderer Hersteller bevorzugt, dass es überraschend gute Sicherheitseigenschaften aufweist. Diese können in Form von Gelegen, Geweben und/oder einem Vlies vorliegen und entsprechend bekannter und genannter Techniken in eine Sicherheitskabine eingebracht werden.

Bevorzugt können in den Faserverstärkungen einzelne, feinste Fasern zu sogenannten Rovings zusammengefasst werden. Ein Faserroving ist bevorzugt ein Bündel, Strang und/oder Garn aus parallel angeordneten Fasern. Die Anzahl der zusammengefassten Fasern wird dabei insbesondere mit der Filamentzahl angegeben, welche bevorzugt direkt dieser Anzahl entspricht. Einheiten von Tausend Fasern werden dabei bevorzugt mit k abgekürzt, 50.000 Fasern in einem Roving entsprechen somit insbesondere 50 k.

Die Feinheit wird bevorzugt in *tex* angegeben. tex entspricht insbesondere der Masse in Gramm pro tausend Meter Länge einer Faser bzw. eines Rovings. Durch die bevorzugten Parameter kann eine überraschend hohe Zugfestigkeit bzw. ein überraschend hohes E-Modul bei gleichzeitig geringem Gewicht und somit geringer Dichte erreicht werden. Die zu einem Roving zusammengefassten Fasern beeinflussen sich dabei synergistisch. Bevorzugt gilt für das Filament, (synonym: k-Zahl, Filamentanzahl) -je höher, desto stabiler die Faserverstärkung.

Es können bevorzugt Faserverstärkungen verwendet werden, die Gelege, Gewebe und/oder Vliese umfassen. Gelege sind bevorzugt nichtgewebte Matten aus parallelen Carbonfasern, die durch Verbindungsmittel in ihrer Lage fixiert werden. Diese können bevorzugt sowohl unidirektional als auch multiaxial sein, was insbesondere bedeutet, dass alle Fasern und alle umfassten Schichten in eine Richtung orientiert sind (unidirektional) oder mehrere Orientierungsrichtungen umfassen (multiaxial). Gewebe umfassen bevorzugt gewebte Fasern wie bei Textilien und können z. B. die Form von Matten und/oder Gewebebändern aufweisen. Bei Vliesen werden bevorzugt kurze Fasern (z. B. unter 10 cm) umfasst. Dabei können die Fasern bevorzugt "filzartig" miteinander verwebt sein. Es können bevorzugt isotrope Vliese (Faserrichtungen statistisch im Wesentlichen gleichverteilt) und/oder orientierte Vliese (Vorzugsrichtung der Fasern vorhanden) verwendet werden.

Bevorzugt können für alle genannten Faserverstärkungen verschiedene Fasertypen mit unterschiedlichen Eigenschaften eingesetzt werden, z. B.: Carbonfasern, bevorzugt umfassend HT-Fasern mit einer Filamentanzahl von 1.000 - 50.000, einer Zugfestigkeit von 3.500 MPa (Megapascal)oder höher, einem E-Modul von 230 GPa (Gigapascal) oder höher und/oder einer Bruchdehnung von 1,5% oder höher. Dabei gelten alle Eigenschaften bevorzugt pro Roving und/oder in Faserlängsrichtung. Ebenso können verwendete Carbonfasern bevorzugt HM-Fasern (Hochmodul) sein mit einer Filamentanzahl von 1.000 - 50.000, einer Zugfestigkeit von 2.700 MPa oder höher, einem E-Modul von 370 GPa oder höher und/oder einer Bruchdehnung von 0,7% oder höher. Ebenso können bevorzugt Aramidfasern umfasst sein, z. B. mit einer Feinheit von 80 - 400 tex, einer Zugfestigkeit von 2.850 MPa oder höher, einem E-Modul von 70 GPa oder höher und/oder einer Bruchdehnung von 3,4% oder höher (sogenanntes Standardmodul). Ebenso können die Aramidfasern bevorzugt Intermediate- und/oder Hochmodulfasern sein mit bevorzugt einer Feinheit von 40 - 400 tex, einer Zugfestigkeit von 2.850 MPa oder höher, einem E-Modul von 100 GPa oder höher und/oder einer Bruchdehnung von 2,7% oder höher. Ebenso können bevorzugt Glasfasern umfasst sein, bevorzugt E-Glas (bevorzugt Aluminiumborsilikat-Glas mit weniger als 2 % Alkalioxiden; welches standardmäßig für die allgemeine Kunststoffverstärkung verwendet wird), bevorzugt mit einer Feinheit von 30 - 3.500 tex, einer Zugfestigkeit von 3.000 MPa oder höher, einem E-Modul von 70 GPa oder höher und/oder einer Bruchdehnung von 3,5% oder höher. Bevorzugt können ebenfalls Mischtypen der genannten Fasertypen als Faserverstärkung verwendet werden.

Bevorzugt werden die Faserverstärkungen in Form von Gelegen, Geweben und/oder Vliesen durch folgende Eigenschaften charakterisiert: Materialauswahl (bevorzugt Carbon, Glas und/oder Aramid sowie Hybrid, also mehrere Typen umfassend; Gewebetyp (Unidirektional, Biaxial, Triaxial, Quadriaxial, Vlies, wobei Bi-, Tri- und Quadri- bevorzugt für zwei, drei und vier verschiedene Faserrichtungen stehen); Flächengewicht, angegeben in Gramm pro Quadratzentimeter (g/cm²); Bindungstyp bei Geweben, bevorzugt Leinwandbindung, Körperbindung (bevorzugt schräg verlaufender Grat, bevorzugte Typen 2/2, 4/4) und/oder Satinbindungen (auch als Atlasbindungen bekannt, bevorzugter Typ 1/7). Bevorzugte Faserorientierung sind: 0°(unidirektional), 0/90°, -45°/+45° (beide biaxial), 0°/-45°/+45°(triaxial), 0°/-45°/90°/+45°(Quadriaxial) bzw. bei Vliesen isotrop, anisotrop 0°, anisotrop -45°/+45°. Bevorzugte Fixierungen sind einseitige Gitter, zweiseitige Gitter, vernäht und/oder nicht fixiert. Des Weiteren können Bebinderung/Grammatur und/oder Kennfaden bei Vliesen umfasst sein. Herstellungs- bzw. Weiterverarbeitungsschritte der Faserverstärkungen können bevorzugt umfassen: Prepreg-Herstellung, Nasslaminieren, Infusion, Nasspressen und/oder Resin Transfer Molding (RTM).

Bei Geweben, Bändern und/oder Vliesen können als Materialbasis bevorzugt Carbonfasern mit 1k, 3k, 6k, 12k und 24k (Filamentanzahl) umfasst sein. Es können insbesondere gewebte Hybridmaterialien mit Glas- und/oder Aramidfasern verwendet werden. Diese bieten eine hohe Festigkeit, Steifigkeit und verbesserte thermische sowie elektrische Leitfähigkeiten. Sie sind vorteilhafterweise kompatibel mit verschiedenen Harzsystemen und sind dadurch besonders flexibel.

In einer bevorzugten Ausführungsform der Erfindung umfasst der Metallschaum ein Metall ausgesucht aus der Gruppe umfassend Aluminium, Eisen, Stahl, Nickel, Zink und/oder Blei. Gallium, Gold, Kupfer, Magnesium, Quecksilber, Wolfram, Titan, Silber, Ruthenium, Rhodium, Platin, Palladium, Osmium, Natrium, Molybdän, Mangan, Kobalt, Kalium; Iridium, Indium, Chrom, Kadmium, Bismut, Beryllium und/oder (weißes) Zinn und/oder Legierungen vorgenannter bzw. umfassen vorgenannte Materialien können umfasst sein. Durch diese Materialien lassen sich gewünschte Eigenschaften der Deformationselemente besonders einfach erzielen. Außerdem ist vorteilhafterweis eine einfache und kostengünstige Herstellungsweise gegeben.

Es ist besonders bevorzugt, dass das Deformationselement und/oder die Faserverstärkung Carbon-Gelege umfasst. Carbon-Gelege sind insbesondere Gelege umfassend Carbonfasern. Carbongelege werden bevorzugt unidirektional und/oder biaxial zur Herstellung hochfester Bauteile im Motorsport, bei der Erzeugung von Windenergie, im Sportgerätebau sowie im Boots-, Schiffs- und/oder Flugzeugbau verwendet und umfassen insbesondere gestreckte (lange und/oder ausgerichtete) Fasern, welche in verschiedenen Lagen mit unterschiedlichen Faserausrichtungen abgelegt werden und z. B. mit einem Nähfaden verbunden werden. Dabei können Zug- und/oder Druckkräfte überraschend optimal durch die Fasern aufgenommen und/oder weitergeleitet werden. Gelege sind besonders bevorzugt für eine großindustrielle Herstellung, wo sie besonders einfach und kostensparend eingesetzt werden kann. Dabei kann z. B. bei der Herstellung ein sogenannter Autoklav verwendet werden, welcher sich bei großindustrieller Herstellung besonders rechnet und durch die Verarbeitung der Gewebe unter Vakuumbedingungen Lufteinschlüsse verhindert und so die Qualität hebt und Wartungen minimiert.

(Textile) Gelege umfassen insbesondere eine oder mehrere Lagen von Fasern in gleicher oder unterschiedlicher Orientierung (unidirektionale oder multiaxiale Gelege). Bevorzugt können die Fasern durch Fäden verbunden sein (auch Wirkfäden genannt). Durch die Ausrichtung der Fasern in gestreckter und/oder belastungsgerechter Form können Strukturdehnungen vermieden werden. Dadurch sind die mechanische Eigenschaften stark verbessert. Es können bevorzugt folgende Sticharten verwendet werden: Franse, versetzte Franse, Trikot, Doppeltrikot und/oder Hexagonalstich. Diese Gelege sind besonders praktisch in der Verarbeitung.

Dem durchschnittlichen Fachmann ist bekannt, dass der Begriff einer "Lage" im Zusammenhang mit dem schichtweisen Aufbau von textilen Gelegen oder Geweben als ein Synonym für den Begriff einer "Schicht" zu verstehen ist. Im gesamten Dokument sind daher beide Begriffe gegeneinander in diesem Kontext austauschbar.

Demnach umfasst ein Gelege bevorzugt mehrere Lagen von Fasern in gleicher oder unterschiedlicher Orientierung (unidirektionale oder multiaxiale Gelege) **oder** anders ausgedrückt umfasst ein Gelege besonders bevorzugt mehrere **Schichten** von Fasern in gleicher oder unterschiedlicher Orientierung (unidirektionale oder multiaxiale Gelege).

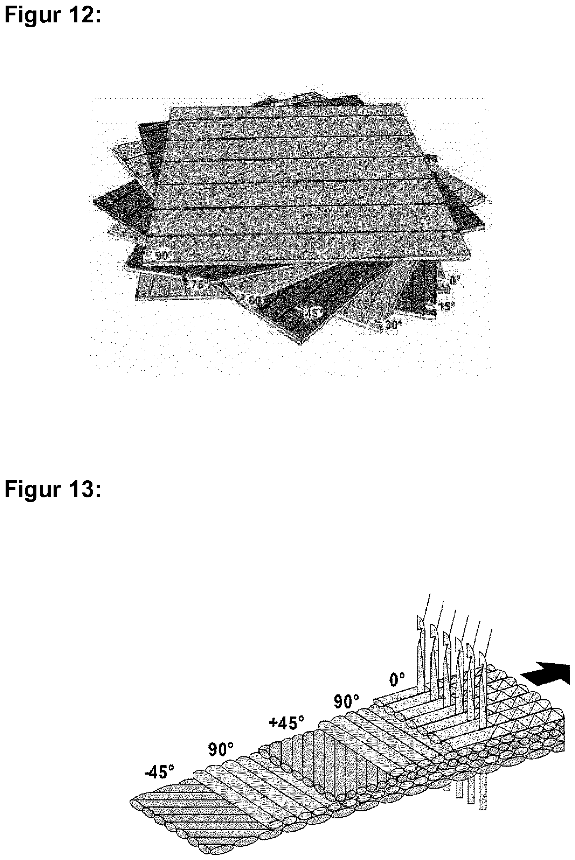

Die Faserorientierung bzw. -ausrichtung in einem Gelege richtet sich bevorzugt nach der Produktionsrichtung des Geleges. Die Produktionsrichtung eines Geleges definiert dabei bevorzugt eine 0°-Richtung. In Abhängigkeit dieser Richtung ist die Faserorientierung der jeweiligen Schichten eines Geleges angeordnet. Die Ausrichtung der Faserorientierung der einzelnen Schichten wird mit einem Winkel zur Produktionsrichtung angegeben (s. Figur 13).

Bevorzugt liegen einschichtige, einaxiale Gelege vor, in denen die Faserorientierung sowohl in 0° -, als auch in 90° - Richtung ausgerichtet ist. Bevorzugt werden diese Gelege unmittelbar mit Matten oder Vliesen verfestigt. Weiterhin liegen auch besonders bevorzugt zweischichtige biaxiale Gelege vor. Die Ausrichtung der Faser liegt hier bevorzugt in 0° und 90° (bspw. aber auch +45°/-45°) zur Produktionsrichtung vor. Stärker bevorzugt ist die Verwendung von mehrschichtigen, multiaxialen Gelege, mit einer Faserausrichtung von z. B. 90°, -45°, 0°, +45° (vierschichtig). Insbesondere bevorzugt werden auch Gelege mit andere Orientierungsverhältnisse. Dadurch kann das Gelege vorteilhaft an die speziellen Belastungsverhältnisse der Sicherheitskabine angepasst werden und diesen standhalten. Durch die geringe Dicke einer Schicht sind mehrlagigen, multiaxialen Gelege besonders vorteilhaft gewichts- und platzsparend.

Unidirektionale Gelege umfassen bevorzugt Carbonfasern und Glasfasern. Eine Vernähung kann z. B. ein Polyestergarn umfassen bzw. durch eine ein- oder doppelseitige Gitterfixierung erfolgen. Es können unter Abwägung des Flächengewichts und/oder der Kosten mittlere bis hohe Filamentzahlen (Filamentanzahlen) umfasst sein. Solche Gelege sind überraschend vielfältig. Es können bevorzugt folgende Eigenschaften umfasst sein: Faserorientierung: 0 , +-45 °, 90 °; Gewicht Faserlage (g/m²): 154,, 226, 307, 451, 462, 614; Flächengewicht gesamt (g /m²): 80, 100, 125, 150, 179, 178, 181, 200, 253, 300, 332, 331, 338, 478, 492, 500, 600, 646; verschiedene Bindertypen, z. B. E214; Vernäht und/oder fixiert durch ein- und/oder zweiseitiges Gitter.

Bevorzugt werden biaxiale Carbonfaser-Gelege verwendet, umfassend Fasern (insbesondere Rovings) mit zwei Lagen mit zwei Orientierungen, z. B. ±45°. Durch die umfassten gestreckten Fasern weisen Gelege überraschend verbesserte mechanische Eigenschaften auf. Insbesondere bei Verwendung hochwertiger Carbonfasern mit z. B. 50.000 (50 k) Filamenten werden die gewünschten Sicherheitseigenschaften synergistisch verbessert. Solche Gelege können überraschend einfach bei der Herstellung gehandelt werden, sind insbesondere einfach durch ein Harz infusionierbar sowie verbessert drapierbar, dabei überraschend leicht, steif und fest. Diese Eigenschaften können mit einem überraschend geringen Material- und Herstellungseinsatz erreicht werden. Es können bevorzugt folgende Eigenschaften umfasst sein: Faserorientierung: +/-45 °; Gewicht Faserlage (g /m²): 154 pro Lage/Richtung, 154/307 (verschiedene Richtungen), 200 pro Lage, 300 pro Lage; Flächengewicht gesamt (g /m²): 318, 471, 415, 615; vernäht (E214).

In einer weiteren Ausgestaltung der Erfindung ist die Sicherheitskabine dadurch gekennzeichnet, dass das Kunststoffgewebe und/oder -gelege ein Hybridgewebe und/oder -gelege ist, welches eine gemischte Faserverstärkung aus Kohlenstofffasern und Aramidfasern umfasst. Hybridgewebe und/oder-gelege weisen besonders vorteilhafte Materialeigenschaften in Bezug auf Elastizitätsmodul, Bruchdehnung und Zug- bzw. Druckfestigkeit.

In einer weiteren bevorzugten Ausführungsform ist die Sicherheitskabine dadurch gekennzeichnet, dass die Faserverstärkung des Hybridgewebes und/oder -geleges mit einem Gewichtsanteil zwischen 40 % und 60 % und insbesondere etwa 50 % Aramidfasern umfasst, wobei darüber hinaus Kohlenstofffasern umfasst sind und wobei sich die Gewichtsanteile auf das Gesamtgewicht der Faserverstärkung beziehen. Insbesondere bei dieser Zusammensetzung hat sich überraschenderweise gezeigt, dass die Bearbeitung und/oder die Weiterbehandlung des Hybridgewebes und/oder-geleges in einfach Weise ermöglicht wird. Zudem sind die Materialeigenschaften in dieser Zusammensetzung überraschend vorteilhaft bei einem Optimum in Bezug auf Elastizitätsmodul, Bruchdehnung und Zug- bzw. Druckfestigkeit.

In einer weiteren Ausführungsform umfasst die Faserverstärkung des Hybridgewebes und/odergeleges bevorzugt einen Volumenanteil zwischen 40 % und 60 % und insbesondere etwa 50 % Aramidfasern, wobei darüber hinaus Kohlenstofffasern umfasst sind und wobei sich die Volumenanteile auf das Gesamtvolumen der Faserverstärkung beziehen.

Erfindungsgemäß umfassen die Wände der Sicherheitskabine bevorzugt mindestens eine Lage eines faserverstärkten Kunststoffgewebes und/oder -geleges. In diesem Kontext können allgemein verschiedene Gelege und/oder Gewebe miteinander verbunden (laminiert) werden, womit sie zusammengefasst als mehrere Lagen von Gelegen definiert sind. Der Ausdruck "Mindestens eine Lage eines faserverstärkten Kunststoffgewebes und/oder -geleges" ist gleichbedeutend zu "mindestens ein [im Sinne der Anzahl] faserverstärktes Kunststoffgewebe und/oder -gelege". Dies gilt entsprechend für alle Ausführungen im gesamten Dokument.

In einer weiteren bevorzugten Ausführungsform der Erfindung ist die Sicherheitskabine dadurch gekennzeichnet, dass in der Lage im vorderen Bereich der Kabine ein Hybridgewebe und/oder - gelege enthalten ist, welches
i. vier Schichten umfasst, wobei sich die Faserorientierungen der aufeinanderfolgenden Schichten jeweils um einen Winkel von 30°unterscheiden oder
ii. sechs Schichten umfasst, wobei sich die Faserorientierungen der aufeinanderfolgenden Schichten jeweils um einen Winkel von 18°unterscheiden oder
iii. sieben Schichten umfasst, wobei sich die Faserorientierungen der aufeinanderfolgenden Schichten jeweils um einen Winkel 15° unterscheiden.

Eine solche Ausgestaltung bewirkt vorteilhaft eine besonders überraschend hohe Stabilität des vorderen Bereichs der Kabine.

In einer weiteren bevorzugten Ausführungsform der Erfindung ist die Sicherheitskabine dadurch gekennzeichnet, dass in der Lage im vorderen Bereich der Kabine ein Hybridgewebe und/oder - gelege enthalten ist, welches
i. bevorzugt 1 bis 10, besonders bevorzugt 2 bis 6 und insbesondere 2 Schichten umfasst, wobei sich die Faserorientierungen der aufeinanderfolgenden Schichten jeweils um einen Winkel von etwa 90°unterscheiden oder
ii. bevorzugt 1 bis 12, besonders bevorzugt 3 bis 9 und insbesondere 3 Schichten umfasst, wobei sich die Faserorientierungen der aufeinanderfolgenden Schichten jeweils um einen Winkel von etwa 45°unterscheiden.

In einer bevorzugten Ausführungsform umfasst die Lage im vorderen Bereich der Kabine, in der ein Hybridgewebe und/oder -gelege enthalten ist
i. bevorzugt 2 bis 12, besonders bevorzugt 3 bis 8 und insbesondere 4 Schichten umfasst, wobei sich die Faserorientierungen der aufeinanderfolgenden Schichten jeweils um einen Winkel von etwa 30°unterscheiden oder
ii. bevorzugt 2 bis 12, besonders bevorzugt 4 bis 8 und insbesondere 6 Schichten umfasst, wobei sich die Faserorientierungen der aufeinanderfolgenden Schichten jeweils um einen Winkel von etwa 18°unterscheiden oder
iii. bevorzugt 2 bis 14, besonders bevorzugt 4 bis 9 und insbesondere 7 Schichten umfasst, wobei sich die Faserorientierungen der aufeinanderfolgenden Schichten jeweils um einen Winkel etwa 15° unterscheiden.

Erfindungsgemäß umfasst ein faserverstärktes Kunststoffgewebe und/oder-gelege bzw. eine Lage eines faserverstärkten Kunststoffgewebes und/oder -geleges bevorzugt 4 Schichten, wobei bevorzugt die Faserorientierung einer ersten Schicht einen Winkel von 0°, einer zweiten Schicht einen Winkel von 30°, einer dritten Schicht einen Winkel von 60° und einer vierten Schicht einen Winkel von 90° zur Produktionsrichtung des Gewebes und/oder Geleges aufweist.

In einer weiteren bevorzugten Variante umfasst ein faserverstärktes Kunststoffgewebe und/odergelege bzw. eine Lage eines faserverstärkten Kunststoffgewebes und/oder-geleges bevorzugt sechs Schichten, wobei bevorzugt die Faserorientierung einer ersten Schicht einen Winkel von 0°, einer zweiten Schicht einen Winkel von 18°, einer dritten Schicht einen Winkel von 36°, einer vierten Schicht einen Winkel von 54°, einer fünften Schicht einen Winkel von 72° und einer sechsten Schicht einen Winkel von 90° zur Produktionsrichtung des Gewebes und/oder Geleges aufweist.

In einer weiteren bevorzugten Variante umfasst ein faserverstärktes Kunststoffgewebe und/odergelege bzw. eine Lage eines faserverstärkten Kunststoffgewebes und/oder -geleges bevorzugt sieben Schichten, wobei bevorzugt die Faserorientierung einer ersten Schicht einen Winkel von 0°, einer zweiten Schicht einen Winkel von 15°, einer dritten Schicht einen Winkel von 30°, einer vierten Schicht einen Winkel von 45°, einer fünften Schicht einen Winkel von 60°, einer sechsten Schicht einen Winkel von 75° und einer siebten Schicht einen Winkel von 90° zur Produktionsrichtung des Gewebes und/oder Geleges aufweist.

In einer weiteren bevorzugten Ausführungsform der Erfindung ist die Sicherheitskabine dadurch gekennzeichnet, dass in der Lage im hinteren Bereich der Kabine ein Hybridgewebe und/odergelege enthalten ist, welches
i. zwei Schichten umfasst, wobei sich die Faserorientierungen der aufeinanderfolgenden Schichten jeweils um 90° unterscheiden oder
ii. drei Schichten umfasst, wobei sich die Faserorientierungen der aufeinanderfolgenden Schichten jeweils um Winkel 45° unterscheiden.

In einer bevorzugten Ausführungsform umfasst die Lage im hinteren Bereich der Kabine, in der ein Hybridgewebe und/oder -gelege enthalten ist
i. bevorzugt 1 bis 10, besonders bevorzugt 2 bis 6 und insbesondere 2 Schichten umfasst, wobei sich die Faserorientierungen der aufeinanderfolgenden Schichten jeweils um einen Winkel von etwa 90°unterscheiden oder
ii. bevorzugt 1 bis 12, besonders bevorzugt 3 bis 9 und insbesondere 3 Schichten umfasst, wobei sich die Faserorientierungen der aufeinanderfolgenden Schichten jeweils um einen Winkel von etwa 45°unterscheiden.

In einer bevorzugten Ausführungsform umfasst die Lage im hinteren Bereich der Kabine, in der ein Hybridgewebe und/oder -gelege enthalten ist
i. bevorzugt 2 bis 12, besonders bevorzugt 3 bis 8 und insbesondere 4 Schichten umfasst, wobei sich die Faserorientierungen der aufeinanderfolgenden Schichten jeweils um einen Winkel von etwa 30°unterscheiden oder
ii. bevorzugt 2 bis 12, besonders bevorzugt 4 bis 8 und insbesondere 6 Schichten umfasst, wobei sich die Faserorientierungen der aufeinanderfolgenden Schichten jeweils um einen Winkel von etwa 18°unterscheiden oder
iii. bevorzugt 2 bis 14, besonders bevorzugt 4 bis 9 und insbesondere 7 Schichten umfasst, wobei sich die Faserorientierungen der aufeinanderfolgenden Schichten jeweils um einen Winkel etwa 15° unterscheiden.

Eine solche Ausgestaltung bewirkt vorteilhaft eine hohe Stabilität des hinteren Bereichs der Kabine, wobei vorteilhaft Material in Bezug auf den vorderen Bereich eingespart wird und daher vorteilhaft Kosten gesenkt werden. Zudem nimmt der hintere Bereich insbesondere bei Auffahrunfällen (Unfälle, bei denen ein Fahrzeug dem Wohn- bzw. Reisemobil ins Heck fährt) die Funktion einer Knautschzone bzw. Deformationszone an, welche Aufprallenergie aufnehmen und umwandeln kann, so dass bei den Passagieren weniger kinetische Aufprallenergie ankommt. Die Passagiere sitzen bevorzugt im vorderen Bereich der Sicherheitskabine und/oder im Fahrerhaus.

Erfindungsgemäß umfasst ein faserverstärktes Kunststoffgewebe und/oder -gelege bzw. eine Lage eines faserverstärkten Kunststoffgewebes und/oder -geleges bevorzugt zwei Schichten, wobei bevorzugt die Faserorientierung einer ersten Schicht einen Winkel von 0° und einer zweiten Schicht einen Winkel von 90° zur Produktionsrichtung des Gewebes und/oder Geleges aufweist.

Alternativ umfasst ein faserverstärktes Kunststoffgewebe und/oder -gelege bzw. eine Lage eines faserverstärkten Kunststoffgewebes und/oder -geleges bevorzugt drei Schichten, wobei bevorzugt die Faserorientierung einer ersten Schicht einen Winkel von 0°, einer zweiten Schicht einen Winkel von 45° und einer dritten Schicht einen Winkel von 90° zur Produktionsrichtung des Gewebes und/oder Geleges aufweist.

Erfindungsgemäß wird bevorzugt ein mehrlagiges, multiaxiales Gelege (bevorzugt Hybridgelege), mit einer Faserausrichtung von z. B. 90°, -45°, 0°, +45° (vierschichtig) durch standardisierte biaxial Gelege (bevorzugt Hybridgelege) insbesondere mit einer Faserorientierung von 0° und 90° indirekt hergestellt. Die biaxialen Gelege werden dabei übereinander laminiert. Zwei übereinander laminierte 0°/90° Gelege ergeben dementsprechend ein 0°/ -45°/ 90°/ 45° Gelege. Dem Fachmann ist die Herstellung weitere mehrlagiger Gelege (bevorzugt Hybridgelege) durch das laminieren von standardisierten biaxial Hybridgelegen bekannt (s. auch Figur 12).

Dem durchschnittlichen Fachmann ist klar, dass alle in diesem Dokument genannten Winkel einen gewissen Toleranzbereich aufweisen können. Dementsprechend sind naheliegende Winkel mit einer Abweichung von bevorzugt +/- 10°, besonders bevorzugt von +/- 5° und stärker bevorzugt +/- 2° zu den genannten Winkeln ebenfalls umfasst.

In einer weiteren bevorzugten Ausführungsform der Erfindung ist die Sicherheitskabine dadurch gekennzeichnet, dass jede Schicht der Lage eine Dicke von etwa 0,3 mm aufweist. Dies ist in vorteilhafter Weise überraschend materialsparend und daher besonders wirtschaftlich.

Es können ebenso bevorzugt Carbon-Gewebe im Deformationselement bzw. der Faserverstärkung umfasst sein. Es können bevorzugt folgende Eigenschaften umfasst sein: Materialien und Eigenschaften: Carbon-Glas-Gewebe und/oder Carbon-Aramid-Gewebe in HAT (Hochfest) und/oder HM (Hochmodul); Flächengewicht (g /m²): 80, 95, 120, 135, 160, 170,175, 200, 205, 215, 245, 285, 300, 305, 365, 400, 410, 425, 500, 620, 665, 830; Garnfeinheit Kette/Schuss (tex): 70, 200, 400, 800, 1600, 225, 200, 200 Carbon/160 Aramid; Bindungstyp: Leinwand, Körper 2/2, 4/4 Satin 1/7. Der Vorteil von Carbon-Geweben ist das besonders niedrige Gewicht und der einfache Produktionsaufwand.

Es können bevorzugt ebenso schmale (Größenordnung bevorzugt cm) Gewebebänder vom Deformationselement und/oder dessen Faserverstärkung umfasst sein, bevorzugt mit folgenden Eigenschaften: unidirektional; Leinwandbindung, bevorzugt mit Bindekette/Glashilfskette; Flächengewicht (g /m²): 140, 200, 210, 270, 280, 285, 290, 330, 360, 365, 370; Breite (cm): 5, 6,5, 7, 7,5, 4,5, 2,5, 3,5, 10, 12, 16. Durch Gewebebänder kann eine besonders flexible Verstärkung und Erhöhung der Sicherheit, z. B. an besonders neuralgischen Stellen erreicht werden, wie. Z. B. in Eckbereichen der Sicherheitskabine.

Bevorzugt können Carbon-Vliese im Deformationselement bzw. der Faserverstärkung umfasst sein. Vliese aus Carbonfasern sind vorteilhaft sehr leicht verarbeitbar und eignen sich überraschend für eine Prepregherstellung. Isotrope Vliese umfassen bevorzugt gleichmäßig verteilte Fasern mit einer bevorzugten durchschnittlichen Faserlänge von etwa 40 mm. Diese sind besonders kostengünstig. Orientierte Vliese umfassen bevorzugt anisotrop ausgerichtete Fasern mit einer bevorzugten durchschnittlichen Faserlänge von etwa 60 mm. Orientierte Vliese können insbesondere in definierten Carbonfaser-Vlieskomplexen umfasst sein. Durch die Lagenstruktur und die Orientierung können die mechanischen Eigenschaften überraschend verbessert werden. Es können bevorzugt folgende Eigenschaften für ein Isotropes Carbonfaser-Vlies umfasst sein: Anteil Carbonfaser/Glasfaser/Polymerfaser (g /m²): 410/13/27 (= 450 Gesamt), 469/13,48 (= 530 Gesamt). Es können bevorzugt folgende Eigenschaften für ein Orientiertes Carbonfaser-Vlies umfasst sein: Anteil Carbonfaser/Glasfaser/Polymerfaser (g /m²): 75/9/12 (= 96 Gesamt).

Bevorzugte Eigenschaften eines Carbonfaser-Vlieskomplexes sind: Orientierung Vlieslagen: 0, +-45 °; Anteil Carbonfaser/Glasfaser/Polymerfaser (g /m²): 150/26/19 (= 205 Gesamt mit Binder), 300/35/57 (= 402 Gesamt mit Binder).

Bevorzugt können ebenso Carbonfaser-Nassvliese umfasst sein. Diese weisen bevorzugt folgende Eigenschaften auf: Flächengewicht (g /m²): 20, 30; Faserlänge (mm): 6/12, Reißfestigkeit: N/15 mm; Binderart: Polyester styrollöslich, Polyvinylalkohol. Nassvliese sind besonders einfach zu verarbeiten und ressourcenschonend.

Bei allen Faserverstärkungen können bevorzugt recycelte Fasern umfasst sein. Besonders vorteilhaft und überaus überraschend hat sich gezeigt, dass hierbei neben der Umweltschonung eine hohe Stabilität der Verstärkung erzielt wird.

Eine Sicherheitskabine umfassend faserverstärkte Deformationselemente, bevorzugt aus CFK, kann beispielhaft wie folgt hergestellt werden: es wird ein kohlenstofffaserverstärkter Kunststoff (CFK) verwendet umfassend Karbonfasern umfassend eine thermoplastische Textilfaser aus Polyacrylnitril. Diese wird bevorzugt aufgespalten zu einer dünnen Faser (ca. 7 Mikrometer {µm}) umfassend im Wesentlichen reinen Kohlenstoff. Etwa 50.000 Fasern werden bevorzugt zu einem Roving zusammengefasst. Die Rovings werden dann bevorzugt weiterverarbeitet zu textilen Gelegen. Dabei können insbesondere mehrere Lagen Gelege verschiedener Ausrichtungen in unterschiedlichen Orientierungen in Stapeln bzw. Stacks umfasst sein, welche bevorzugt zugeschnitten sind/werden. Diese Stacks können nun von Teile der Sicherheitskabine (Deformationselemente) umfasst sein. Dabei kann bevorzugt durch Zuführung von Wärme eine weitere individuelle Formgebung ermöglicht und/oder die Stabilität erhöht werden. Ein Zusammenfügen mehrerer der vorgeformten, bevorzugt Preform-Rohlinge genannten Teile zu einem größeren Bauteil ist bevorzugt. Dadurch kann ein Aufwand bei der Herstellung großflächige Bauteile der Sicherheitskabine überraschend verbessert werden. In einem nächsten Schritt wird bevorzugt durch ein RTM-Verfahren (Resin Transfer Moulding) Harz unter hohen Druck eingebracht bzw. injiziert (Druck bevorzugt mehr als 1 bar, stärker bevorzugt mehr als 10 bar und insbesondere 50 bar oder mehr), z. B. in einer geeigneten Form. Dadurch kann die Steifigkeit überraschend verbessert werden. Die entstandenen CFK Elemente werden dann bevorzugt zu einer Sicherheitskabine bzw. einer von dieser umfassten Grundstruktur umfassend Deformationselemente zusammengefügt. Es können vorteilhafterweise durch die beschriebene Herstellung komplexer und bevorzugt großflächiger Teile mit einer verbesserten geometrischen Integration überraschend viele Bauteile und somit Gewicht im Vergleich zu einer herkömmlichen Kabine eines Wohn- bzw. Reisemobils eingespart werden. Bevorzugt werden die CFK Elemente durch Kleben gefügt, wodurch die Festigkeit verbessert und Gewicht eingespart werden kann. Bei der Herstellung der Sicherheitskabine wie beschrieben kann Gewicht gespart werden (bei erhöhter Sicherheit) und somit Ressourcen geschont werden. Ebenso sind die verwendeten Elemente bevorzugt korrosionsfrei, wodurch die Sicherheitskabine besonders wartungsarm und langlebig ist. Auch sind die Elemente bevorzugt besonders unempfindlich gegenüber leichten Stößen. Die Elemente können bevorzugt weiter lackiert werden, um den äußeren Bereich der Kabine zu bilden und die Ästhetik zu heben. Dabei kann vorteilhafterweise aufgrund des nicht benötigten Korrosionsschutzes überraschend weniger Lack verwendet werden und dieser energiesparender aufgetragen werden. Dies schont Umwelt und Ressourcen.

Generell wird die Anzahl der bevorzugten Lagen bzw. Schichten einer Faserverstärkung mithilfe der sogenannten Laminattheorie berechnet. So kann eine bevorzugte Festigkeit und eine Umwandlung von kinetischer Energie durch ein faserverstärktes Deformationselement besonders einfach berechnet werden.

Bevorzugt weisen einzelne Lagen bzw. Schichten dabei eine Dicke < 1mm auf. Somit kann Gewicht gespart werden. Besonders bevorzugt ist die Dicke einzelner Lagen bzw. Schichten in etwa 0,2mm. Solche Lagen sind besonders platzsparend und ökonomisch.

In einer bevorzugten Ausführungsform ist die Sicherheitskabine dadurch gekennzeichnet, dass die Faserverstärkung ausgesucht ist aus der Gruppe umfassend Kohlenstofffasern, Aramidfasern und/oder Glasfasern. Diese sind besonders wartungsarm, robust und leicht. Elemente mit solchen Faserverstärkungen sind bevorzugt 3 - 6 -mal, insbesondere 5,4-mal stabiler als ein Stahlelement gleichen Gewichts. Insbesondere ist die Feinstaubentwicklung bei der Herstellung und Verwendung von CFK unproblematisch, die Gesundheit der beteiligten Arbeiter und die Umwelt werden geschont.

In einer bevorzugten Ausführungsform wird für eine Matrixbildung für die Faserverstärkungen für einen faserverstärkten Kunststoff ein Polyesterharz verwendet. Dieser ist besonders kostengünstig. Insbesondere wird Epoxidharz verwendet, dieser ist besonders leistungsstark und bildet verbesserte Bauteile.

In einer bevorzugten Ausführungsform umfasst die Faserverstärkung Faserrovings, wobei die Faserrovings eine Filamentzahl zwischen 1.000 und 50.000 und/oder eine Feinheit zwischen 30 und 3.500 tex, bevorzugt zwischen 40 und 400 tex aufweisen. Auf diese Weise können die bevorzugten Sicherheitseigenschaften besonders einfach erreicht werden.

In einer weiteren bevorzugten Ausführungsform der Sicherheitskabine kann das Deformationselement glasfaserverstärkten Kunststoff umfassen. Dieser ist besonders kostengünstig.

In einer weiteren bevorzugten Ausführungsform der Erfindung umfasst das Deformationselement eine gemischte Faserverstärkung mit einem Gewichtsanteil von Aramidfasern zwischen 10 %- 90 %, bevorzugt zwischen 20 % - 80 %, besonders bevorzugt zwischen 30 % - 70 %, stärker bevorzugt zwischen 40 % und 60 % und insbesondere etwa 50 %, wobei darüber hinaus Kohlenstofffasern umfasst sind. Es war äußerst überraschend, dass ein solches Deformationselement verbesserte Sicherheitseigenschaften aufweist, ohne zusätzliches Gewicht zu verursachen. Dadurch können Ressourcen geschont werden, außerdem ergibt sich in Kombination mit der ebenfalls überraschenden Wartungsfreiheit eine Kostenersparnis.

In einer weiteren bevorzugten Ausführungsform umfasst das Deformationselement ein Carbon-Gelege. Dadurch kann die Qualität gehoben werden.

In einer weiteren bevorzugten Ausführungsform der Erfindung umfasst der äußere Bereich der Sicherheitskabine mindestens ein Deformationselement umfassend eine Lage eines kohlenstoff- und/oder aramidfaserverstärkten Kunststoffgewebes und/oder -geleges. So können die hervorragenden Sicherheits- und Gewichtseigenschaften dieser Elemente besonders einfach genutzt werden.

In dieser und den folgenden genannten Ausführungsformen kann eine Lage eines kohlenstoff- und/oder aramidfaserverstärkten Kunststoffgewebes bevorzugt auch durch eine Lage umfassend einen Metallschaum ersetzt sein bzw. eine solche umfassen. Ist im Folgenden z. B. von 3 - 8 Lagen eines kohlenstoff- und/oder aramidfaserverstärkten Kunststoffgewebes die Rede, können ebenso 3 - 8 Lagen eines Metallschaumes gemeint sein bzw. gemischte Lagen, z. B. können bei einer Nennung von 8 Lagen eines kohlenstoff- und/oder aramidfaserverstärkten Kunststoffgewebes 3 Lagen eines kohlenstoff- und/oder aramidfaserverstärkten Kunststoffgewebes und 5 Lagen umfassend Metallschaum gemeint sein.

Gleiches gilt bevorzugt für die Lage eines glasfaserverstärkten Kunststoffes, welche bevorzugt analog auch eine Lage eines Metallschaumes umfassen kann.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und/oder -geleges. So können überraschend flexible Deformationselemente gebildet werden. Bevorzugt ist dabei insbesondere, dass verschiedene Lagen mindestens zwei verschiedene Orientierungen der Fasern und/oder Faserrovings umfassen. So kann die Sicherheit überraschend gesteigert werden.

In einer weiteren bevorzugten Ausführungsform der Erfindung umfasst der äußere Bereich der Sicherheitskabine mindestens ein Deformationselement umfassend mindestens eine Lage glasfaserverstärkten Kunststoffs (GFK) mit einer Dicke zwischen 1 und 10 mm, bevorzugt zwischen 1 und 5 mm. Bevorzugt sind bei den bevorzugten Dicken mehr als eine Lage GFK umfasst. Dadurch kann bevorzugt nicht nur die Sicherheit auch gegenüber Bagatellunfällen durch Bereitstellung einer größeren Knautschzone verbessert werden, sondern überraschenderweise ebenfalls der Komfort der Sicherheitskabine durch bessere Schall- bzw. thermische Dämmung. Der Fachmann weiß, dass es in den Eckbereichen der Kabine, in denen bevorzugt faserverstärkte Lagen zur Verbesserung der Stabilität und/oder Festigkeit überlappen, zu erhöhten Dicken als den bevorzugten kommen kann.

In einer bevorzugten Ausführungsform ist die Sicherheitskabine dadurch gekennzeichnet, dass die Wände der Sicherheitskabine mindestens zwei Lagen eines faserverstärkten Kunststoffgewebes und/oder -geleges umfassen, wobei zwischen den Lagen bevorzugt eine Schaumstofflage positioniert ist. Vorteilhaft ist dadurch die Dämpfungseigenschaft sowie die Stabilität der Sicherheitskabine verbessert. Überdies wirkt sich die Schaumstoffschicht positiv auf die Wärmedämmung der Sicherheitskabine aus.

In einer bevorzugten Ausführungsform handelt es sich bei dem faserverstärkten Kunststoffgewebe und/oder -gelege um ein Hybridgewebe und/oder -gelege.

Erfindungsgemäß sind insbesondere die Außenwände der Sicherheitskabine im Querschnitt bevorzugt in drei Abschnitte unterteilt: Eine im Bezug auf die Sicherheitskabine außenliegende Decklage, eine im Bezug auf die Sicherheitskabine innenliegende Decklage und eine zwischen beiden Decklagen angeordnete Hartschaumschicht. Die Decklage umfasst mindestens eine Lage eines Hybridgewebes und/oder -geleges, welches mehrere Schichten umfasst (oder gleichbedeutsam mindestens ein Gelege, welches mehrere Schichten umfasst).

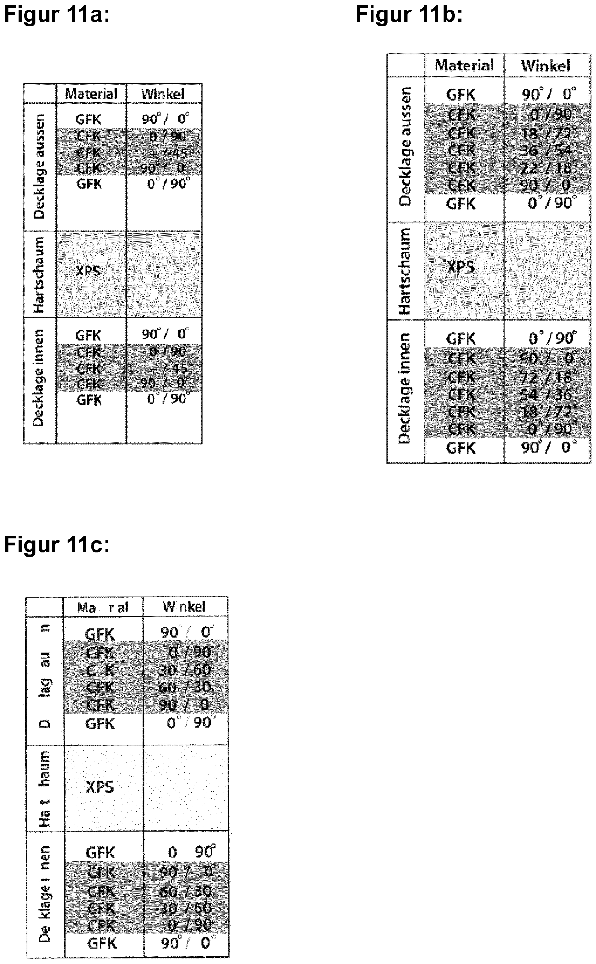

In einer weiteren Ausführungsform der Erfindung umfasst die Decklage zudem besonders bevorzugt zwei Schichten GFK. Die beiden Schichten des GFK's umschließen jeweils von einer Seite bevorzugt das Hybridgewebe und/oder -gelege in der Decklage. Die Faserorientierung des GFK's weist bevorzugt einen Winkel von 0° und/oder 90° in Bezug auf die Produktionsrichtung und/oder besonders bevorzugt in Bezug auf die Faserorientierung der anliegenden Schicht des Hybridgewebes und/oder -geleges in der Decklage auf (s. auch Figur 11a, 11b, 11c).

In einigen Ausführungen in diesem Dokument wird die Decklage bevorzugt auch kurz mit Lage umschrieben. Der Fachmann kann dabei aus dem Zusammenhang erschließen, ob es sich um eine Schicht eines Gewebes und/oder Geleges oder aber um ein Gewebe bzw. Gelege als Ganzes und/oder ob es sich um mehrere zusammengesetzte Gewebe bzw. Gelege (Decklage) handelt.

In einer weiteren bevorzugten Ausführungsform der Erfindung ist die Sicherheitskabine dadurch gekennzeichnet, dass in der Lage zwei äußere Schichten aus glasfaserverstärktem Kunststoff umfasst sind, welche die Lage an zwei gegenüberliegenden Außenflächen abschließen, wobei sich die Faserorientierung jeder äußeren Schicht bevorzugt um 90° von der darunterliegenden Schicht und/oder der anderen äußeren Schicht unterscheidet. Die Schichten des glasfaserverstärkten Kunststoffs verbessern vorteilhaft die Stabilität der Wände (s. Fig 11a,11b,11c).

In einer weiteren bevorzugten Ausführungsform umfasst die Decklage bevorzugt 1 bis 10 Schichten GFK, besonders bevorzugt 1 - 5 Schichten und insbesondere 2 Schichten.

In einer weiteren bevorzugten Ausführungsform umfasst die Decklage bevorzugt mehre Lagen eines GFK Geleges und/oder Gewebes, umfassend bevorzugt 1 bis 10 Schichten, besonders bevorzugt 1 - 5 Schichten und insbesondere 2 Schichten.

In einer weiteren bevorzugten Ausführungsform umfasst die Decklage bevorzugt 1-10 Lagen eines GFK Geleges und/oder Gewebes, besonders bevorzugt 2 - 5 und insbesondere 2 Lagen.

Ein äußerer Bereich kann bevorzugt auch Metallschaum anstelle des außen bevorzugten GFK umfassen, Neben einer besonderen Wirkung für die Sicherheit, auch für am Unfall beteiligte Dritte, kann so auch eine besondere ästhetische Wirkung erzielt werden.

In einer weiteren bevorzugten Ausführungsform der Erfindung umfasst ein vorderer (Passagier-) Bereich der Kabine 2 bis 5-mal so viele Lagen eines kohlenstoff- und/oder aramidfaserverstärkten Kunststoffgewebes und/oder -geleges wie ein hinterer Bereich, wobei bevorzugt ein vorderer Bereich 2 -10 Lagen, insbesondere 5 Lagen und ein hinterer Bereich 1 - 2 Lagen, insbesondere 2 Lagen eines kohlenstoff- und/oder aramidfaserverstärkten Kunststoffgewebes und/oder -geleges umfasst. In einem vorderen Bereich der Kabine halten sich bevorzugt während der Fahrt die Passagiere auf, dort sind insbesondere die Sitzplätze installiert. In einem hinteren Bereich ist bevorzugt die funktionelle Ausstattung des Wohn- bzw. Reisemobils, insbesondere Bad und/oder Küche umfasst. Es ist dabei vorteilhaft, den hinteren Bereich dabei fest bzw. stabil zu konstruieren, jedoch weniger als einen vorderen Passagierbereich, so dass der hintere Bereich, insbesondere bei Auffahrunfällen eine Knautschzone bzw. "Opferanode" bildet, welche Aufprallenergie aufnehmen und umwandeln kann, so dass bei den Passagieren weniger kinetische Aufprallenergie ankommt. Diese sind dabei selber durch die Verwendung mehrerer Lagen wie in einem "Sicherheitskäfig" geschützt. Dabei kommt es neben den vorteilhaften Sicherheitseigenschaften vorteilhafterweise auch zu einer Gewichtsersparnis der Sicherheitskabine, die Ressourcen und Kosten spart.

In einer weiteren bevorzugten Ausführungsform der Erfindung umfasst ein vorderer (Passagier-) Bereich der Kabine ein Hybridgewebe und/oder -gelege mit 2 bis 5-mal so vielen Schichten wie ein Hybridgewebe und/oder -gelege im hinteren Bereich (Zwischenwand bis Fahrzeugheck) der Kabine, wobei ein Hybridgewebe und/oder -gelege im vorderen Bereich (Fahrzeugsäule bis Zwischenwand) bevorzugt 1 - 9 Schichten, besonders bevorzugt 4 - 7 Schichten, insbesondere bevorzugt 5 Schichten und im hinteren Bereich bevorzugt 1 - 5 Schichten, insbesondere bevorzugt 2 Schichten umfasst.

In einer weiteren bevorzugten Ausführungsform der Erfindung umfasst der äußere Bereich der Sicherheitskabine einen Schaumstoff. Ein Schaumstoff kann z. B ein extrudiertes Polystyrol in Form eines Hartschaums sein, aber auch andere schäumende Materialien umfassen, bspw. Polyole und Polyisocyanate, aus denen in einer Polyadditionsreaktion Schaumstoff aus Polyurethane (PUR) entsteht. Es war überraschend, dass durch die Verwendung von Schaumstoff in dem äußeren Bereich einer Sicherheitskabine nicht durch deren Komforteigenschaften durch thermische und/oder Schalldämmung verbessert werden konnte, sondern auch die Sicherheitseigenschaften, insbesondere durch Bereitstellung einer Knautschzone und/oder einer Schicht, welche die Energie eines Aufpralls bei einem Unfall umwandeln kann in für Passagiere ungefährlichere Energieformen.

In einer weiteren bevorzugten Ausführungsform der Erfindung ist die Sicherheitskabine dadurch gekennzeichnet, dass die Wände der Sicherheitskabine mindestens einen Schaumstoff, bevorzugt einen Hartschaum, insbesondere Extrudierten Polystyrol-Hartschaum (XPS) umfassen. Polystyrol-Hartschaum (XPS) ist vorteilhaft extrem fest und verfügt über eine hohe Formbeständigkeit.

In einer bevorzugten Ausgestaltung ist der Erfindung ist der Hartschaum zwischen der innenliegenden Decklage und der außenliegenden Decklage angeordnet. Der Hartschaum weist insbesondere eine Schichtdicke von bevorzugt 10 mm bis 60 mm auf, besonders bevorzugt eine Schichtdicke von 20 mm bis 50 mm, stärker bevorzugt von 25 mm bis 35 mm und insbesondere von etwa 30 mm auf.

In einer weiteren bevorzugten Ausführungsform ist die Sicherheitskabine dadurch gekennzeichnet, dass die Schaumstofflage einen Hartschaumstoff umfasst und eine Dicke von etwa 30 mm aufweist. Überraschenderweise hat insbesondere die Dicke von etwa 30 mm zu einer besonders guten Kombination aus stabilen Wandaufbau, sehr guter Wärmeisolation der Sicherheitskabine und Wirtschaftlichkeit geführt.

In einer weiteren bevorzugten Ausführungsform ist die Sicherheitskabine dadurch gekennzeichnet, dass die zwei Lagen des faserverstärkten Kunststoffgewebes und/oder -geleges einen bezogen auf die Faserorientierung symmetrischen Schichtenaufbau zu einer zwischen den Lagen liegenden Symmetrieebene aufweisen.

Erfindungsgemäß erstreckt sich die Symmetrieebene entlang der Längsachse einer Wand.

Der symmetrische Schichtenaufbau bezogen auf die Faserorientierung der Lagen im Querschnitt einer Wand ist bevorzugt dadurch ausgestaltet, dass die Faserorientierungen der jeweiligen Schichten eines ersten faserverstärkten Kunststoffgewebes und/oder -geleges spiegelverkehrt zu den Faserorientierungen der jeweiligen Schichten eines zweiten faserverstärkten Kunststoffgewebes und/oder -geleges vorliegen. Die Symmetrieebene entspricht daher bevorzugt einer Spiegelebene (s. Fig. 11a, 11b, 11c). Überraschenderweise hat dies zu einer erhöhten Stabilität der Wand und zu besseren Ergebnissen in simulierten Unfallvorgängen geführt.

In einer bevorzugten Ausführungsform der Erfindung wird ein faserverstärkter Kunststoff (bevorzugt ein Deformationselement) im Bereich einer Fahrzeugsäule der Sicherheitskabine und/oder des Wohn- bzw. Reisemobils eingebracht, insbesondere im Bereich einer A-, B-, C- und/oder D-Säule. So kann die Stabilität überraschend effektiv erhöht werden.

In einer bevorzugten Ausführungsform umfasst das mindestens eine Deformationselement mindestens ein stabilisierendes Winkelelement, bevorzugt in einem Eckbereich der Sicherheitskabine. Ein Winkelelement kann z.B. mindestens zwei flächige Elemente umfassen, welche in einem Winkel zueinander stehen. Ein Winkelelement kann ebenso bevorzugt ein Dreieck umfassen, welches z. B. im Inneren der Kabine in eine rechtwinklige Ecke dieser zu Stabilisierungszwecken eingefügt wird, wobei bspw. zwei Seiten des Dreiecks an den die Ecke bildenden Innenflächen der Kabine anliegen und diese beiden Flächen dadurch stabilisieren. Es können ebenso andere geeignete, mehreckige Formen verwendet werden (Viereck, Fünfeck, Sechseck, Kreisausschnitt, etc.), welche sich insbesondere zur Stabilisierung einer Kabinenecke eignen. Das Winkelelement und insbesondere der Winkel können bevorzugt geometrischen Gegebenheiten des Aufbaus/der Kabine des Wohn- bzw. Reisemobils angepasst sein, um an geeigneter Stelle eingebracht vorzuliegen. Solche Winkelelemente können z. B. in den Ecken der Kabine vorhanden sein, um die Stabilität und die Sicherheitseigenschaften entscheiden zu verbessern. Sie können jedoch auch in anderen geeigneten Bereichen bevorzugt vorliegen. Dabei war es überraschend, dass insbesondere solche Winkelelemente die Stabilität und Sicherheit in einem Ausmaß erhöhen, welches allein durch die Eigenschaften des Winkelelements selber nicht zu erwarten war (synergistisch). Es hat sich ebenso überraschenderweise herausgestellt, dass insbesondere Winkelelemente in einem Eckbereich der Sicherheitskabine die (Unfall-) Sicherheit (synergistisch) erhöhen.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und/oder -geleges und mindestens eine Lage glasfaserverstärkten Kunststoffs mit einer Dicke zwischen 1 und 10 mm, bevorzugt zwischen 1 und 5 mm. Durch diese Kombination aus Lagen verschiedener Glasfaserverstärkungen ergeben sich bezüglich der Stabilität und Umwandlungsfähigkeit, also bezüglich der Sicherheit synergistische Effekte aus den jeweiligen Sicherheitseffekten der verschiedenen Gewebe- und/oder Gelegearten.

In einer weiteren bevorzugten Ausführungsform der Erfindung umfasst der äußere Bereich der Sicherheitskabine mindestens ein Deformationselement umfassend mindestens ein kohlenstoff- und/oder aramidfaserverstärkten Kunststoffgewebes und/oder -geleges, welches zwischen 1 und 20, bevorzugt 3 - 8 Lagen bzw. Schichten umfasst, und mindestens eine Lage glasfaserverstärkten Kunststoffs mit einer Dicke zwischen 0,1 und 5 mm, bevorzugt zwischen 0,2 und 0,5 mm. Diese Ausführungsform zeigt neben der geringen Kosten und dem geringen Gewicht überraschenderweise sehr gute Eigenschaften im Hinblick auf die Stabilität.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und/oder -geleges und einen Schaumstoff. Es war überraschend, dass durch die Verwendung eines Schaumstoffs fehlerhafte Bereiche des Gewebes bzw. Geleges kompensiert und somit Fehler behoben werden konnten

In einer weiteren bevorzugten Ausführungsform der Erfindung umfasst der äußere Bereich der Sicherheitskabine mindestens ein Deformationselement umfassend mindestens ein kohlenstoff- und/oder aramidfaserverstärkten Kunststoffgewebes und/oder -geleges, welches zwischen 1 und 20, bevorzugt 3 - 8 Lagen bzw. Schichten umfasst, und einen Schaumstoff.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und/oder -geleges, mindestens eine Lage glasfaserverstärkten Kunststoffs mit einer Dicke zwischen 1 und 10 mm, bevorzugt zwischen 1 und 5 mm, mindestens eine Lage glasfaserverstärkten Kunststoffs mit einer Dicke zwischen 1 und 10 mm, bevorzugt zwischen 1 und 5 mm und einen Schaumstoff, wobei bevorzugt ein vorderer Bereich der Kabine 2 bis 5-mal so viele Lagen eines kohlenstoff- und/oder aramidfaserverstärkten Kunststoffgewebes umfasst wie ein hinterer Teil, wobei bevorzugt ein vorderer Teil 2 -10 Lagen, insbesondere 5 Lagen und ein hinterer Teil 1 - 2 Lagen, insbesondere 2 Lagen eines kohlenstoff- und/oder aramidfaserverstärkten Kunststoffgewebes umfasst. Durch die Kombination dieser Materialien und/oder Lagen konnte die Sicherheit überraschend verbessert werden. Dabei ergänzen sich die Eigenschaften dieser Materialien auf überraschende Weise, diese Kombination erhöht die Zuverlässigkeit der Kabine und stellt einen glücklichen Griff dar. Durch die bevorzugte Verwendung von unterschiedlichen Anzahlen von Lagen vorne und hinten an der Sicherheitskabine kann insbesondere in einem hinteren Teil der Sicherheitskabine eine überraschend verbesserte Knautsch- bzw. Deformationszone bereitgestellt werden.

In einer weiteren bevorzugten Ausführungsform der Erfindung umfasst der äußere Bereich der Sicherheitskabine mindestens ein Deformationselement umfassend zwischen 1 und 20, bevorzugt 3 - 8 Lagen eines kohlenstoff- und/oder aramidfaserverstärkten Kunststoffgewebes und ein stabilisierendes Winkelelement, bevorzugt in einem Eckbereich der Sicherheitskabine.

Die Lagen des Kunststoffgewebes und das Winkelelement erhöhen die Festigkeit überraschend und synergistisch, also über das zu erwartende Maß hinaus.

In einer weiteren bevorzugten Ausführungsform der Erfindung weist die Sicherheitskabine quer zur Fahrtrichtung mindestens einen Querträger auf, welcher bevorzugt mindestens ein stabilisierendes Deformationselement umfasst. Bevorzugt umfasst der Querträger faserverstärkten Kunststoff, insbesondere umfasst die Faserverstärkung Kohlenstofffasern, Aramidfasern und/oder Glasfasern. Bevorzugt kann der in diesem Dokument beschriebene Querträger ebenso Metallschaum umfassen. Diese Querträger können die Stabilität der Kabine überraschend erhöhen, ohne selber viel Gewicht beizutragen. Insbesondere bei Unfällen mit Seitenaufprall auf die Kabine, können diese die an der Seite üblicherweise geringeren Knautsch- bzw. Deformationszonen kompensieren, dass sie ein im Wesentlichen durchgängiges Querelement darstellen, welches kinetische Energie in Spannungsenergie und Verformungsenergie umwandeln. Dabei kann der Querträger bevorzugt in einem Bodenbereich der Kabine, in der Nähe des Fahrgestells untergebracht sein. Ein solcher Querträger ist besonders platzsparend. Bevorzugt kann sich der Querträger ebenso vor und/oder hinter den Fahrgästen befinden. Ein solcher Querträger weist eine verbesserte Effektivität auf. Bevorzugt ist der Querträger mit dem Fahrgestell und/oder der restlichen Sicherheitskabine verbindbar.

In einer weiteren bevorzugten Ausführungsform der Erfindung weist die Sicherheitskabine längs zur Fahrtrichtung vor und/oder hinter den Fahrgästen mindestens einen Längsträger auf, welcher bevorzugt mindestens ein stabilisierendes Deformationselement umfasst. Bevorzugt umfasst der Querträger faserverstärkten Kunststoff, insbesondere umfasst die Faserverstärkung Kohlenstofffasern, Aramidfasern und/oder Glasfasern. Bevorzugt kann der in diesem Dokument beschriebene Längsträger ebenso Metallschaum umfassen. Auch wenn in diesem Dokument Längs- und/oder Querträger aus aramid- und/oder kohlenstofffaserverstärktem Kunststoff beschrieben werden, können bevorzugt Längs- und/oder Querträger umfassend Metallschaum gemeint sein.

Wenn in diesem Dokument ein Deformationselement (Winkelelement, Lage, Längsträger, Querträger ) aus kohlenstoff- und/oder aramidfaserverstärktem Kunststoff oder einem sonstigen Material (z. B. Metallschaum) beschrieben wird, ist bevorzugt das (jeweilige) Deformationselement umfassend kohlenstoff- und/oder aramidfaserverstärktem Kunststoff und/oder ein sonstiges Material gemeint.

Es war überraschend, dass nicht nur die Sicherheit der gesamten Kabine durch einen solchen Längsträger erhöht werden kann, sondern auch die Fahreigenschaften deutlich verbessert sind aufgrund einer bevorzugt höheren Steifigkeit des Fahrgestells und/oder gesamten Fahrzeugs. Dabei kann der Längsträger bevorzugt in einem Bodenbereich der Kabine, in der Nähe des Fahrgestells untergebracht sein. Ein solcher Längsträger ist besonders platzsparend. Bevorzugt kann sich der Längsträger ebenso vor und/oder hinter den Fahrgästen befinden. Ein solcher Längsträger weist eine verbesserte Effektivität auf. Bevorzugt ist der Querträger mit dem Fahrgestell und/oder der restlichen Sicherheitskabine verbindbar.

In einer weiteren bevorzugten Ausgestaltung können Längsträger bevorzugt auch oberhalb des Bodenbereichs in Höhe der seitlichen Außenwände angeordnet sein. Querträger können ebenfalls oberhalb des Bodenbereichs angeordnet sein und eine Verbindung zwischen zwei seitlichen Außenwänden darstellen.

In einer beispielhaften Form der Sicherheitskabine wird bevorzugt die ganze Kabine mit faserverstärkten Lagen, bevorzugt aus Sigratex, laminiert. Beispielsweise kann der Aufbau von außen nach innen wie folgt aufgebaut werden:
2-3 mm Glasfaserverstärkter Kunststoff (GFK), dann 1-4 Lagen Aramid- und/oder Carbonfaserverstärkter Kunststoff (bevorzugt Sigratex), dann 30 mm Schaum (bevorzugt XPS), dann wieder Aramid- und/oder Carbonfaserverstärkter Kunststoff (bevorzugt Sigratex) und abschließend 1-2 mm GFK. Die Anzahl der Lagen soll in dem Bereich, wo sich die Passagiere sitzend aufhalten (bevorzugt vorne), bevorzugt höher sein.

Etwa 0,3 mm Glasfaserverstärkter Kunststoff (GFK), dann 1-5 Lagen Aramid- und/oder Carbonfaserverstärkter Kunststoff (bevorzugt Sigratex) oder bevorzugt eine Lage Aramid- und/oder Carbonfaserverstärkter Kunststoff mit bevorzugt 4-7 Schichten, dann etwa 30 mm Schaum (bevorzugt XPS), dann wieder Aramid- und/oder Carbonfaserverstärkter Kunststoff (bevorzugt Sigratex) und abschließend etwa 0,3 mm GFK. Die Anzahl der Lagen und/oder Schichten soll in dem Bereich, wo sich die Passagiere sitzend aufhalten (bevorzugt vorne), bevorzugt höher sein.

Der Aufbau im hinteren Nicht-Sitz-Bereich wird bevorzugt weniger stark gebaut, so dass sich die hintere Hälfte des Aufbaus durch z. B. nur eine Lage CFK als "Opferanode" vulgo Deformationselement darstellt. Im Boden der Kabine kommen längs zur Fahrtrichtung bevorzugt zwei Carbon-Rechteckträger zum Einsatz, die einerseits die Kabine mit dem Fahrgestell verbinden, andererseits aber auch als Deformationselement dienen. Quer zur Fahrtrichtung gibt es bevorzugt im Bereich der Kabine auch 2-4 Carbon-Rechteckträger, um einen Seitenaufprall abzufangen.

In einer bevorzugten Ausgestaltung der Erfindung umfasst die Sicherheitskabine mehrere Bereiche, besonders bevorzugt zwei Bereiche. Die jeweiligen Bereiche sind durch eine Zwischenwand voneinander getrennt. Die Zwischenwand ist quer zur Längsrichtung der Kabine (bzw. quer zur Hauptfahrtrichtung) angeordnet. Die Zwischenwand erstreckt sich bevorzugt durchgängig senkrecht vom Bodenbereich der Sicherheitskabine bis zum Deckenbereich der Sicherheitskabine und stellt eine Verbindung zwischen Decken- und Bodenbereich dar.

Der Bodenbereich umfasst erfindungsgemäß bevorzugt den Fahrzeugboden. Der Deckenbereich umfasst hingegen bevorzugt das Fahrzeugdach der Sicherheitskabine.

Im besonders bevorzugten Fall von zwei Bereichen unterteilt die Zwischenwand die Sicherheitskabine in einen vorderen und einen hinteren Bereich in Bezug auf eine Hauptfahrtrichtung der Sicherheitskabine. Vorteilhaft schirmt die Zwischenwand die Insassen im vorderen Bereich von umherfliegenden Teilen ab, da insbesondere bevorzugt im hinteren Bereich Funktionsräume, wie z. B. die Küche vorliegen, welche viele Ausrüstungsgegenstände aufweisen. Zudem erhöht die Zwischenwand die Stabilität der Sicherheitskabine erheblich. Bei einem Seitenaufprall wirkt die Zwischenwand als Deformationselement und nimmt Kräfte im hohen Maße auf. Erfindungsgemäß können sich daher im vorderen Bereich der Sicherheitskabine Insassen aufhalten ohne Einbußen bzgl. ihrer Sicherheit im Vergleich zu Insassen im Fahrerhaus aufnehmen zu müssen.

Der vordere Bereich erstreckt sich bevorzugt von einer Fahrzeugsäule des Wohn- bzw. Reisemobils bis zur Zwischenwand, wobei es sich bei der Fahrzeugsäule insbesondere bevorzugt um die A-, B-, C- oder D-Säule handelt. Dem Fachmann sind die benannten Fahrzeugsäulen bekannt. In einer besonders bevorzugten Ausführungsform erstreckt sich der vordere Bereich der Sicherheitskabine von der B-Säule bis zur Zwischenwand. Der hintere Bereich erstreckt sich bevorzugt von der Zwischenwand bis zum Ende bzw. Heck des Fahrzeugs.

In einer weiteren bevorzugten Ausführungsform ist die gesamte Sicherheitskabine oder ein Teil von ihr hinter dem Fahrerhaus angeordnet, besonders bevorzugt ist die gesamte Sicherheitskabine oder ein Teil von ihr hinter der B-Säule angeordnet.

In einer bevorzugten Ausführungsform der Erfindung ist die Sicherheitskabine dadurch gekennzeichnet, dass ein vorderer und/oder ein hinterer Bereich eine Ausdehnung von mindestens 1,5 m in Längsrichtung der Sicherheitskabine aufweist. Dem Fachmann ist dabei klar, dass die Längsrichtung der Sicherheitskabine in dem Falle der Hauptfahrtrichtung entspricht.

In einer weiteren Ausführungsform weist der vordere und/oder hintere Bereich bevorzugt eine Ausdehnung von 1 bis 10 Metern, besonders bevorzugt von 1 bis 6, stärker bevorzugt von 1 bis 3 und insbesondere von mindestens 1,5 Metern.

In einer bevorzugten Ausführungsform der Erfindung umfasst die Zwischenwand die gleichen konstruktiven Merkmale, wie die Außenwände im vorderen Bereich. Mit konstruktiven Merkmalen ist bevorzugt die schichtweise Zusammensetzung der Wand gemeint. Vorteilhaft bildet sich dadurch im vorderen Bereich, in dem die Passagiere sitzen, eine hochsichere Kabine aus, die von allen Seiten gleich geschützt ist. Überraschend hat sich zudem gezeigt, dass sich vorteilhafterweise die Lautstärke der Umgebungsgeräusche während der Fahrt und während des Parkens innerhalb des vorderen Bereichs weitaus verringert hat.

In einer bevorzugten Ausgestaltung der Erfindung ist auch die Zwischenwand im Querschnitt bevorzugt in drei Abschnitte unterteilt. Dabei ist ebenfalls eine Schaumstoffschicht, bevorzugt von 2 Decklagen umgeben. Eine Decklage umfasst mindestens eine Lage eines Hybridgewebes und/oder -geleges (oder gleichbedeutend mindestens ein Gelege), welches
i. vier Schichten umfasst, wobei sich die Faserorientierungen der aufeinanderfolgenden Schichten jeweils um einen Winkel von 30°unterscheiden oder
ii. sechs Schichten umfasst, wobei sich die Faserorientierungen der aufeinanderfolgenden Schichten jeweils um einen Winkel von 18°unterscheiden oder
ii. sieben Schichten umfasst, wobei sich die Faserorientierungen der aufeinanderfolgenden Schichten jeweils um einen Winkel 15° unterscheiden.

In einer bevorzugten Ausführungsform umfasst eine Decklage der Zwischenwand mindestens eine Lage eines Hybridgewebes und/oder -geleges (oder gleichbedeutend mindestens ein Gelege), welches
i. bevorzugt 2 bis 12, besonders bevorzugt 3 bis 8 und insbesondere 4 Schichten umfasst, wobei sich die Faserorientierungen der aufeinanderfolgenden Schichten jeweils um einen Winkel von etwa 30°unterscheiden oder
ii. bevorzugt 2 bis 12, besonders bevorzugt 4 bis 8 und insbesondere 6 Schichten umfasst, wobei sich die Faserorientierungen der aufeinanderfolgenden Schichten jeweils um einen Winkel von etwa 18°unterscheiden oder
iii. bevorzugt 2 bis 14, besonders bevorzugt 4 bis 9 und insbesondere 7 Schichten umfasst, wobei sich die Faserorientierungen der aufeinanderfolgenden Schichten jeweils um einen Winkel etwa 15° unterscheiden.

In einer bevorzugten Ausführungsform umfasst eine Decklage der Zwischenwand mindestens eine Lage eines Hybridgewebes und/oder -geleges (oder gleichbedeutend mindestens ein Gelege), welches
i. bevorzugt 1 bis 10, besonders bevorzugt 2 bis 6 und insbesondere 2 Schichten umfasst, wobei sich die Faserorientierungen der aufeinanderfolgenden Schichten jeweils um einen Winkel von etwa 90°unterscheiden oder
ii. bevorzugt 1 bis 12, besonders bevorzugt 3 bis 9 und insbesondere 3 Schichten umfasst, wobei sich die Faserorientierungen der aufeinanderfolgenden Schichten jeweils um einen Winkel von etwa 45°unterscheiden.

In einer weiteren Ausführungsform der Erfindung umfasst die Decklage zudem besonders bevorzugt zwei Schichten GFK. Die beiden Schichten des GFK's umschließen jeweils von einer Seite bevorzugt das Hybridgewebe und/oder -gelege in der Decklage. Die Faserorientierung des GFK's weist bevorzugt einen Winkel von 0° und/oder 90° in Bezug auf die Produktionsrichtung und/oder besonders bevorzugt in Bezug auf die Faserorientierung der anliegenden Schicht des Hybridgewebes und/oder -geleges in der Decklage auf.

Im Zusammenhang mit der Darstellung der Erfindung erkennt der Fachmann, dass der Begriff Zwischenwand durch den Begriff Unterteilung austauschbar ist und beide Begriffe als synonym füreinander stehen.

In einer bevorzugten Ausführungsform weist der Innenraum der Sicherheitskabine mindestens eine Unterteilung in Querrichtung auf, welche ebenfalls mindestens ein stabilisierendes Deformationselement umfasst. Die Querrichtung ist insbesondere definiert als quer zur Fahrtrichtung. Bevorzugt umfasst die Unterteilung einen faserverstärkten Kunststoff, insbesondere umfasst die Faserverstärkung Kohlenstofffasern, Aramidfasern und/oder Glasfasern. Durch solch eine Unterteilung können insbesondere Insassen vor umherfliegenden Ausrüstungsgegenständen geschützt werden. Die Unterteilung des Innenraums kann dabei bevorzugt durchgängig oder teilweise sein. Dabei ist insbesondere bevorzugt, dass im hinteren Bereich des unterteilten Raumes Funktionsräume, wie z. B. die Küche vorliegen, welche viele Ausrüstungsgegenstände aufweisen. Vorne ist bevorzugt Wohnraum und insbesondere der Passagierbereich während der Fahrt. So kann insbesondere dieser Bereich bei Auffahrunfällen und/oder Vollbremsungen vor umherfliegenden Gegenständen geschützt werden. Überraschenderweise konnte durch so eine Unterteilung die Stabilität und Sicherheit der ganzen Kabine ebenfalls verbessert werden, insbesondere bei einwirkenden Kräften während eines Unfalls, welche Kraftkomponenten entlang der Richtung der Unterteilung aufweisen.

Bevorzugt weist die Unterteilung eine Tür auf. Weiterhin ist bevorzugt, dass diese die Unterteilung in das Äußere der Sicherheitskabine durch die Verwendung von Winkelelementen integriert wird. Z. B. kann die Unterteilung durch Winkelelemente mit den Außenwänden und oder dem Chassis/Fahrgestell verbunden werde.

Die Unterteilung kann dabei bevorzugt aus kohlenstofffaserverstärktem Kunststoff bestehen bzw. diesen umfassen. Somit kann die Unterteilung selber ein Deformationselement sein. Eine solche Unterteilung ist besonders leicht und stabil. Ebenso kann diese einfach und kostengünstig nachgerüstet werden und dabei die Sicherheit in überraschendem Maße erhöhen.

Die Unterteilung umfasst bevorzugt Winkelelemente, insbesondere an Verbindungsstellen mit den Außenwänden der Sicherheitskabine. Dadurch kann die Sicherheit synergistisch erhöht werden.

In einer weiteren bevorzugten Ausführungsform weist der Innenraumbereich der Sicherheitskabine mindestens einen entgegen der Fahrtrichtung installierten Sitzbereich auf. Unter anderem bei Crashtests hat sich herausgestellt, dass solche Sitzbereiche insbesondere minderjährigen Insassen einen hohen Schutz bieten. So können meist minderjährige Passagiere bei Auffahrunfällen und/oder Vollbremsungen besonders gut vor Verletzungen, insbesondere des Halswirbelbereichs, geschützt werden.

Die Sitzbereiche können dabei besonders bevorzugt durch Verwendung von Winkelelementen und/oder einem Sockel mit der Sicherheitskabine und/oder dem Fahrgestell eines Wohn- bzw. Reisemobils in Verbindung gebracht werden. So kann eine besonders stabile Verankerung des Sitzbereiches innerhalb des Wohnmobils und/oder Reisemobils gewährleistet werden.

Auch die in diesem Dokument beschriebenen Winkelelemente können, wie vorzugsweise alle hier beschriebene Deformationselemente, Metallschaum aufweisen.

In einer weiteren bevorzugten Ausführungsform weist die Sicherheitskabine zwischen Fahrerhaus und Innenraumbereich mindestens ein quer zur Fahrtrichtung eingezogenes Deformationselement auf. Dieses umfasst bevorzugt faserverstärkten Kunststoff, insbesondere umfasst die Faserverstärkung Kohlenstofffasern, Aramidfasern und/oder Glasfasern. Oftmals kommt es insbesondere bei Auffahrunfällen zu einem gefährlichen Abknicken des Fahrerhauses bzw. der Fahrerkabine. Dies kann auf diese Weise besonderes einfach verhindert und die Sicherheit erhöht werden. Bevorzugt kommen auch Winkelelemente zum Einsatz. Ein Deformationselement umfasst beispielsweise ein in Bereichen zwischen Fahrerhaus und Innenraumbereich quer zur Fahrtrichtung eingezogenes flächiges Element, welches bevorzugt durch mindestens ein Winkelelement mit dem Fahrgestell und/oder mindestens einer Außenwand der Sicherheitskabine zur Erhöhung der Stabilität verbunden wird. Dadurch kann überraschenderweise ein Abknicken besonders einfach vermieden werden. Auch eine Verbindung des Fahrerhauses mit dem Fahrgestell und/oder einer Außenwand der Sicherheitskabine durch ein Winkelelement ist als Maßnahme vorstellbar. Es war überraschend, dass durch die einfache Verwendung mindestens eines Deformationselements zwischen Fahrerhaus und Innenraumbereich die Sicherheit entscheiden erhöht und ein Abknicken verhindert werden kann. Dabei war insbesondere überraschend, dass bereits die Verwendung kleiner Deformationselemente, welche Gewicht, Raumangebot und/oder Funktionalität des Wohn- bzw. Reisemobils im Wesentlichen unverändert lassen, ausreichend ist, um gewünschte Effekte zu erzielen. Diese können auch besonders einfach nachgerüstet werden.

In einer weiteren bevorzugten Ausgestaltung der Erfindung ist die Sicherheitskabine dadurch gekennzeichnet, dass die seitlichen Außenwände der Kabine fachwerkartig angeordnete Träger aus kohlenstofffaserverstärkten Kunststoffprofilen, insbesondere Längs- und Querträger umfassen, zwischen denen die Lagen des faserverstärkten Kunststoffgewebes angeordnet vorliegen, wobei die Träger vorzugsweise entlang wahrscheinlicher Lastpfade bei einem Unfall angeordnet vorliegen. Diese Anordnung bietet vorteilhaft bei einem minimalem Materialaufwand überraschend gute Stabilitätsverbesserungen. Zudem ist diese Anordnung vorteilhaft sehr leicht.

Fachwerkartig angeordnete Träger werden insbesondere durch Normalkräfte beansprucht und sind an deren Enden in den Knotenpunkten miteinander verbunden. Dem durchschnittlichen Fachmann sind dabei fachwerkartige Träger bzw. räumliche Fachwerke bekannt.

Erfindungsgemäß ist ein Pfad auf dem die Kräfte aufgrund einer äußeren Belastung durch die Karosserie geleitet werden als Lastpfad definiert. Im Sinne der Erfindung sind daher bevorzugt in den Außenwänden fachwerkartig angeordnete Träger entlang der Lastpfade integriert, sodass sie zwischen 2 Decklagen der Außenwand vorliegen. In anderen Worten sind die Träger in die Außenwand eingebettet. Dem durchschnittlichen Fachmann ist der Begriff Lastpfad sowie Lastpfad-Berechnungen bekannt.

In einer weiteren Ausführungsform sind die Träger bevorzugt so angeordnet, dass sie eine Außenwand in ihrer Längsausdehnung teilen. Dabei teilen sie die gesamte Struktur (2 Decklagen und die Hartschaumschicht) der Außenwand. Die verschiedenen Teile der Außenwand stellen dementsprechend eine Verbindung zwischen den Trägern dar. Diese Methode vereinfacht vorteilhaft die Konstruktion bzw. das Zusammenbauen der Sicherheitskabine.

Die fachwerkartigen Träger können bevorzugt sowohl als Längs- als auch Querträger ausgestaltet sein. In einer bevorzugten Ausgestaltung liegen zwei Träger an deren gemeinsamen Knotenpunkten so zueinander, dass sie bevorzugt einen Winkel von 0° bis 360° sowie besonders bevorzugt einen Winkel von 0° bis 180° einschließen.

In einer weiteren bevorzugten Ausführungsform umfassen die Längs- und Querseiten der Sicherheitskabine Aluminium-Rundrohre und/oder Vierkantprofilen und/oder Plattenwerkstoffe, welche in Längs- und Kreuzbauweise miteinander verschweißt und/oder verklebt und/oder anderweitig stabil verbunden werden. Dadurch kann ein möglichst weitreichender Schutz der Insassen bei einem Unfall gewährleistet werden.

In einer weiteren bevorzugten Ausführungsform weisen die Aluminium-Rundrohre und/oder Vierkantprofilen und/oder Plattenwerkstoffe mindestens ein Deformationselement auf. Dabei können die Aluminium-Rundrohre, Vierkantprofile und/oder Plattenwerkstoffe selber Deformationselemente sein und/oder solche umfassen. Das kann z. B. auch bedeuten, dass die vorgenannten Elemente an geeigneten Stellen verstärkt werden, insbesondere durch kohlenstofffaserverstärkten Kunststoff. So kann die Sicherheit synergistisch erhöht werden. Auch ist die Verarbeitung besonders einfach und die Herstellungskosten sind günstig.

In einer weiteren bevorzugten Ausführungsform weist die Sicherheitskabine quer zur Fahrtrichtung vor und hinter den Fahrgästen Querträger auf, welche bevorzugt mindestens ein stabilisierendes Deformationselement umfassen. Dabei kann der Querträger bevorzugt auch selber ein Deformationselement sein. Hierdurch kann weitere Stabilität in den konstruktiven Aufbau gebracht werden. Es war dabei überraschend, dass solche Querträger die Sicherheit synergistisch erhöhen.

In einer weiteren bevorzugten Ausführungsform weisen die Rohre, Profile, Platten, Deformationselemente und/oder Querträger Wandstärken zwischen 1 mm und 100 mm und/oder in mindestens eine Richtung eine Länge zwischen 1 cm und 30 Metern auf. Diese Parameter haben sich zur Erhöhung der Stabilität als überraschend geeignet erwiesen und sind leicht herzustellen.

In einer weiteren bevorzugten Ausführungsform weist der Sitzbereich mindestens einen Sockel auf, welche in die Sicherheitskabine konstruktiv eingebunden wird und bevorzugt mit mindestens einem Deformationselement, einem Rohr, einem Profil, einer Platte und/oder einem Querträger verbunden vorliegt. Diese Verbindung umfasst bevorzugt die Verbindung des Sockels mit dem Fahrgestell und/oder den Außenwänden der Sicherheitskabine. Hierfür werden insbesondere Winkelelemente verwendet. Ein Sockel ist bevorzugt eine Basis unterhalb des Sitzbereichs zu dessen Verankerung und/oder Erhöhung. Der Sockel umfasst bevorzugt selber faserverstärkten Kunststoff.

In einer weiteren bevorzugten Ausführungsform ist die Sicherheitskabine, dadurch gekennzeichnet, dass der Innenraumbereich mindestens einen entgegen insbesondere der Hauptfahrrichtung installierten Sitzbereich aufweist, wobei der Sitzbereich ein kohlenstofffaserverstärktes Hybridgewebe und/oder -gelege umfasst, welches vorzugsweise mit dem Chassis direkt verbunden vorliegt.

Wenn ein Sitzbereich auf diese Weise in den Aufbau der Sicherheitskabine integriert wird, kann ein dort sitzender Passagier besonders umfassend geschützt werden. Es zeigen sich eine Vielzahl synergistischer Effekte, insbesondere im Zusammenspiel mit den anderen in diesem Dokument offenbarten Sicherheitselementen.

In einer weiteren bevorzugten Ausführungsform weist die Sicherheitskabine seitlich, bevorzugt in mindestens einem Bereich, der eine erhöhte Wahrscheinlichkeit eines Unfalls in Form eines Seitenaufpralls aufweist, Rohre, Profile, Platten, Querträger und/oder Deformationselemente auf. So kann die Sicherheit besonders einfach erhöht werden. Ein Fachmann weiß durch Tests, Statistiken und/oder theoretischen Überlegungen, welche Bereiche einer erhöhten Unfallwahrscheinlichkeit ausgesetzt sind.

In einer weiteren bevorzugten Ausführungsform ist der hintere Teil der Sicherheitskabine als Deformationszone gestaltet wird und weist bevorzugt Deformationselemente auf. Der hintere Teil bezeichnet bevorzugt das Heck und/oder hintere Bereiche der Kabine. Eine Deformationszone wird oftmals bevorzugt ebenfalls als Knautschzone bezeichnet. Hierbei wird insbesondere auf die Umwandlungsfähigkeit der Deformationszone und/oder des Deformationselements zur Erhöhung der Unfallsicherheit abgestellt. Insbesondere gemeinsam mit der Unterteilung der Kabine hat sich diese Vorzugsvariante als überraschend sicher herausgestellt, vor allem wenn die Insassen im vorderen Teil untergebracht sind.

Es ist weiterhin bevorzugt, einen konstruktiven Aufbau dergestalt herzustellen, als dass er einen möglichst weitreichenden Schutz der Insassen vor den Folgen eines eventuellen Unfalls anbietet. Die Bauweise der in den Aufbau integrierten Sicherheitszelle richtet sich je nach Größe, Anwendung und Nutzung (Anzahl der Insassen) aus und ist daher nicht standardisiert, d.h. die Anzahl und Länge der einzelnen Deformationselemente, Kreuz- und/oder Längsverbinder ist für jeden Aufbau unterschiedlich. Der Aufbau kann vollständig oder als Materialmix aus Aluminium-Rohren, Aluminium-Vierkant, Kohlenstofffaser (CFRP) bzw. kohlenstofffaserverstärktem Kunststoff, Glasfaser bzw. glasfaserverstärktem Kunststoff oder anderen geeigneten Materialien bestehen, der z. B. gitterartig verschweißt, laminiert und/oder verklebt wird. Um den Rahmen wird dann ein Aufbau aus Materialien wie z. B. CFK, GFK, PU-, Alu-Platten oder Wabenplatten gebaut. Diese Konstruktion gewährleistet eine hohe Stabilität bei möglichst geringem Gewicht. Durch die an den -je nach Wohnmobil-Aufbau - an unterschiedlichen Punkten der Konstruktion einzufügenden Deformationselemente wird die Aufprallenergie eines anderen Fahrzeugs in geeignete Richtungen und Bereiche der Karosserie abgelenkt und die Insassen dadurch geschützt (Umwandlungsfähigkeit).

In einer bevorzugten Ausgestaltung der Erfindung ist ein Chassis hinter dem Fahrerhaus angeordnet und fest mit diesem verbunden. Insbesondere ist das Chassis hinter der B-Säule angeordnet. Dabei ersetzt das Chassis erfindungsgemäß bevorzugt den im Stand der Technik verwendeten herkömmlichen Leiterrahmen eines Wohn- bzw. Reisemobils.

In einer weiteren Ausführungsform der Erfindung ist die Sicherheitskabine dadurch gekennzeichnet, dass ein Chassis der Sicherheitskabine enthalten ist, wobei das Chassis umfasst:
- mindestens ein ausgeschäumtes Profil umfassend Hybridgewebe und/odergelege als Längs- und/oder Querträger;
- mindestens ein Paneel enthaltend Hybridgewebe und/oder -gelege zu einer bevorzugt aerodynamischen Auskleidung der von den Profilen nicht umfassten Bereiche des Chassis;
- mindestens eine Lage des Hybridgewebes und/oder -geleges.

Ein solches Chassis weist besonders vorteilhafte Eigenschaften in Bezug auf die Sicherheit des Wohn- und Reisemobils auf, ohne überaschenderweise das Fahrverhalten negativ zu beeinträchtigen. Zudem ist die Konstruktion eines solchen Chassis besonders gewichtsarm, sodass es besonders bevorzugt den Zweck eines Leichtbauchassis' erfüllt. Erfindungsgemäß umfasst das Chassis die tragenden Elemente des Wohn- bzw. Reisemobils. Die tragenden Elemente haben dabei bevorzugt die Funktion, den Antrieb, die Karosserie und die Nutzlast zu tragen und gegen äußere Krafteinwirkungen zu stabilisieren. Dem durchschnittlichen Fachmann ist ein Chassis bekannt.

Im Sinne der Erfindung sind die ausgeschäumten Profile als längliche Hohlkörper ausgebildet. In der Außengeometrie sind die Profile bevorzugt rund und/oder eckig ausgebildet. Der Hohlraum der Profile umfasst bevorzugt einen Hartschaum, insbesondere extrudierten Polystyrol-Hartschaum (XPS). Vorteilhaft besitzen ausgeschäumte Komponenten nicht nur hervorragende Dämpfungseigenschaften, bei gleichzeitiger Gewichtsreduktion, sondern wirken sich auch überraschenderweise positiv auf die Stabilität der Profile aus.

Erfindungsgemäß ist ein Hybridgewebe und/oder-gelege bevorzugt an der nach außen gerichteten Fläche der Hohlprofile angebracht. Dies wirkt sich vorteilhaft positiv auf die Stabilität der Profile aus.

In einer bevorzugten Ausführungsform der Sicherheitskabine werden die ausgeschäumten Profile bevorzugt als Querträger ausgestaltet, besonders bevorzugt als Längsträger. In einer weiteren erfindungsgemäßen Alternative werden die ausgeschäumten Profile bevorzugt sowohl als Querträger als auch als Längsträger ausgebildet.

Erfindungsgemäß ist ein Paneel als flächiges Element definiert. Ein Paneel kann jede beliebige Flächengeometrie annehmen. Bevorzugt sind Paneele als Polygon ausgebildet, besonders bevorzugt sind die Paneele als Rechteck ausgebildet.

In einer weiteren bevorzugten Ausgestaltung der Erfindung sind die Paneele vollflächig mit dem Chassis verbunden. Bevorzugt werden die Träger des Chassis vollflächig verbunden sowie bekleidet.

In einer weiteren bevorzugten Ausführungsform werden die Paneele in den Bereichen des Chassis angebracht, die nicht von den Profilen des Chassis umfasst sind, sodass sie als aerodynamische Auskleidung wirken. Aus einer solchen Anordnung der Paneele zeichnet sich vorteilhaft ein guter Strömungswiderstandskoeffizient (Widerstandsbeiwert [c_{w}-Wert]) der Unterseite des Fahrzeugs ab.

In einer weiteren bevorzugten Ausführungsform stellen die Paneele eine Verbindung zwischen den verschiedenen Profilen dar, somit werden die Träger des Chassis untereinander flächig über Paneelen verbunden.

In einer Ausführungsform sind Hybridgewebe und/oder -gelege bevorzugt vollflächig im ganzen Fahrzeug angeordnet. Besonders bevorzugt übernimmt das Hybridgewebe und/oder -gelege im Bereich des Chassis' eine tragende Funktion.

In einer weiteren bevorzugten Ausführungsform ist mindestens eine Lage des Hybridgewebes und/oder -geleges vollflächig an den Paneelen angebracht. Vorteilhaft kann dadurch die Stabilität des Chassis erhöht werden.

In einer weiteren Ausführungsform der Erfindung ist die Sicherheitskabine dadurch gekennzeichnet, dass das Chassis in einem seitlichen Randbereich zumindest bereichsweise umlaufend mindestens ein Deformationselement umfasst, vorzugsweise aufweisend eine Wabenstruktur aus kohlenstofffaserverstärktem Kunststoff und/oder mindestens ein ausgeschäumtes Profil umfassend Hybridgewebe und/oder -gelege, wobei das Deformationselement vorzugsweise mit mindestens einem Paneel vorliegt.

Erfindungsgemäß ist die Wabenstruktur bevorzugt in einer sogenannten Sandwichbauweise ausgestaltet. So besteht die Wabenstruktur bevorzugt aus einem Wabenkern und tragenden Deckhäuten. Die Deckhäute bestehen bevorzugt aus mindestens einer Lage des Hybridgewebes und/oder -geleges und/oder können an strukturellen Elementen der Sicherheitskabine angebracht werden. Der Wabenkern besteht dabei bevorzugt aus Prismen mit sechseckiger Grundfläche aus kohlenstofffaserverstärktem Kunststoff. Die Prismen sind bevorzugt durch ihre Außenflächen in Verbindung zueinander angeordnet und ergeben dadurch die dem Fachmann bekannte Wabenstruktur. Überraschenderweise hat sich neben der verbesserten Stabilität der Sicherheitskabine zudem auch die Wärmeisolation der Sicherheitskabine verbessert.

In einer weiteren bevorzugten Ausgestaltung der Wabenstruktur ist der Wabenkern ohne Deckhäute in direkter Weise an strukturellen Elementen der Sicherheitskabine angebracht. Das "Weglassen" der Deckhäute spart vorteilhaft Material und überraschenderweise erfüllt es weiterhin alle Stabilitätskriterien der Sicherheitskabine.

In einer weiteren bevorzugten Ausführungsform ist an einem Querträger bevorzugt umlaufend eine Wabenstruktur aus kohlenstofffaserverstärktem Kunststoff angebracht. Die Oberfläche des gesamten Querträgers ist somit mit der Wabenstruktur ausgestaltet. Bevorzugt wird die Wabenstruktur ohne und/oder besonders bevorzugt mit Deckhäuten an dem Querträger angebracht.

In einer weiteren bevorzugten Ausgestaltung der Erfindung wird längsseitig in den Paneelen eine Wabenstruktur eingebracht. Bevorzugt ist die Wabenstruktur ohne und/oder besonders bevorzugt mit Deckhäuten in den Paneelen enthalten.

Erfindungsgemäß ist ein seitlicher Randbereich bevorzugt ein Bereich des Chassis und/oder der Sicherheitskabine, welcher in der Draufsicht der Sicherheitskabine bevorzugt nicht über die zentral liegende Längsachse des Chassis und/oder der Sicherheitskabine hinausläuft. Bevorzugt ist ein Randbereich in der Draufsicht in der Nähe einer Außenwand positioniert. Die Nähe zu einer Außenwand ist dabei bevorzugt ein Abstand zu einer Außenwand von 0 mm bis etwa zu der Hälfte der Strecke von der Außenwand zur zentral liegenden Längsachse des Chassis und/oder der Sicherheitskabine.

In einer weiteren Ausführungsform der Erfindung ist die Sicherheitskabine dadurch gekennzeichnet, dass das Chassis mindestens eine Hinterachse und/oder mindestens ein Antriebsaggregat umfasst.

In einer weiteren bevorzugten Ausgestaltung weist das Chassis zwei Hinterachsen auf.

Erfindungsgemäß ist das Antriebsaggregat eine konstruktive Einheit, die mittels Energieumformung das Wohn- bzw. Reisemobil in Bewegung setzt. Im Sinne der Erfindung ist dies bevorzugt ein Motor mit oder ohne einem Getriebe.

Vorzugsweise ist der Antrieb als Hybridantrieb, Elektroantrieb und/oder als Verbrennungskraftantrieb ausgestaltet.

Verbrennungskraftantriebe bzw. Verbrennungsmotoren sind dem durchschnittlichen Fachmann bekannt. In einer Brennkammer wird ein zündfähiges Gemisch aus Kraftstoff und Luft verbrannt.

Die Wärmeausdehnung des so entstehenden Heißgases wird genutzt, um Kolben (beim Wankelmotor Läufer) zu bewegen.

Elektroantriebe wandeln elektrische Energie in eine mechanische Energie um. Dem Fachmann ist bekannt, dass in Elektromotoren stromdurchflossene Leiterspulen Magnetfelder erzeugen, deren gegenseitige Anziehungs- und Abstoßungskräfte in Bewegung umgesetzt werden.

Erfindungsgemäß wird die elektrische Energie bevorzugt durch Batterien bzw. Akkumulatoren Brennstoffzellen und/oder photovoltaische Zellen bereitgestellt.

Ein Hybridantrieb ist bevorzugt eine Kombination aus einem Elektroantrieb und einem Verbrennungsantrieb. Die Elektro- bzw. Verbrennungsmotoren können erfindungsgemäß auf unterschiedliche Weise zusammenwirken. Dem Fachmann ist bekannt, dass der Elektroantrieb und der Verbrennungsantrieb parallel, seriell oder mittels einer Mischform zusammenarbeiten.

In einer weiteren Ausführungsform der Erfindung ist die Sicherheitskabine dadurch gekennzeichnet, dass die Sicherheitskabine mindestens eine Batterie, mindestens eine Brennstoffzelle und/oder mindestens einen Wassertank umfasst, wobei Batterie, Brennstoffzelle und/oder Wassertank vorzugsweise in einer Schutzbox im vorderen und/oder im hinteren Bereich der Kabine untergebracht sind.

Ein Wassertank speichert Wasser und wird bevorzugt für den Gebrauch von Sanitäranlage und Küche in einem Wohn- und Reisemobil genutzt. Sowohl eine Batterie (galvanische Zelle) als auch eine Brennstoffzelle liefern Strom an einen Elektromotor, oder aber auch an anderweitige elektrische Komponenten eines Wohn und Reisemobils wie bspw. Durchlauferhitzer, TV-Gerät, Heizung etc. Dem Fachmann sind sowohl galvanische Zellen als auch Brennstoffzellen bekannt, wobei für eine Brennstoffzelle ein Wasserstofftank essenziell ist. Insbesondere bei Unfällen gilt es den Wassertank, den Wasserstofftank, die Batterie und/oder die Brennstoffzelle besonders gut zu schützen. In vorteilhafterweise geschieht dies durch die Schutzbox. Diese ist bevorzugt im vorderen und/oder im hinteren Bereich der Sicherheitskabine angebracht. Stärker bevorzugt ist die Schutzbox im vorderen Bereich der Kabine untergebracht sind.

In einer weiteren Ausführungsform der Erfindung ist die Sicherheitskabine dadurch gekennzeichnet, dass die Schutzbox nach außen zumindest bereichsweise durch mindestens ein Deformationselement begrenzt wird, welche insbesondere eine Wabenstruktur aus kohlenstofffaserverstärktem Kunststoff und/oder mindestens ein ausgeschäumtes Profil umfassend Hybridgewebe und/oder -gelege umfasst, wobei die Schutzbox vorzugsweise mit einem Längs- und/oder Querträger verbunden vorliegt.

Die Schutzbox ist bevorzugt so ausgestaltet, dass sie von zwei Seiten jeweils von einem Längsträgern umfassend bevorzugt eine Wabenstruktur und/oder von den zwei weiteren Seiten jeweils von einem Querträgern umschlossen ist. Besonders bevorzugt sind zwei Seiten jeweils von einem Längsträger und/oder mindestens eine weitere Seite von einem Querträger umschlossen.

In einer weiteren Ausführungsform liegt die Längsachse der Schutzbox bevorzugt parallel zur Hauptfahrtrichtung vor. Besonders bevorzugt liegt die Längsachse der Schutzbox in der Höhe parallelverschoben von der Längsachse der Sicherheitskabine und/oder des Chassis vor, sodass die Schutzbox vorteilhaft zentral in der Sicherheitskabine eingebettet ist und von einer Vielzahl von schützenden Komponenten umgeben ist.

In einer weiteren Ausführungsform hat die Längsachse der Schutzbox bevorzugt zu beiden seitlichen Außenwänden der Sicherheitskabine bevorzugt etwa den gleichen Abstand.

In einer weiteren bevorzugten Ausgestaltung ist die Schutzbox mit einem Längs und/oder Querträger des Chassis verbunden.

In einer weiteren bevorzugten Ausführungsform ist die Schutzbox so ausgestaltet, dass der zu schützende Bereich durch ein Gerüst bzw. einer fachwerkartigen Struktur von Längs- und Querträgern, welche mit den Trägern des Chassis verbunden sind, umgeben ist.

In einer weiteren bevorzugten Ausführungsform ist die Längsachse der Schutzbox quer zur Hauptfahrtrichtung angeordnet. Hierdurch kann die Sicherheitskabine vorteilhaft in ihrer Längsausdehnung kleiner konstruiert werden.

In einer weiteren Ausführungsform der Erfindung ist die Sicherheitskabine dadurch gekennzeichnet, dass die Sicherheitskabine Einrichtungsgegenstände, insbesondere mindestens einen Sitzbereich, eine Sitzbank, einen Schrank und/oder eine Badezimmer-Trennwand umfasst, wobei die Einrichtungsgegenstände unter Beachtung von Lastpfad-Berechnungen durch einen faserverstärkten Kunststoff mit dem Chassis und/oder der Sicherheitskabine fest verbunden vorliegen.

Alle Einrichtungsgegenstände weisen bevorzugt ein Hybridgewebe bzw. -gelege auf, sodass sie vorteilhaft neben der Ursprungsfunktion die Funktion eines Crashelements annehmen können. Bevorzugt umfassen die Einrichtungsgegenstände 45° /90° Hybridgewebe bzw. -gelege auf.

In einem weiteren Aspekt betrifft die Erfindung ein Herstellungsverfahren für eine Sicherheitskabine für ein Wohn- bzw. Reisemobil, umfassend mindestens einen hinter einem Fahrerhaus anordenbaren Teils der Sicherheitskabine, umfassend die Herstellung einer Lage eines faserverstärkten Kunststoffgewebes und/oder -geleges für eine Wand der Sicherheitskabine, dadurch gekennzeichnet, dass mehrere Schichten eines faserverstärkten Kunststoffgewebes und/oder -geleges zu der Lage laminiert werden, wobei die Schichten in Querrichtung der Lage angeordnet sind, wobei direkt aufeinanderfolgende Schichten zueinander unterschiedliche Faserorientierungen aufweisen, wobei die Lage einer seitlichen Außenwand für einen in vorhergesehener Fahrtrichtung vorderen Bereich der Kabine mindestens drei bis neun Schichten umfasst, wobei die Lage einer seitlichen Außenwand für einen in die vorgesehene Fahrtrichtung hinteren Bereich der Kabine eine bis fünf Schichten umfasst sind, wobei in dem vorderen Bereich mehr Schichten umfasst sind als in dem hinteren Bereich und wobei eine für eine Zwischenwand in Querrichtung der Kabine vorgesehen Lage drei bis neun Schichten umfasst.

In einer bevorzugten Ausführungsform der Erfindung umfasst das Herstellungsverfahren weiterhin folgende Schritte:
- Laminieren zweier äußerer Schichten aus glasfaserverstärktem Kunststoff auf die Lage, welche die Lage an zwei gegenüberliegenden Außenflächen abschließen, wobei sich die Faserorientierung jeder äußeren Schicht bevorzugt um 90° von der darunterliegenden Schicht und/oder der anderen äußeren Schicht unterscheidet.

In einer weiteren bevorzugten Ausführungsform der Erfindung umfasst das Herstellungsverfahren weiterhin die folgenden Schritte:
- Verbinden mindestens zweier Lagen eines faserverstärkten Kunststoffgewebes und/oder - geleges zu einer Wand bzw. einem Wandbereich der Sicherheitskabine, wobei zwischen den Lagen bevorzugt eine Schaumstofflage positioniert ist, wobei die zwei Lagen des faserverstärkten Kunststoffgewebes und/oder -geleges bezogen auf die Faserorientierung einen symmetrischen Schichtenaufbau zu einer zwischen den Lagen liegenden Symmetrieebene aufweisen.

In einer weiteren bevorzugten Ausführungsform der Erfindung umfasst das Herstellungsverfahren weiterhin die folgenden Schritte:
- Verbinden einer Wand bzw. eines Wandbereichs des vorderen Bereichs mit einer Wand bzw. eines Wandbereichs des hinteren Bereichs zu einer seitlichen Außenwand bzw. zu einem Wandbereich einer seitlichen Außenwand;

In einer weiteren bevorzugten Ausführungsform der Erfindung umfasst das Herstellungsverfahren die Herstellung eines Chassis der Sicherheitskabine und weiterhin die folgenden Schritte:
- Bereitstellen mindestens eines ausgeschäumten Profils umfassend Hybridgewebe und/oder -gelege für einen Längs- und/oder Querträger;
- vorzugsweise Verbinden von Längsträger und Querträger
- bevorzugt aerodynamischen Auskleidung der von den Profilen nicht umfassten Bereichen des Chassis durch mindestens ein Paneel enthaltend Hybridgewebe;
- bevorzugt Einziehen mindestens eine Lage eines Hybridgewebes und/oder -geleges.

In einem weiteren Aspekt betrifft die Erfindung ein Herstellungsverfahren für eine Sicherheitskabine nach einem oder mehreren der vorherigen Ansprüche, umfassend die folgenden Schritte für den Aufbau des äußeren Bereichs von außen nach innen:
- bevorzugt Einziehen einer Lage GFK und/oder eines Metallschaumes, bevorzugt mit einer Dicke von 1-10 mm, bevorzugt 2-3 mm;
- Einziehen von 1-20 Lagen, bevorzugt 2-8 Lagen eines kohlenstoff- und/oder aramidfaserverstärkten Kunststoffgewebes und/oder eines Metallschaumes;
- bevorzugt Einbringen einer Schicht von XPS-Schaum, bevorzugt mit einer Dicke zwischen 10 mm und 40mm, insbesondere 30 mm;
- bevorzugt Einbringen mindestens einer weiteren Lage des kohlenstoff- und/oder aramidfaserverstärkten Kunststoffgewebes und/oder eines Metallschaumes;
- abschließend bevorzugt Einziehen einer weiteren Lage GFK und/oder eines Metallschaumes, bevorzugt mit einer Gesamtschichtdicke von 1-10 mm.

Der durchschnittliche Fachmann erkennt, dass technische Merkmale, Definitionen und/oder Vorteile bevorzugter Ausführungsformen der erfindungsgemäßen Sicherheitskabine auch für das hier beschriebene, erfindungsgemäße Herstellungsverfahren gelten.

Das Einziehen faserverstärkten Kunststoffs kann bevorzugt zumindest teilweise manuell vorgenommen werden. Dafür können die Fasergewebe, -gelege und/oder-vliese bevorzugt erst einmal an der angedachten Stelle der Kabine fixiert werden, bevor ein Laminieren, bevorzugt mit einem Harz, z. B. Epoxidharz vorgenommen wird. Es können mehrere Lagen Faserverstärkungen mit verschieden ausgerichteten Fasern auf diese Art bevorzugt übereinander eingebracht werden. Bevorzugt werden dabei einzelne Lagen so bearbeitet, dass keine Lufteinschlüsse entstehen. Dieses Verfahren ist besonders einfach und kostengünstig.

Ebenso kann ein Einziehen von Lagen faserverstärkten Kunstoffs bevorzugt industriell, insbesondere zumindest teilweise maschinell erfolgen, bevorzugt umfassend bereits oben genannte Schritte. Dabei können bevorzugt vor dem Einziehen bereits oben beschriebene Stacks von Verstärkungen gebildet werden, welche dann bevorzugt in einem RTM Verfahren mit Harz versehen werden. Ein Aushärten der entstehenden Bauteile kann bevorzugt unter Wärmezuführung und bei stark verringertem Luftdruck vorgenommen werden, z. B in einem Autoklav. So können die einzelnen Lagen besonders gut miteinander verbunden werden, wobei insbesondere Lufteinschlüsse vermieden werden und die Stabilität und Wartungsfreiheit verbessert wird. Ein solches Verfahren kann besonders gut automatisiert und rationalisiert werden, gleichzeitig wird die Qualität gehoben.

In einer weiteren bevorzugten Ausführungsform ist vorgesehen, nicht nur händisch oder per Autoklav zu laminieren, sondern des Weiteren unter Hochdruck zu pressen. Selbstverständlich ist es auch möglich, diese Handlungen zu kombinieren.

Der Fachmann weiß, dass es in den Eckbereichen der Kabine, in denen bevorzugt faserverstärkte Lagen zur Verbesserung der Stabilität und/oder Festigkeit beim Einziehen zur Überlappung gebracht werden, zu erhöhten Dicken als den bevorzugt genannten kommen kann.

Das Einbringen eines Schaums kann bevorzugt durch Einspritzen des Schaums erfolgen. Ebenso können bevorzugt fertig geschäumte Elemente eingebracht werden.

In einer weiteren Ausführungsform der Erfindung ist die Anzahl der Lagen GFK und/oder des kohlenstoff- und/oder aramidfaserverstärkten Kunststoffgewebes in einem vorderen Bereich, bevorzugt in einem Passagierbereich der Sicherheitskabine höher ist als in anderen Bereichen, insbesondere in einem hinteren Bereich.

In einer weiteren Ausführungsform der Erfindung umfasst das Herstellungsverfahren weiterhin folgende Schritte:
- Einlassen mindestens eines, bevorzugt mindestens zweier Längsträger aus kohlenstofffaserverstärktem Kunststoff, bevorzugt in einem oberen Bereich der Sicherheitskabine und/oder in einem Bodenbereich der Sicherheitskabine insbesondere mit einem Fahrgestell verbindbar, längs zur Fahrtrichtung;
- bevorzugt Einbringen mindestens eines, bevorzugt 2 - 4 Querträger, bevorzugt in einem oberen Bereich der Sicherheitskabine und/oder in einem Bodenbereich, insbesondere mit einem Fahrgestell verbindbar, aus kohlenstofffaserverstärktem Kunststoff quer zur Fahrtrichtung.

Diese Elemente werden bevorzugt im Voraus gefertigt, z. B. manuell oder automatisiert in einer vorgefertigten Form. Insbesondere durch Quer- und/oder Längsträger in einem Bodenbereich, welche mit dem Fahrgestell verbindbar sind und bevorzugt verbunden werden, wird die Festigkeit synergistisch erhöht. Verbindbar sind die Träger bevorzugt, wenn sie entsprechende Verbindungs- bzw. Fügemittel und/oder Verbindungs- bzw. Fügeflächen für eine Verbindung mit dem Fahrzeug aufweisen.

In einem weiteren Aspekt betrifft die Erfindung ein stabilisierendes Deformationselement für ein Wohn- bzw. Reisemobil, bevorzugt zur Verwendung in einer Sicherheitskabine für ein Wohn- bzw. Reisemobil nach der vorstehenden Beschreibung, welches konfiguriert ist für eine Erhöhung der Sicherheit und/oder Stabilisierung einer Fahrgastzelle eines Wohn- bzw. Reisemobils, bevorzugt einer Sicherheitskabine.

Eine weitere bevorzugte Ausführungsform umfasst ein Herstellungsverfahren, wobei die kohlenstofffaserverstärkten Kunststoffprofile durch ein Pultrusionsverfahren hergestellt werden.

Das Pultrusionsverfahren bzw. das Strangziehverfahren für faserverstärkte Kunststoffprofile ist dem durchschnittlichen Fachmann dabei bekannt.

Eine weitere bevorzugte Ausführungsform umfasst ein Herstellungsverfahren, umfassend die folgenden Schritte:
- Montieren der seitlichen Außenwände bzw. der Wandbereiche der seitlichen Außenwände auf das Chassis zu einer Außenwand der Sicherheitskabine
- Vorzugsweise Einziehen der Zwischenwand an einem Übergang vom vorderen Bereich der Kabine zum hinteren Bereich der Kabine in Querrichtung der Kabine.
- Vorzugsweise montieren eines Deckenelements für ein Dach der Sicherheitskabine.

Das Deformationselement ist konfiguriert für eine Erhöhung der Sicherheit und/oder Stabilisierung einer Fahrgastzelle eines Wohn- bzw. Reisemobils, bevorzugt einer Sicherheitskabine. Mit Erhöhung der Sicherheit ist insbesondere eine Verbesserung der Stabilität und/oder Umwandlungsfähigkeit gemeint, welche die Unfallsicherheit erhöht. Diese kann z. b: bei Crashtests gemessen und/oder berechnet werden. Konfiguriert bedeutet dabei vor allem, dass von dem Deformationselement eine solche Erhöhung der Sicherheit bewirkt wird.

Der durchschnittliche Fachmann erkennt, dass technische Merkmale, Definitionen und/oder Vorteile bevorzugter Ausführungsformen der erfindungsgemäßen Sicherheitskabine und des dort verwendeten Deformationselements auch für das hier beschriebene Deformationselement gelten. Insbesondere können vom Deformationselement auch Metallschäume umfasst sein.

In einer bevorzugten Ausführungsform der Erfindung weisen die Fasern der Faserverstärkung und/oder der Metallschaum eine Zugfestigkeit von mindestens 2.700 MPa, bevorzugt mindestens 2.850 MPa, stärker bevorzugt mindestens 3.000 MPa, und insbesondere mindestens 3.500 MPa und/oder ein Elastizitätsmodul von mindestens 70 GPa, bevorzugt mindestens 100 GPa, stärker bevorzugt mindestens 230 GPa und insbesondere mindestens 370 GPa und/oder eine Bruchdehnung von mindestens 0,7 %, bevorzugt mindestens 1,5 %, stärker bevorzugt mindestens 2,7 % und insbesondere mindestens 3,5 % in mindestens eine Richtung auf.

Es können aber ebenso Zugfestigkeiten von mindestens 1000 MPa, bevorzugt mindestens 2000 MPa, stärker bevorzugt mindestens 3000 MPa und insbesondere mindestens 3500 MPa und/oder einem Elastizitätsmodul von mindestens 50 GPa, bevorzugt mindestens 90 GPa und insbesondere mindestens 130 GPa in mindestens eine Richtung bevorzugt sein und/oder dass das Deformationselement eine hohe (Schlag-) Zähigkeit in mindestens eine Richtung aufweist.

Insbesondere kann das Deformationselement eine (Schlag-) Zähigkeit von mindestens XX in mindestens eine Richtung aufweisen

In einer weiteren bevorzugten Ausführungsform der Erfindung ist die Faserverstärkung ausgesucht aus der Gruppe umfassend Kohlenstofffasern, Aramidfasern und/oder Glasfasern.

In einer weiteren bevorzugten Ausführungsform der Erfindung umfasst die Faserverstärkung Faserrovings, wobei die Faserrovings eine Filamentzahl zwischen 1.000 und 50.000 und/oder eine Feinheit zwischen 30 und 3.500 tex, bevorzugt zwischen 40 und 400 tex aufweisen.

Der durchschnittliche Fachmann erkennt, dass technische Merkmale, Definitionen und/oder Vorteile bevorzugter Ausführungsformen des erfindungsgemäß in der vorstehend beschriebenen Sicherheitskabine umfassten Deformationselements auch für das hier beschriebene, erfindungsgemäße Deformationselement gelten.

In einer bevorzugten Ausführungsform der Erfindung weist das Deformationselement eine Zugfestigkeit von mehr als 2000 MPa, bevorzugt mehr als 3000 MPa und insbesondere mehr als 3500 MPa auf.

In einer bevorzugten Ausführungsform der Erfindung umfasst das Deformationselement kohlenstofffaserverstärkten Kunststoff, bevorzugt umfassend Aramid(e).

In einer weiteren bevorzugten Ausführungsform der Erfindung umfasst das Deformationselement mindestens ein stabilisierendes Winkelelement, bevorzugt zur Stabilisierung eines Eckbereichs der Sicherheitskabine nach der vorstehenden Beschreibung.

In einem weiteren Aspekt betrifft die Erfindung ein Verfahren zur Stabilisierung einer Fahrgastzelle eines Wohn- bzw. Reisemobils, bevorzugt einer Sicherheitskabine nach der vorstehenden Beschreibung, umfassend die folgenden Schritte:
- bevorzugt Analyse zur Festlegung sicherheitsrelevanter Bereiche der Fahrgastzelle und/oder der Sicherheitskabine;
- Einbringen eines stabilisierenden Deformationselements nach der vorstehenden Beschreibung in einem sicherheitsrelevanten Bereich der Fahrgastzelle und/oder der Sicherheitskabine.

Der durchschnittliche Fachmann erkennt, dass technische Merkmale, Definitionen und/oder Vorteile bevorzugter Ausführungsformen der erfindungsgemäßen Sicherheitskabine und/oder des erfindungsgemäßen Deformationselements auch für das hier beschriebene, erfindungsgemäße Verfahren gelten.

In einer bevorzugten Ausführungsform wird in einem ersten Schritt zunächst das Chassis mit bevorzugt zwei oder mehr Hauptträgern umfassend Hybridgewebe und/oder -gelege, anstelle von herkömmlichem Stahl, gebaut. In einem zweiten Schritt werden anschließend die Dach- und Rückpaneele montiert. Vorteilhaft können die etablierten Produktionsstraßen der Hersteller neben herkömmlichen Aufbauten auch für die erfindungsgemäße Sicherheitskabine genutzt werden.

### Detaillierte Beschreibung

Im Folgenden soll die Erfindung an Hand von Beispielen und Figuren näher erläutert werden, ohne auf diese beschränkt zu sein.

### Kurzbeschreibung der Abbildungen

**Figur 1** zeigt eine dreidimensionale Darstellung eines Wohnmobils mit Sicherheitskabine in einer Außenansicht.
**Figur 2** zeigt eine dreidimensionale Schnittdarstellung des Wohnmobils mit Sicherheitskabine ohne die vordere Außenwand.
**Figur 3** zeigt eine dreidimensionale Schnittdarstellung des Wohnmobils mit Sicherheitskabine ohne die vordere Außenwand, mit wesentlichen Elementen der Innenausstattung.
**Figur 4** zeigt eine dreidimensionale Darstellung des Wohnmobils mit Sicherheitskabine ohne die vordere Außenwand, mit einer Schnittdarstellung der hinteren Außenwand und einer gezeigten Unterteilung in Querrichtung.
**Figur 5** zeigt eine dreidimensionale Darstellung des Wohnmobils mit Sicherheitskabine ohne die vordere Außenwand mit einer Schnittdarstellung der hinteren Außenwand ohne gezigte Unterteilung in Querrichtung.
**Figur 6** zeigt eine dreidimensionale Schnittdarstellung des Wohnmobils ohne weite Teile der Sicherheitskabine, mit Längs- und Querträgern im Bodenbereich der Kabine.
**Figur 7** zeigt eine dreidimensionale Schnittdarstellung des Wohnmobils mit dem Fahrgestell.
**Figur 8** zeigt eine dreidimensionale Schnittdarstellung der Sicherheitskabine aus einer vorderen Perspektive
**Figur 9** zeigt eine dreidimensionale Schnittdarstellung der Sicherheitskabine aus einer hinteren Perspektive
**Figur 10** zeigt das Wohn bzw- Reisemobil in einer Draufsicht
**Figur 11a** zeigt den Aufbau einer Ausführungsform einer Wand im Querschnitt
**Figur 11b** zeigt den Aufbau einer zweiten Ausführungsform einer Wand im Querschnitt
**Figur 11c** zeigt den Aufbau einer dritten Ausführungsform einer Wand im Querschnitt
**Figur 12** zeigt den Aufbau eines multiaxialen Hybridgeleges
**Figur 13** zeigt den Herstellprozess eines multiaxialen Geleges

### Detaillierte Beschreibung der Abbildung

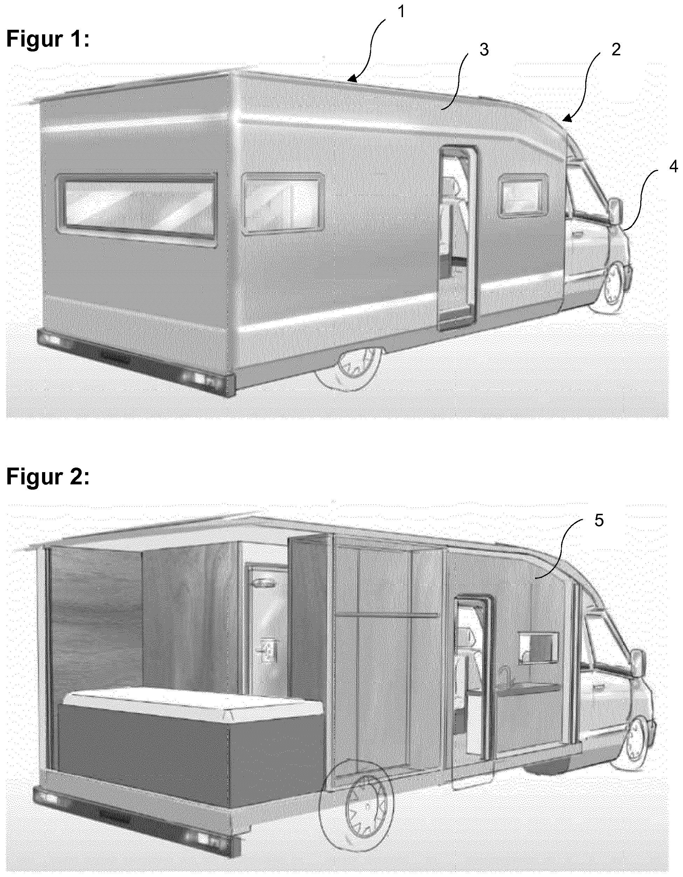

Figur 1 zeigt eine dreidimensionale Darstellung eines Wohnmobils **2** mit Sicherheitskabine **1** in einer Außenansicht. Die Sicherheitskabine **1** mit den äußeren Bereichen **3** befindet sich hinter dem Fahrerhaus **4.**

Figur 2 zeigt eine dreidimensionale Schnittdarstellung des Wohnmobils **2** mit Sicherheitskabine **1** ohne die vordere Außenwand. Der Innenraumbereich **5** wird deutlich sichtbar.

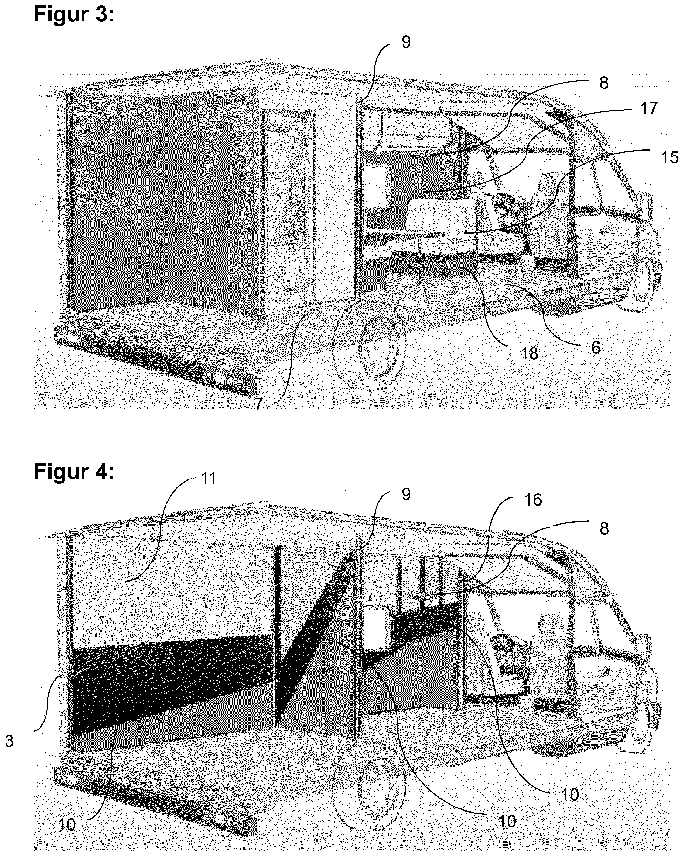

Figur 3 zeigt eine dreidimensionale Schnittdarstellung des Wohnmobils **2** mit Sicherheitskabine **1** ohne die vordere Außenwand, jedoch inklusive der wesentlichen Innenausstattung. Hierbei sind wesentliche sicherheitsrelevante Merkmale und vor allem Deformationselemente der Kabine **1** zu erkennen. Der Innenraumbereich **5** wird z. B. durch eine Unterteilung in Querrichtung **9** in einen vorderen **6** und einen hinteren Bereich **7** aufgeteilt. Der vordere Bereich **6** ist der Passagierbereich während der Fahrt, während im hinteren Bereich **7** das Bad und ein Bett (siehe Figur 2) untergebracht sind. Der Sitzbereich entgegen der Fahrtrichtung **15** im vorderen Bereich **6,** welcher über einen Sockel **18** mit der Sicherheitskabine verbunden ist, ist klar ersichtlich. Unauffällig und als Teil der Inneneinrichtung erscheinend ist über dem Sitzbereich ein stabilisierendes Winkelelement **8** in einem Eckbereich der Kabine **17** zu Erhöhung der Sicherheit eingebracht.

Figur 4 zeigt eine dreidimensionale Darstellung des Wohnmobils **2** mit Sicherheitskabine **1** ohne die vordere Außenwand und die Inneneinrichtung mit einer Schnittdarstellung der hinteren Außenwand, wobei die Unterteilung in Querrichtung **9** gezeigt wird. Zeichnerisch werden die in den äußeren Bereichen **3** und in der Unterteilung in Querrichtung **9** eingebrachten Lagen glasfaserverstärkten Kunststoffs **11** und kohlenstoff- und/oder aramidfaserverstärkten Kunststoffs **10** sichtbar gemacht, welche die Sicherheit der Kabine **1** wesentlich erhöhen. Da die Inneneinrichtung in dieser Figur nicht gezeigt wird, lässt sich auch das stabilisierende Winkelelement **8** im Eckbereich der Kabine **17** deutlich erkennen.

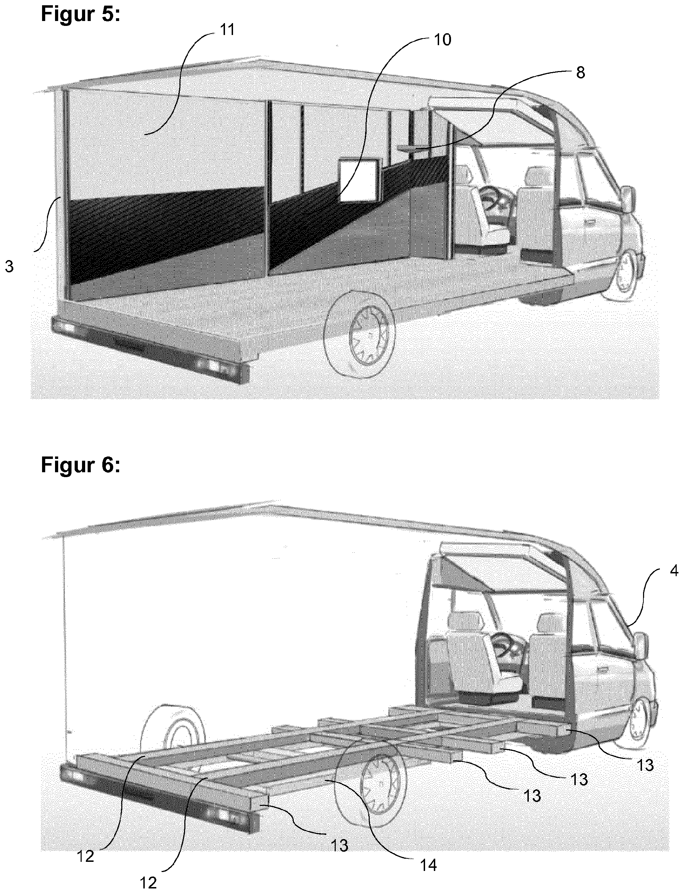

Figur 5 zeigt im Prinzip die gleiche Darstellung der Sicherheitskabine **1** wie Figur 4, jedoch ohne dass die Unterteilung in Querrichtung **9** dargestellt wird, wodurch die eingebrachten Lagen glasfaserverstärkten Kunststoffs **11** und kohlenstoff- und/oder aramidfaserverstärkten Kunststoffs **10** in den äußeren Bereichen **3** der Sicherheitskabine **1** noch deutlicher erkennbar werden.

Figur 6 zeigt eine dreidimensionale Schnittdarstellung des Wohnmobils **2** ohne weite Teile der Sicherheitskabine **1,** mit zwei Längs- **12** und vier Querträgern **13** im Bodenbereich der Kabine **1.** Diese bestehen bevorzugt aus kohlenstoff- und/oder aramidfaserverstärkter Kunststoff und sind bevorzugt sowohl mit dem Fahrgestell **14** als auch mit dem oberen Aufbau der Sicherheitskabine **1** verbunden.

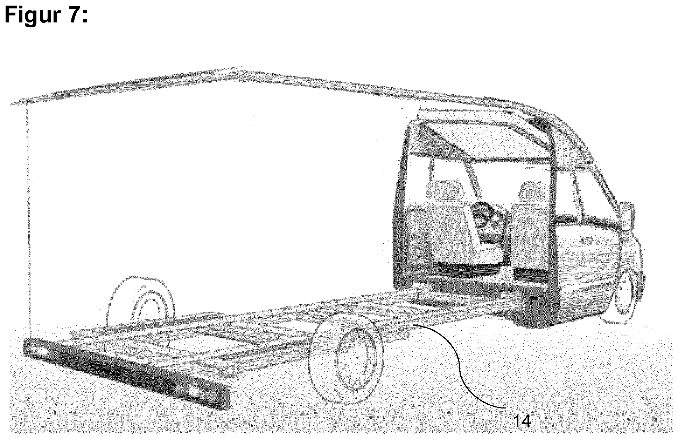

Figur 7 zeigt eine dreidimensionale Schnittdarstellung des Wohnmobils **2** mit dem Fahrgestell **14,** ohne Längs- **12** und Querträger **13.**

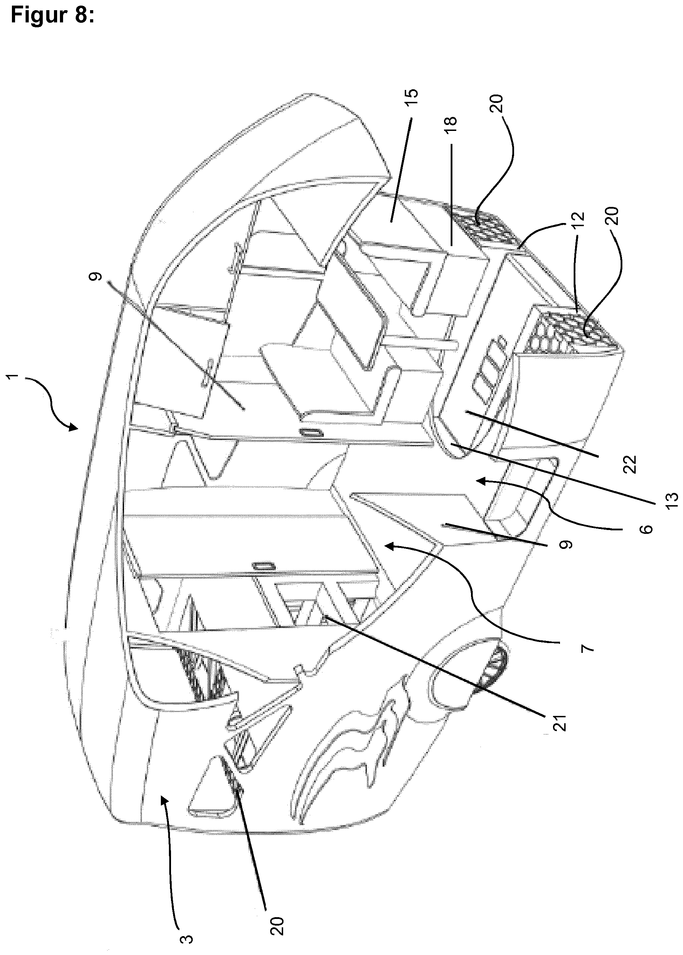

Figur 8 zeigt eine dreidimensionale Schnittdarstellung der Sicherheitskabine **1.** Einerseits ist der Innenraumbereich **5** und andererseits ein äußerer Bereich **3** abgebildet. Die Zwischenwand **9** teilt die Sicherheitskabine **1** in zwei Bereiche. Der vordere Bereich **6** der Sicherheitskabine **1** umfasst u.a. einen Sitzbereich **15** entgegen der Hauptfahrtrichtung, wobei dieser bevorzugt über einem Sockel **18** mit dem Chassis in Verbindung steht. Das Chassis der Sicherheitskabine **1** umfasst eine Schutzbox **22.** Die Schutzbox **22** ist bevorzugt so ausgestaltet, dass sie von zwei Seiten von jeweils von einem Längsträger **12** umfassend bevorzugt eine Wabenstruktur **20** und einer weiteren Seite von einem Querträgern **13** umschlossen ist. Die Längsträger **12** sind bevorzugt als ausgeschäumte Profile umfassend Hybridgewebe und/oder-gelege ausgestaltet. Die Schutzbox **22** ist im vorderen Bereich **6** der Sicherheitskabine **1** angeordnet und bietet einen Raum für eine Batterie und/oder eine Brennstoffzelle mit einem Wasserstofftank. Im hinteren Bereich **7** ist ebenfalls eine Schutzbox **21** vorhanden. Im Gegensatz zur vorderen Schutzbox **22** ist diese nicht im Chassis integriert. Die Schutzbox **21** ist so ausgestaltet, dass der zu schützende Bereich durch ein Gerüst bzw. einer fachwerkartigen Struktur von Längs- und Querträgern, welche mit den Trägern **(12, 13)** des Chassis verbunden sind, umgeben ist.

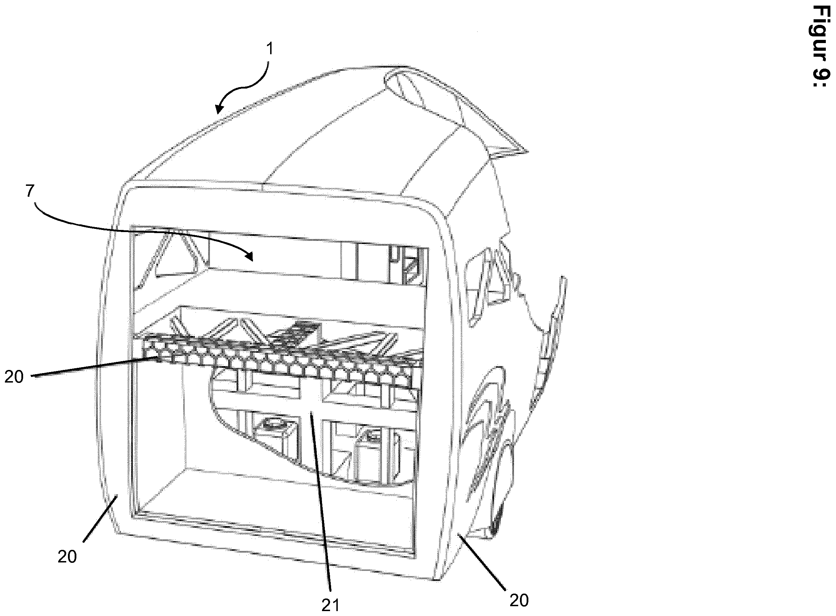

Figur 9 zeigt eine dreidimensionale Schnittdarstellung der Sicherheitskabine **1.** Hierbei steht das Heck der Sicherheitskabine **1** im Fokus. Es ist der hintere Bereich **7** der Sicherheitskabine zu sehen. Der hintere Bereich **7** umfasst eine Schutzbox **21.** Oberhalb der Schutzbox **21** ist ein Querträger **13** angebracht, welcher umlaufend eine Wabenstruktur **20** aus kohlenstofffaserverstärktem Kunststoff umfasst. Zudem ist die Wabenstruktur **20** in den Randbereichen des Chassis enthalten.

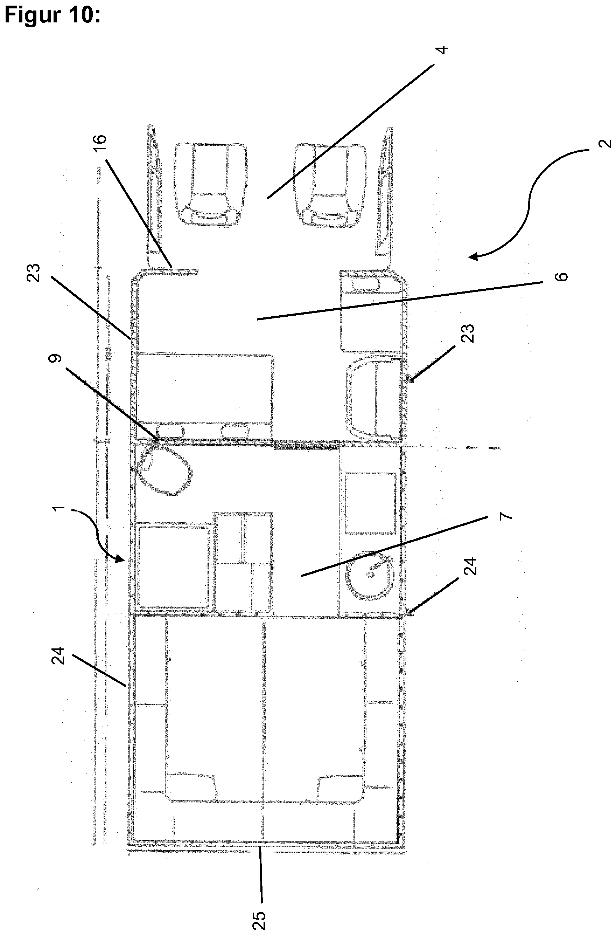

In Figur 10 ist das Wohn bzw- Reisemobil **2** in einer Draufsicht dargestellt. Die Sicherheitskabine **1** wird durch eine Zwischenwand **9** in einen vorderen **6** und einen hinteren **7** Bereich geteilt. Zudem liegt zwischen dem Fahrerhaus **4** und dem vorderen Bereich **6** der Sicherheitskabine **1** ein Deformationselement **16** vor. Die Außenwände des vorderen Bereichs **23** sowie die Zwischenwand **9** und das Deformationselement **16** umfassen bevorzugt pro Decklage ein Hybridgewebe und/oder-gelege mit 3 bis 9 Schichten. Die Außenwände des hinteren Bereichs **(24, 25)** umfassen hingegen bevorzugt pro Decklage ein Hybridgewebe und/oder -gelege mit 1 bis 5 Schichten.

Figur 11a, 11b und 11c bilden den Aufbau einer Außenwand im Querschnitt ab. Dabei ist die Wand in 3 Abschnitte unterteilt. Eine im Bezug auf die Sicherheitskabine außenliegende Decklage, eine im Bezug auf die Sicherheitskabine innenliegende Decklage und eine zwischen beiden Decklagen angeordnete Hartschaumschicht (XPS). Die äußere und innere Decklage beinhalten in Fig. 11a je zwei GFK-Gelege, die jeweils von einer Seite ein Hybridgelege (CFK) umschließen. Das Hybridgelege (CFK) wird dabei durch drei standardisierte biaxial Hybridgelege (CFK) mit einer Faserausrichtung von (0°/90°; +/- 45°, 90°/0°) zu einem multiaxialen Gelege laminiert. Die GFK-Gelege haben eine Faserorientierung von (0°/90° bzw. 90°/0°). Der Aufbau der inneren Decklage gleicht dem der äußeren Decklage, bis auf die Anordnung der Faserorientierungen der standardisierten biaxial Gelege. Die Faserorientierungen der inneren Decklage liegen dabei spiegelverkehrt gegenüber den Faserorientierungen der äußeren Decklage vor, sodass die Hartschaumschicht (XPS) als Spiegelebene oder auch Symmetrieebene gilt. Figur 11b und 11c unterscheiden sich zu Figur 11a in der Anzahl der laminierten biaxial Hybridgelege (CFK) und in deren Faserorientierungen.

Figur 12 zeigt den Aufbau eines multiaxialen Hybridgeleges. Durch das Laminieren mehrerer unidirektionaler Gelege umfasst das multiaxiale Gelege eine Faserausrichtung von (0°/ -15°/ - 30°/ -45/° -60°/ -75°/ -90°).

Figur 13 bildet den Herstellprozess eines multiaxialen Geleges ab. Der Pfeil verdeutlicht dabei die Produktionsrichtung, welche die 0°-Faserorientierung definiert,

### Bezugszeichenliste

- 1: Sicherheitskabine
- 2: Wohn- bzw. Reisemobil
- 3: äußerer Bereich
- 4: Fahrerhaus
- 5: Innenraumbereich
- 6: vorderer Bereich
- 7: hinterer Bereich
- 8: stabilisierendes Winkelelement
- 9: Unterteilung in Querrichtung
- 10: Kohlenstoff- und/oder Aramidfaserverstärkter Kunststoff
- 11: Glasfaserverstärkter Kunststoff
- 12: Längsträger
- 13: Querträger
- 14: Fahrgestell
- 15: Sitzbereich entgegen Fahrtrichtung bzw. Hauptfahrtrichtung
- 16: Deformationselement zwischen Fahrerhaus und Innenraumbereich
- 17: Eckbereich der Kabine
- 18: Sockel
- 20: Wabenstruktur
- 21: Schutzbox im hinteren Bereich
- 22: Schutzbox im vorderen Bereich
- 23: seitliche Außenwand im vorderen Bereich
- 24: seitliche Außenwand im hinteren Bereich
- 25: Außenwand am Heck der Sicherheitskabine

## Patentansprüche

1. Sicherheitskabine (1) für ein Wohn- bzw. Reisemobil (2) umfassend einen hinter einem Fahrerhaus (4) anordenbaren Teil der Sicherheitskabine (1),
wobei Wände (9, 23, 24, 25) der Sicherheitskabine (1) mindestens eine Lage eines faserverstärkten Kunststoff-gewebes und/oder-geleges umfassen, wobei eine Lage entlang einer Querrichtung aufeinanderfolgende Schichten aufweist, wobei direkt aufeinanderfolgende Schichten zueinander unterschiedliche Faserorientierungen aufweisen, wobei die Lage in seitlichen Außenwänden (23) in einem in Bezug auf eine vorgesehene Hauptfahrtrichtung vorderen Bereich (6) der Kabine bevorzugt mindestens drei bis neun Schichten umfasst,
wobei die Lage in den seitlichen Außenwänden (24) in einem in Bezug auf eine vorgesehene Hauptfahrtrichtung hinteren Bereich (7) der Kabine bevorzugt eine bis fünf Schichten umfasst,
wobei an einem Übergang vom vorderen Bereich (6) der Kabine zum hinteren Bereich (7) der Kabine quer zu einer Längsrichtung der Kabine eine Zwischenwand (9) angeordnet vorliegt,
wobei die Zwischenwand (9) eine Lage enthaltend bevorzugt drei bis neun Schichten umfasst.

2. Sicherheitskabine (1) nach dem vorherigen Anspruch,
wobei in dem vorderen Bereich (6) mehr Schichten umfasst sind als in dem hinteren Bereich (7).

3. Sicherheitskabine (1) nach einem oder mehreren der vorherigen Ansprüche,
wobei
die Faserverstärkung ausgesucht ist aus der Gruppe umfassend Kohlenstofffasern, Aramidfasern und/oder Glasfasern,
wobei bevorzugt das Kunststoffgewebe und/oder-gelege ein Hybridgewebe und/oder-gelege ist, welches eine gemischte Faserverstärkung aus Kohlenstofffasern und Aramidfasern umfasst.

4. Sicherheitskabine (1) nach einem oder mehreren der vorherigen Ansprüche,
wobei
in der Lage im vorderen Bereich (6) der Kabine ein Hybridgewebe und/oder -gelege enthalten ist, welches
i. vier Schichten umfasst, wobei sich die Faserorientierungen der aufeinanderfolgenden Schichten jeweils um einen Winkel von 30°unterscheiden oder
ii. sechs Schichten umfasst, wobei sich die Faserorientierungen der aufeinanderfolgenden Schichten jeweils um einen Winkel von 18°unterscheiden oder
iii. sieben Schichten umfasst, wobei sich die Faserorientierungen der aufeinanderfolgenden Schichten jeweils um einen Winkel 15° unterscheiden,
wobei bevorzugt in der Lage im hinteren Bereich (7) der Kabine ein Hybridgewebe und/oder -gelege enthalten ist, welches
i. zwei Schichten umfasst, wobei sich die Faserorientierungen der aufeinanderfolgenden Schichten jeweils um 90° unterscheiden oder
ii. drei Schichten umfasst, wobei sich die Faserorientierungen der aufeinanderfolgenden Schichten jeweils um Winkel 45° unterscheiden.

5. Sicherheitskabine (1) nach einem oder mehreren der vorherigen Ansprüche,
wobei
in der Lage zwei äußere Schichten aus glasfaserverstärktem Kunststoff umfasst sind, welche die Lage an zwei gegenüberliegenden Außenflächen abschließen, wobei sich die Faserorientierung jeder äußeren Schicht bevorzugt um 90° von der darunterliegenden Schicht und/oder der anderen äußeren Schicht unterscheidet,
wobei bevorzugt jede Schicht der Lage eine Dicke von etwa 0,3 mm aufweist.

6. Sicherheitskabine (1) nach einem oder mehreren der vorherigen Ansprüche,
wobei
die Wände (9, 23, 24, 25) der Sicherheitskabine mindestens einen Schaumstoff, bevorzugt einen Hartschaum, insbesondere Extrudierten Polystyrol-Hartschaum (XPS) umfassen, wobei bevorzugt die Wände (9, 23, 24, 25) der Sicherheitskabine (1) mindestens zwei Lagen eines faserverstärkten Kunststoffgewebes und/oder-geleges umfassen, wobei zwischen den Lagen bevorzugt eine Schaumstofflage positioniert ist,
wobei bevorzugt die Schaumstofflage einen Hartschaumstoff umfasst und eine Dicke von etwa 30 mm aufweist,
wobei bevorzugt die zwei Lagen des faserverstärkten Kunststoffgewebes und/oder-geleges einen bezogen auf die Faserorientierung symmetrischen Schichtenaufbau zu einer zwischen den Lagen liegenden Symmetrieebene aufweisen.

7. Sicherheitskabine (1) nach einem oder mehreren der vorherigen Ansprüche,
wobei
die Faserverstärkung des Hybridgewebes und/oder-geleges mit einem Gewichtsanteil zwischen 40 % und 60 % und insbesondere etwa 50 % Aramidfasern umfasst, wobei
darüber hinaus Kohlenstofffasern umfasst sind und wobei sich die Gewichtsanteile auf das Gesamtgewicht der Faserverstärkung beziehen.

8. Sicherheitskabine (1) nach einem oder mehreren der vorherigen Ansprüche,
wobei
ein vorderer (6) und/oder ein hinterer (7) Bereich eine Ausdehnung von mindestens 1,5 m in Längsrichtung der Sicherheitskabine (1) aufweist.

9. Sicherheitskabine (1) nach einem oder mehreren der vorherigen Ansprüche,
wobei
ein Chassis der Sicherheitskabine (1) enthalten ist, wobei das Chassis umfasst:
- mindestens ein ausgeschäumtes Profil umfassend Hybridgewebe und/oder-gelege als Längs- (12) und/oder Querträger (13);
- mindestens ein Paneel enthaltend Hybridgewebe und/oder -gelege zu einer bevorzugt aerodynamischen Ausgestaltung der von den Profilen nicht umfassten Bereichen des Chassis;
- mindestens eine Lage des Hybridgewebes und/oder-geleges,
wobei bevorzugt das Chassis in einem seitlichen Randbereich zumindest bereichsweise umlaufend mindestens ein Deformationselemente umfasst, vorzugsweise aufweisend eine Wabenstruktur (20) aus kohlenstofffaserverstärktem Kunststoff und/oder mindestens ein ausgeschäumtes Profil umfassend Hybridgewebe und/oder-gelege, wobei das Deformationselement vorzugsweise mit mindestens einem Paneel vorliegt,
wobei besonders bevorzugt das Chassis mindestens eine Hinterachse und/oder mindestens ein Antriebsaggregat umfasst.

10. Sicherheitskabine (1) nach einem oder mehreren der vorherigen Ansprüche,
wobei
die Sicherheitskabine (1) mindestens eine Batterie, mindestens eine Brennstoffzelle und/oder mindestens einen Wassertank umfasst, wobei Batterie, Brennstoffzelle und/oder Wassertank vorzugsweise in einer Schutzbox (21, 22) im vorderen (6) und/oder im hinteren (7) Bereich der Kabine untergebracht sind,
wobei bevorzugt die Schutzbox (22) im vorderen Bereich (6) nach außen zumindest bereichsweise durch mindestens ein Deformationselement begrenzt wird, welche insbesondere eine Wabenstruktur (20) aus kohlenstofffaserverstärktem Kunststoff und/oder mindestens ein ausgeschäumtes Profil umfassend Hybridgewebe und/oder-gelege umfasst, wobei die Schutzbox (22) vorzugsweise mit einem Längs- (12) und/oder Querträger (13) des Chassis verbunden vorliegt.

11. Sicherheitskabine (1) nach einem oder mehreren der vorherigen Ansprüche,
wobei
der Innenraumbereich (5) mindestens einen entgegen insbesondere der Hauptfahrtrichtung installierten Sitzbereich (15) aufweist,
wobei der Sitzbereich (15) ein kohlenstofffaserverstärktes Hybridgewebe und/oder-gelege umfasst, welches vorzugsweise mit dem Chassis direkt verbunden vorliegt,
wobei bevorzugt die Sicherheitskabine (1) Einrichtungsgegenstände, insbesondere mindestens einen Sitzbereich (15), eine Sitzbank, einen Schrank und/oder eine Badezimmer-Trennwand umfasst, wobei die Einrichtungsgegenstände unter Beachtung von Lastpfad-Berechnungen durch einen faserverstärkten Kunststoff mit dem Chassis und/oder der Sicherheitskabine (1) fest verbunden vorliegen,
wobei bevorzugt die seitlichen Außenwände (23, 24) der Kabine fachwerkartig angeordnete Träger aus kohlenstofffaserverstärkten Kunststoffprofilen, insbesondere Längs (12) - und Querträger (13) umfassen, zwischen denen die Lagen des faserverstärkten Kunststoffgewebes angeordnet vorliegen, wobei die Träger (12, 13) vorzugsweise entlang wahrscheinlicher Lastpfade bei einem Unfall angeordnet vorliegen.

12. Herstellungsverfahren für eine Sicherheitskabine (1) für ein Wohn- bzw. Reisemobil (2), umfassend mindestens einen hinter einem Fahrerhaus (4) anordenbaren Teils der Sicherheitskabine, umfassend die Herstellung einer Lage eines faserverstärkten Kunststoffgewebes und/oder -geleges für eine Wand (9, 23, 24, 25) der Sicherheitskabine (1),
wobei
mehrere Schichten eines faserverstärkten Kunststoffgewebes und/oder-geleges zu der Lage laminiert werden, wobei die Schichten in Querrichtung der Lage angeordnet sind, wobei direkt aufeinanderfolgende Schichten zueinander unterschiedliche Faserorientierungen aufweisen, wobei die Lage einer seitlichen Außenwand (23) für einen in Hauptfahrtrichtung vorderen (6) Bereich der Kabine mindestens drei bis neun Schichten umfasst, wobei die Lage einer seitlichen Außenwand (24) für einen in die Hauptfahrtrichtung hinteren Bereich (7) der Kabine eine bis fünf Schichten umfasst sind, wobei in dem vorderen Bereich (6) mehr Schichten umfasst sind als in dem hinteren Bereich (7) und wobei eine für eine Zwischenwand (9) in Querrichtung der Kabine vorgesehen Lage drei bis neun Schichten umfasst

13. Herstellungsverfahren nach dem vorherigen Anspruch, umfassend weiterhin folgende Schritte:
- Laminieren zweier äußerer Schichten aus glasfaserverstärktem Kunststoff auf die Lage, welche die Lage an zwei gegenüberliegenden Außenflächen abschließen, wobei sich die Faserorientierung jeder äußeren Schicht bevorzugt um 90° von der darunterliegenden Schicht und/oder der anderen äußeren Schicht unterscheidet,
wobei bevorzugt das Herstellungsverfahren weiterhin folgenden Schritt umfasst:
- Verbinden mindestens zweier Lagen eines faserverstärkten Kunststoffgewebes und/oder - geleges zu einer Wand (9, 23, 24, 25) bzw. einem Wandbereich der Sicherheitskabine (1), wobei zwischen den Lagen bevorzugt eine Schaumstofflage positioniert ist, wobei die zwei Lagen des faserverstärkten Kunststoffgewebes und/oder-geleges bezogen auf die Faserorientierung einen symmetrischen Schichtenaufbau zu einer zwischen den Lagen liegenden Symmetrieebene aufweisen,
wobei bevorzugt das Herstellungsverfahren weiterhin folgenden Schritt umfasst:
- Verbinden einer Wand (23) bzw. eines Wandbereichs des vorderen Bereichs (6) mit einer Wand (24) bzw. eines Wandbereichs des hinteren Bereichs (7) zu einer seitlichen Außenwand bzw. zu einem Wandbereich einer seitlichen Außenwand.

14. . Herstellungsverfahren nach einem oder mehreren der vorherigen Ansprüche 12 und/oder 13 umfassend die Herstellung eines Chassis der Sicherheitskabine (1), umfassend die folgenden Schritte:
- Bereitstellen mindestens eines ausgeschäumten Profils umfassend Hybridgewebe und/oder-gelege für einen Längs- (12) und/oder Querträger (13);
- Vorzugsweise Verbinden von Längsträger (12) und Querträger (13)
- bevorzugt aerodynamischen Auskleidung der von den Profilen nicht umfassten Bereichen des Chassis durch mindestens ein Paneel enthaltend Hybridgewebe;
bevorzugt Einziehen mindestens eine Lage eines Hybridgewebes und/oder-geleges, wobei bevorzugt kohlenstofffaserverstärkte Kunststoffprofile durch ein Pultrusionsverfahren hergestellt werden können.

15. Herstellungsverfahren nach einem der vorherigen Ansprüche 13 oder 14, umfassend die folgenden Schritte:
- Montieren der seitlichen Außenwände (23, 24) bzw. der Wandbereiche der seitlichen Außenwände auf das Chassis zu einer Außenwand der Sicherheitskabine (1)
- vorzugsweise Einziehen der Zwischenwand (9) an einem Übergang vom vorderen Bereich (6) der Kabine zum hinteren Bereich (7) der Kabine in Querrichtung der Kabine,
- vorzugsweise montieren eines Deckenelements für ein Dach der Sicherheitskabine.

## Claims

1. A safety cabin (1) for a recreational or camper van (2), comprising a part of the safety cabin (1) which can be arranged behind a driver's cab (4),
wherein walls (9, 23, 24, 25) of the safety cabin (1) have at least one ply of fibre-reinforced plastic fabric and/or non-crimp fabric, wherein one ply has successive layers along a transverse direction, wherein directly successive layers have different fibre orientations to one another, wherein the ply in lateral outer walls (23) in a front area (6) of the cabin in relation to an intended main direction of travel preferably has at least three to nine layers,
wherein the ply in the lateral outer walls (24) in a rear area (7) of the cabin in relation to an intended main direction of travel preferably comprises one to five layers,
wherein a partition wall (9) is arranged transversely to a longitudinal direction of the cabin at a transition from the front area (6) of the cabin to the rear area (7) of the cabin, wherein the intermediate wall (9) comprises a ply containing preferably three to nine layers.

2. The safety cabin (1) of claim 1,
wherein more layers are comprised in the front area (6) than in the rear area (7).

3. The safety cabin (1) of any one or more of the preceding claims,
wherein the fibre reinforcement is selected from the group consisting of carbon fibres,
aramid fibres and/or fibreglass,
wherein the plastic fabric and/or non-crimp fabric is a hybrid fabric and/or non-crimp fabric which comprises a mixed fibre reinforcement of carbon fibres and aramid fibres.

4. The safety cabin (1) of any one or more of the preceding claims,
wherein a hybrid fabric and/or non-crimp fabric is included in the ply in the front area (6) of the cabin, which hybrid fabric and/or non-crimp fabric
i. comprises four layers, the fibre orientations of the successive layers each differing by an angle of 30°, or
ii. comprises six layers, the fibre orientations of the successive layers each differing by an angle of 18°, or
iii. comprises seven layers, the fibre orientations of the successive layers each differing by an angle of 15°,
wherein a hybrid fabric and/or non-crimp fabric is included in the ply in the rear area (7) of the cabin, which hybrid fabric and/or non-crimp fabric
i. comprises two layers, the fibre orientations of the successive layers each differing by an angle of 90°, or
ii. comprises three layers, with the fibre orientations of the successive layers each differing by an angle of 45°.

5. The safety cabin (1) of any one or more of the preceding claims,
wherein the ply comprises two outer layers of glass-fibre-reinforced plastic which terminate the ply at two opposite outer surfaces, the fibre orientation of each outer layer preferably differing by 90° from the underlying layer and/or the other outer layer,
wherein each layer of the ply preferably has a thickness of about 0.3 mm.

6. The safety cabin (1) of any one or more of the preceding claims,
wherein the walls (9, 23, 24, 25) of the safety cabin comprise at least one foam, preferably a rigid foam, in particular extruded rigid polystyrene foam (XPS),
wherein the walls (9, 23, 24, 25) of the safety cabin (1) preferably comprise at least two plies of a fibre-reinforced plastic fabric and/or non-crimp fabric, a foam ply preferably being positioned between the plies,
wherein the foam ply preferably comprises a rigid foam and has a thickness of about 30 mm,
wherein the two plies of the fibre-reinforced plastic fabric and/or non-crimp fabric preferably have a layer structure which is symmetrical with respect to the fibre orientation in relation to a plane of symmetry lying between the plies.

7. The safety cabin (1) of any one or more of the preceding claims,
wherein the fibre reinforcement of the hybrid fabric and/or non-crimp fabric with a weight percentage between 40 % and 60 % and especially about 50 % includes aramid fibres, also including carbon fibres and the proportions by weight relating to the total weight of the fibre reinforcement.

8. The safety cabin (1) of any one or more of the preceding claims,
wherein a front (6) and/or a rear (7) area extends at least 1.5 m in the longitudinal direction of the safety cabin (1).

9. The safety cabin (1) of any one or more of the preceding claims,
wherein a chassis of the safety cab (1) is included, the chassis comprising:
- at least one foam-filled profile comprising hybrid fabric and/or non-crimp fabric as longitudinal member (12) and/or cross member (13);
- at least one panel containing hybrid fabric and/or non-crimp fabric for a preferred aerodynamic configuration of the areas of the chassis not covered by the profiles;
- at least one ply of the hybrid fabric and/or non-crimp fabric, wherein the chassis preferably comprises at least one deformation element in a lateral edge area, circumferentially, at least in some areas, which chassis preferably has a honeycomb (20) made of carbon-fibre-reinforced plastic and/or at least one foam-filled profile comprising hybrid fabric and/or non-crimp fabric, the deformation element being preferably present with at least one panel,
wherein the chassis particularly preferably comprises at least one rear axle and/or at least one drive unit.

10. The safety cabin (1) of any one or more of the preceding claims,
wherein the safety cabin (1) comprises at least one battery, at least one fuel cell and/or at least one water tank, the battery, the fuel cell and/or the water tank preferably being housed in a protective box (21,22) in the front (6) and/or in the rear (7) area of the cabin,
wherein the protective box (22) in the front area (6) is preferably outwardly delimited at least in areas by at least one deformation element, which in particular is a honeycomb (20) made of carbon-fibre-reinforced plastic and/or
at least one foam-filled profile comprising a hybrid fabric and/or non-crimp fabric, the protective box (22) being preferably connected with a longitudinal member (12) and/or a cross member (13) of the chassis.

11. The safety cabin (1) of any one or more of the preceding claims,
wherein the interior area (5) has at least one seating area (15) installed in particular against the direction of travel,
wherein the seating area (15) comprises a carbon-fibre-reinforced hybrid fabric and/or non-crimp fabric, which is preferably directly connected to the chassis,
wherein the safety cabin (1) preferably has furnishings, in particular at least one seating area (15), a bench, a cupboard and/or a bathroom partition wall, the furnishings being firmly connected to the chassis and/or the safety cabin (1) by a fibre-reinforced plastic, taking into account load path calculations, wherein the lateral outer walls (23, 24) of the cabin preferably comprise truss-like members made of carbon-fibre-reinforced plastic profiles, in particular longitudinal members (12) and cross members (13), between which the plies of the fibre-reinforced plastic fabric are arranged, the supports (12, 13) preferably being located along probable load paths in case of an accident.

12. A manufacturing method of a safety cabin (1) for a recreational or camper van (2),
comprising at least one part of the safety cabin which can be arranged behind a driver's cab (4), comprising the manufacturing of a ply of a fibre-reinforced plastic fabric and/or non-crimp fabric for a wall (9, 23, 24, 25) of the safety cabin (1),
wherein several layers of a fibre-reinforced plastic fabric and/or non-crimp fabric are laminated to form the ply, the layers being arranged in the transverse direction of the ply, with directly succeeding layers having different fibre orientations to one another, wherein the ply of a lateral outer wall (23) for a front (6) area of the cabin in the main direction of travel comprises at least three to nine layers, wherein the ply of a lateral outer wall (24) for a rear area (7) of the cabin in the main direction of travel comprises one to five layers, with more layers being comprised in the front area (6) than in the rear area (7), and wherein a ply provided for a partition wall (9) in the transverse direction of the cabin comprises three to nine layers.

13. The manufacturing method of the preceding claim, further comprising the following steps:
- laminating two outer layers of glass-fibre-reinforced plastic onto the ply, which outer layers delimit the ply at two opposite outer surfaces, the fibre orientation of each outer layer preferably differing by 90° from the underlying layer and/or the other outer layer,
wherein the manufacturing method preferably further comprises the following step:
- joining at least two plies of a fibre-reinforced plastic fabric and/or non-crimp fabric to a wall (9, 23, 24, 25) or a wall area of the safety cabin (1), with a foam ply preferably being positioned between the plies, wherein the two plies of the fibre-reinforced plastic fabric and/or non-crimp fabric have a layer structure which is symmetrical with respect to the fibre orientation in relation to a plane of symmetry between the plies, wherein the manufacturing process preferably further comprises the following step:
- connecting a wall (23) or a wall area of the front area (6) with a wall (24) or a wall area of the rear area (7) to form a lateral outer wall or a wall area of a lateral outer wall.

14. The manufacturing method of any one or more of the preceding claims 12 and/or 13, comprising the manufacturing of a chassis of the safety cabin (1), comprising the following steps:
- providing at least one foam-filled profile comprising hybrid fabric and/or non-crimp fabric for a longitudinal member (12) and/or a cross member (13);
- preferably connecting the longitudinal member (12) and the cross member (13);
- preferably aerodynamically lining the areas of the chassis which are not covered by the profiles by at least one panel which contains hybrid fabric;
- preferably inserting at least one ply of a hybrid fabric and/or non-crimp fabric,
wherein preferably carbon-fibre-reinforced plastic profiles can be obtained by a pultrusion process.

15. The manufacturing method of any one of the preceding claims 13 or 14, comprising the following steps:
- assembling the lateral outer walls (23, 24) or the wall areas of the lateral outer walls on the chassis to form an outer wall of the safety cabin (1)
- preferably inserting the partition wall (9) at a transition from the front area (6) of the cabin to the rear area (7) of the cabin in the transverse direction of the cabin,
- preferably installing a ceiling element for a roof of the safety cabin.

## Revendications

1. Cabine de sécurité (1) pour un camping-car ou une caravane automobile (2) comprenant une partie de la cabine de sécurité (1) pouvant être disposée derrière une cabine de conduite (4), dans laquelle les parois (9, 23, 24, 25) de la cabine de sécurité (1) comprennent au moins une strate de tissu et/ou treillis plastique renforcé de fibres, dans laquelle une strate comporte des couches successives le long d'une direction transversale, dans laquelle des couches directement successives comportent des orientations de fibres différentes les unes par rapport aux autres, dans laquelle la strate dans les parois extérieures latérales (23) dans une zone avant (6) de la cabine par rapport à une direction de déplacement principale prévue comprend de préférence au moins trois à neuf couches,
dans laquelle la strate dans les parois extérieures latérales (24) dans une zone arrière (7) de la cabine par rapport à une direction de déplacement principale prévue comprend de préférence une à cinq couches,
dans laquelle une paroi intermédiaire (9) est disposée transversalement à une direction longitudinale de la cabine à une transition entre la zone avant (6) de la cabine et la zone arrière (7) de la cabine,
dans laquelle la paroi intermédiaire (9) comprend une strate incluant de préférence trois à neuf couches.

2. Cabine de sécurité (1) selon la revendication précédente,
dans laquelle plus de couches sont comprises dans la zone avant (6) que dans la zone arrière (7).

3. Cabine de sécurité (1) selon une ou plusieurs des revendications précédentes,
dans laquelle le renfort fibreux est choisi dans le groupe constitué de fibres de carbone, de fibres d'aramide et/ou de fibres de verre,
dans laquelle le tissu et/ou treillis plastique est un tissu et/ou treillis hybride qui comprend un renfort fibreux mixte de fibres de carbone et de fibres d'aramide.

4. Cabine de sécurité (1) selon une ou plusieurs des revendications précédentes,
dans laquelle un tissu et/ou treillis hybride est inclut dans la strate dans la zone avant (6) de la cabine qui
i. comprend quatre couches, dans laquelle les orientations des fibres des couches successives diffèrent chacune d'un angle de 30° ou
ii. comprend six couches, dans laquelle les orientations des fibres des couches successives diffèrent chacune d'un angle de 18° ou
iii. comprend sept couches, dans laquelle les orientations des fibres des couches successives diffèrent chacune d'un angle de 15°,
dans laquelle un tissu et/ou treillis hybride est inclut de préférence dans la strate dans la zone arrière (7) de la cabine qui
i. comprend deux couches, dans laquelle les orientations des fibres des couches successives diffèrent chacune de 90° ou
ii. comprend trois couches, dans laquelle les orientations des fibres des couches successives diffèrent chacune d'un angle de 45°.

5. Cabine de sécurité (1) selon une ou plusieurs des revendications précédentes,
dans laquelle la strate comprend deux couches externes de plastique renforcé de fibres de verre, qui ferment la strate au niveau de deux surfaces externes opposées, dans laquelle l'orientation des fibres de chaque couche externe diffère de préférence de 90° par rapport à la couche sous-jacente et/ou l'autre couche externe,
dans laquelle chaque couche de la strate présente de préférence une épaisseur d'environ 0,3 mm.

6. Cabine de sécurité (1) selon une ou plusieurs des revendications précédentes,
dans laquelle les parois (9, 23, 24, 25) de la cabine de sécurité comprennent au moins une mousse, de préférence une mousse rigide, en particulier une mousse rigide de polystyrène extrudé (XPS),
dans laquelle les parois (9, 23, 24, 25) de la cabine de sécurité (1) comprennent de préférence au moins deux strates d'un tissu et/ou treillis plastique renforcé de fibres, dans laquelle une strate de mousse est positionnée de préférence entre les strates,
dans laquelle la strate de mousse comprend de préférence une mousse rigide et présente une épaisseur d'environ 30 mm,
dans laquelle les deux strates de tissu et/ou treillis plastique renforcé de fibres comportent de préférence une structure de couches symétrique par rapport à l'orientation des fibres par rapport à un plan de symétrie situé entre les strates.

7. Cabine de sécurité (1) selon une ou plusieurs des revendications précédentes,
dans laquelle le renfort fibreux du tissu et/ou treillis hybride comprend un pourcentage en poids compris entre 40 % et 60 % et en particulier environ 50 % de fibres d'aramide, dans laquelle des fibres de carbone sont en outre comprises et dans laquelle les pourcentages en poids se rapportent au poids total du renfort fibreux.

8. Cabine de sécurité (1) selon une ou plusieurs des revendications précédentes,
dans laquelle une zone avant (6) et/ou arrière (7) s'étend sur au moins 1,5 m dans la direction longitudinale de la cabine de sécurité (1).

9. Cabine de sécurité (1) selon une ou plusieurs des revendications précédentes,
dans laquelle un châssis de la cabine de sécurité (1) est inclus, dans laquelle le châssis comprend :
- au moins un profilé rempli de mousse comprenant un tissu et/ou treillis hybride comme support longitudinal (12) et/ou support transversal (13) ;
- au moins un panneau incluant un tissu et/ou treillis hybride pour une configuration aérodynamique privilégiée des zones du châssis non couvertes par les profilés ;
- au moins une strate du tissu et/ou treillis hybride,
dans laquelle le châssis comprend de préférence au moins un élément de déformation dans une zone de bord latérale, au moins dans certaines zones, circonférentiellement, comportant de préférence une structure en nid d'abeille (20) en plastique renforcé de fibres de carbone et/ou au moins un profilé rempli de mousse comprenant un tissu et/ou treillis hybride, dans laquelle l'élément de déformation est de préférence présent avec au moins un panneau,
dans laquelle le châssis comprend de préférence au moins un essieu arrière et/ou au moins une unité d'entraînement.

10. Cabine de sécurité (1) selon une ou plusieurs des revendications précédentes,
dans laquelle la cabine de sécurité (1) comprend au moins une batterie, au moins une pile à combustible et/ou au moins un réservoir d'eau, dans laquelle la batterie, la pile à combustible et/ou le réservoir d'eau sont logés de préférence dans un boîtier de protection (21, 22) dans la zone avant (6) et/ou arrière (7) de la cabine,
dans laquelle le boîtier de protection (22) dans la zone avant (6) est délimité de préférence vers l'extérieur au moins dans certaines zones par au moins un élément de déformation, qui comprend en particulier une structure en nid d'abeilles (20) en plastique renforcé de fibres de carbone et/ou
au moins un profilé rempli de mousse comprenant un tissu et/ou treillis hybride, dans laquelle le boîtier de protection (22) est de préférence relié à un support longitudinal (12) et/ou à un support transversal (13) du châssis.

11. Cabine de sécurité (1) selon une ou plusieurs des revendications précédentes,
dans laquelle la zone intérieure (5) comporte au moins une zone d'assise (15) installée en particulier dans la direction opposée à la direction de déplacement principale,
dans laquelle la zone d'assise (15) comprend un tissu et/ou treillis hybride renforcé de fibres de carbone, qui est de préférence directement relié au châssis,
dans laquelle la cabine de sécurité (1) comprend de préférence des meubles, en particulier au moins une zone d'assise (15), une banquette, une armoire et/ou une cloison de salle de bain, dans laquelle les meubles sont reliés fixement au châssis et/ou à la cabine de sécurité (1) par un plastique renforcé de fibres, en tenant compte des calculs de chemin de charge,
dans laquelle les parois extérieures latérales (23, 24) de la cabine comprennent de préférence des supports disposés en treillis constitués de profilés en plastique renforcé de fibres de carbone, en particulier des supports longitudinaux (12) et transversaux (13), entre lesquels les strates de tissu en plastique renforcé de fibres sont disposées, dans laquelle les supports (12, 13) sont disposés de préférence le long de chemins de charge probables en cas d'accident.

12. Méthode de fabrication pour une cabine de sécurité (1) pour un camping-car ou une caravane automobile (2),
comprenant au moins une partie de la cabine de sécurité pouvant être disposée derrière une cabine de conduite (4), comprenant la fabrication d'une strate d'un tissu et/ou treillis plastique renforcé de fibres pour une paroi (9, 23, 24, 25) de la cabine de sécurité (1),
dans laquelle plusieurs couches d'un tissu et/ou treillis en plastique renforcé de fibres sont laminées pour former la strate, dans laquelle les couches sont disposées dans la direction transversale de la strate, dans laquelle des couches directement successives comportent des orientations de fibres différentes les unes des autres, dans laquelle la strate d'une paroi extérieure latérale (23) pour une zone avant (6) de la cabine dans la direction de déplacement principale comprend au moins trois à neuf couches, dans laquelle la strate d'une paroi extérieure latérale (24) pour une zone arrière (7) de la cabine dans la direction de déplacement principale comprend une à cinq couches, dans laquelle plus de couches sont comprises dans la zone avant (6) que dans la zone arrière (7), et dans laquelle une strate prévue pour une paroi intermédiaire (9) dans la direction transversale de la cabine comprend trois à neuf couches.

13. Méthode de fabrication selon la revendication précédente, comprenant en outre les étapes suivantes :
- le laminage de deux couches externes de plastique renforcé de fibres de verre sur la strate, qui ferment la strate au niveau de deux surfaces externes opposées, dans laquelle l'orientation des fibres de chaque couche externe diffère de préférence de 90° par rapport à la couche sous-jacente et/ou l'autre couche externe,
dans laquelle la méthode de fabrication comprend en outre de préférence l'étape suivante :
- l'assemblage d'au moins deux strates de tissu et/ou treillis en plastique renforcé de fibres à une paroi (9, 23, 24, 25) ou une zone de paroi de la cabine de sécurité (1), dans laquelle une strate de mousse est de préférence positionnée entre les strates, dans laquelle les deux strates du tissu et/ou treillis plastique renforcé de fibres comportent selon l'orientation des fibres une structure de couches symétrique par rapport à un plan de symétrie entre les strates,
dans laquelle la méthode de fabrication comprend en outre de préférence l'étape suivante :
- l'assemblage d'une paroi (23) ou d'une zone de paroi de la zone avant (6) avec une paroi (24) ou une zone de paroi de la zone arrière (7) pour former une paroi extérieure latérale ou une zone de paroi d'une paroi extérieure latérale.

14. Méthode de fabrication selon une ou plusieurs des revendications précédentes 12 et/ou 13 comprenant la fabrication d'un châssis de la cabine de sécurité (1), comprenant les étapes suivantes :
- la fourniture d'au moins un profilé rempli de mousse comprenant un tissu et/ou treillis hybride pour un support longitudinal (12) et/ou support transversal (13) ;
- le raccordement de préférence des supports longitudinaux (12) et/ou supports transversaux (13)
- de préférence le revêtement aérodynamique des zones du châssis non couvertes par les profilés par au moins un panneau contenant du tissu hybride ;
la pose de préférence d'au moins une strate d'un tissu et/ou treillis hybride,
dans laquelle, de préférence, des profilés en plastique renforcé de fibres de carbone peuvent être fabriqués par une méthode de pultrusion.

15. Méthode de fabrication selon l'une des revendications précédentes 13 ou 14, comprenant les étapes suivantes :
- l'assemblage des parois extérieures latérales (23, 24) ou des zones de paroi des parois extérieures latérales sur le châssis pour former une paroi extérieure de la cabine de sécurité (1)
- la pose de préférence de la paroi intermédiaire (9) à une transition entre la zone avant (6) de la cabine et la zone arrière (7) de la cabine dans la direction transversale de la cabine,
- l'installation de préférence d'un élément de plafond pour un toit de la cabine de sécurité.
